# EUROPÄISCHE PATENTSCHRIFT

(11) **EP 2 176 376 B1**
(45) Veröffentlichungstag und Bekanntmachung des Hinweises auf die Patenterteilung: **19.09.2012**
(21) Anmeldenummer: 08785406.3
(22) Anmeldetag: 07.08.2008
(51) Int. Cl.: C09K 19/30, C09K 19/42, C09K 19/44

(54) **FLÜSSIGKRISTALLINES MEDIUM**
LIQUID-CRYSTALLINE MEDIUM
MILIEU LIQUIDE CRISTALLIN

(30) Priorität: 15.08.2007 DE 102007038684
(43) Veröffentlichungstag der Anmeldung: 21.04.2010
(73) Patentinhaber: Merck Patent GmbH, 64293 Darmstadt (DE)
(72) Erfinder: KLASEN-MEMMER, Melanie, 67259 Heuchelheim (DE); BREMER, Matthias, 64295 Darmstadt (DE); TARUMI, Kazuaki, 64342 Seeheim-Jugenheim (DE)
(86) Internationale Anmeldenummer: PCT/EP2008/006500
(87) Internationale Veröffentlichungsnummer: WO 2009/021671

(56) Entgegenhaltungen:
- EP-A- 0 122 389
- EP-A- 0 168 683
- EP-A- 0 834 491
- EP-A- 0 969 071
- DE-A1- 4 414 647
- DE-A1- 4 426 799
- DE-A1- 19 707 807
- DE-A1- 19 832 789
- DE-A1- 19 943 649
- DE-A1-102005 058 541
- US-A1- 2003 136 945

## Beschreibung

Die Erfindung betrifft ein flüssigkristallines Medium mit negativer dielektrischer Anisotropie auf der Basis eines Gemisches von polaren Verbindungen, welches mindestens eine Verbindung ausgewählt aus der Gruppe der Verbindungen der Formeln IA, IB und IC, 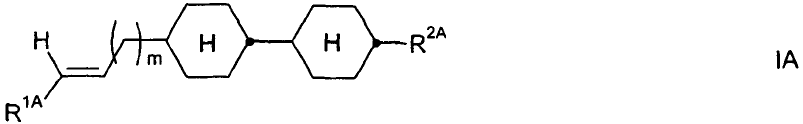 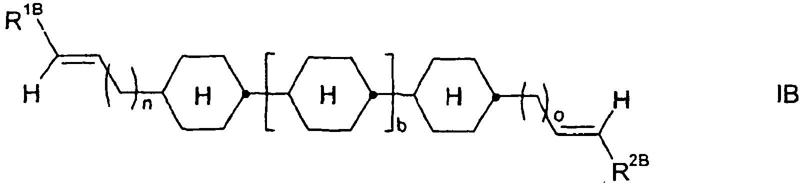 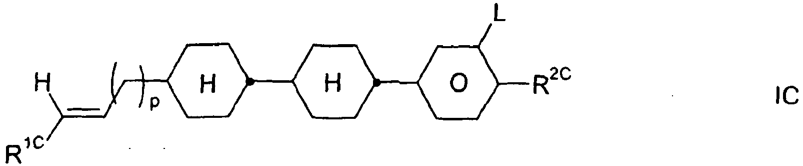 worin
- R^{1A}, R^{1B}, R^{2B} und R^{1C}: jeweils unabhängig voneinander einen Alkylrest mit 2-6 C-Atomen,
- R^{2A} und R^{2C}: jeweils unabhängig voneinander einen unsubstituierten, einen einfach durch CN oder CF₃ oder mindestens einfach durch Halogen substituierten Alkylrest mit bis zu 6 C-Atomen, wobei in diesen Resten auch eine oder mehrere CH₂-Gruppen durch -O-, -S-, 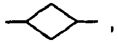 -C≡C-, -CF₂O-, -OCF₂-, -OC-O- oder -O-CO- so ersetzt sein können, dass O-Atome nicht direkt miteinander verknüpft sind, und falls L = F ist, kann R^{2C} auch Halogen, vorzugsweise F oder Cl, bedeuten,
- L: H oder F,
- m, n, o und p: jeweils unabhängig voneinander 0, 1 oder 2,
- b: 0 oder 1
bedeuten,
und eine oder mehrere Verbindungen der Formeln IIA und/oder IIB enthält.

Derartige Medien sind insbesondere für elektrooptische Anzeigen mit einer Aktivmatrix-Adressierung basierend auf dem ECB-Effekt sowie für IPS-Anzeigen (In plane switching) oder FFS-Anzeigen (Fringe Field Switching) zu verwenden. Vorzugsweise besitzt das erfindungsgemäße Medium eine negative dielektrische Anisotropie.

Das Prinzip der elektrisch kontrollierten Doppelbrechung, der ECB-Effekt (electrically controlled birefringence) oder auch DAP-Effekt (Deformation aufgerichteter Phasen) wurde erstmals 1971 beschrieben (M.F. Schieckel und K. Fahrenschon, "Deformation of nematic liquid crystals with vertical orientation in electrical fields", Appl. Phys. Lett. 19 (1971), 3912). Es folgten Arbeiten von J.F. Kahn (Appl. Phys. Lett. 20 (1972), 1193) und G. Labrunie und J. Robert (J. Appl. Phys. 44 (1973), 4869).

Die Arbeiten von J. Robert und F. Clerc (SID 80 Digest Techn. Papers (1980), 30), J. Duchene (Displays 7 (1986), 3) und H. Schad (SID 82 Digest Techn. Papers (1982), 244) haben gezeigt, dass flüssigkristalline Phasen hohe Werte für das Verhältnis der elastischen Konstanten K₃/K₁, hohe Werte für die optische Anisotropie Δn und Werte für die dielektrische Anisotropie von Δε ≤ -0,5 aufweisen müssen, um für hochinformative Anzeigeelemente basierend auf dem ECB-Effekt eingesetzt werden zu können. Auf dem ECB-Effekt basierende elektrooptische Anzeigeelemente weisen eine homeotrope Randorientierung auf (VA-Technologie = Vertical Aligned). Auch bei Anzeigen, die den sogenannten IPS- oder FFS-Effekt verwenden, können dielektrisch negative Flüssigkristallmedien zum Einsatz kommen.

Anzeigen, die den ECB-Effekt verwenden, haben sich als sogenannte VAN- (Vertically Aligned Nematic) Anzeigen beispielsweise in den Bauformen MVA (Multi-Domain Vertical Alignment, z.B.: Yoshide, H. et al., Vortrag 3.1: "MVA LCD for Notebook or Mobile PCs ...", SID 2004 International Symposium, Digest of Technical Papers, XXXV, Buch I, S. 6 bis 9 und Liu, C.T. et al., Vortrag 15.1: "A 46-inch TFT-LCD HDTV Technnology ...", SID 2004 International Symposium, Digest of Technical Papers, XXXV, Buch II, S. 750 bis 753), PVA (Patterned Vertical Alignment, z.B.: Kim, Sang Soo, Vortrag 15.4: "Super PVA Sets New State-of-the-Art for LCD-TV", SID 2004 International Symposium, Digest of Technical Papers, XXXV, Buch II, S. 760 bis 763), ASV- (Advanced Super View, z.B.: Shigeta, Mitzuhiro und Fukuoka, Hirofumi, Vortrag 15.2: "Development of High Quality LCDTV", SID 2004 International Symposium, Digest of Technical Papers, XXXV, Buch II, S. 754 bis 757) Anzeigen, neben IPS (In Plane Switching) (z.B.: Yeo, S.D., Vortrag 15.3: "A LC Display for the TV Application", SID 2004 International Symposium, Digest of Technical Papers, XXXV, Buch II, S. 758 & 759) den lange bekannten TN- (Twisted Nematic) Anzeigen, als eine der drei zur Zeit wichtigsten neueren Typen von Flüssigkristallanzeigen, insbesondere für Fernsehanwendungen, etabliert. In allgemeiner Form werden die Technologien z.B. in Souk, Jun, SIDSeminar 2004, Seminar M-6: "Recent Advances in LCD Technology", Seminar Lecture Notes, M-6/1 bis M-6/26 und Miller, Ian, SIDSeminar 2004, Seminar M-7: "LCD-Television", Seminar Lecture Notes, M-7/1 bis M-7/32, verglichen. Obwohl die Schaltzeiten moderner ECB-Anzeigen durch Ansteuerungsmethoden mit Übersteuerung (overdrive) bereits deutlich verbessert wurden, z.B.: Kim, Hyeon Kyeong et al., Vortrag 9.1: "A 57-in. Wide UXGA TFT-LCD for HDTV Application", SID 2004 International Symposium, Digest of Technical Papers, XXXV, Buch I, S. 106 bis 109, ist die Erzielung von videotauglichen Schaltzeiten, insbesondere beim Schalten von Graustufen, immer noch ein noch nicht zufriedenstellend gelöstes Problem.

Für die technische Anwendung dieses Effektes in elektrooptischen Anzeigeelementen werden FK-Phasen benötigt, die einer Vielzahl von Anforderungen genügen müssen. Besonders wichtig sind hier die chemische Beständigkeit gegenüber Feuchtigkeit, Luft und physikalischen Einflüssen wie Wärme, Strahlung im infraroten, sichtbaren und ultravioletten Bereich und elektrische Gleich- und Wechselfelder.

Ferner wird von technisch verwendbaren FK-Phasen eine flüssigkristalline Mesophase in einem geeigneten Temperaturbereich und eine niedrige Viskosität gefordert.

In keiner der bisher bekannten Reihen von Verbindungen mit flüssigkristalliner Mesophase gibt es eine Einzelverbindung, die allen diesen Erfordernissen entspricht. Es werden daher in der Regel Mischungen von zwei bis 25, vorzugsweise drei bis 18, Verbindungen hergestellt, um als FK-Phasen verwendbare Substanzen zu erhalten. Optimale Phasen konnten jedoch auf diese Weise nicht leicht hergestellt werden, da bisher keine Flüssigkristallmaterialien mit deutlich negativer dielektrischer Anisotropie und ausreichender Langzeitstabilität zur Verfügung standen.

Matrix-Flüssigkristallanzeigen (MFK-Anzeigen) sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor)-Transistoren auf Silizium-Wafer als Substrat.
2. Dünnfilm-Transistoren (TFT) auf einer Glasplatte als Substrat.

Bei Typ 1 wird als elektrooptischer Effekt üblicherweise die dynamische Streuung oder der Guest-Host-Effekt verwendet. Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet.

Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Die bisher bekannten TFT-Anzeigen arbeiten üblicherweise als TN-Zellen mit gekreuzten Polaristoren in Transmission und sind von hinten beleuchtet.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays in Automobil - oder Flugzeugbau. Neben Problemen hinsichtlich der Winkelabhängigkeit des Kontrastes und der Schaltzeiten resultieren bei MFK-Anzeigen Schwierigkeiten bedingt durch einen nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig für Anzeigen die akzeptable Widerstandswerte über eine lange Betriebsdauer aufweisen müssen.

Der Nachteil der bisher bekannten MFK-TN-Anzeigen beruht in ihrem vergleichsweise niedrigen Kontrast, der relativ hohen Blickwinkelabhängigkeit und der Schwierigkeit in diesen Anzeigen Graustufen zu erzeugen.

Es besteht somit immer noch ein großer Bedarf nach MFK-Anzeigen mit sehr hohem spezifischen Widerstand bei gleichzeitig großem Arbeitstemperaturbereich, kurzen Schaltzeiten und niedriger Schwellenspannung, mit deren Hilfe verschiedene Graustufen erzeugt werden können.

Besonders für Fernsehanwendungen ist das Erreichen niedriger Schaltzeiten sehr wichtig. Um diese zu erreichen, werden als dielektrisch neutrale Verbindungen bei ECB-Anwendungen insbesondere Verbindungen der Formeln 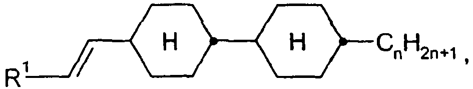 wobei R¹ = H oder CH₃ 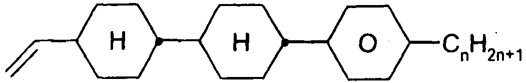 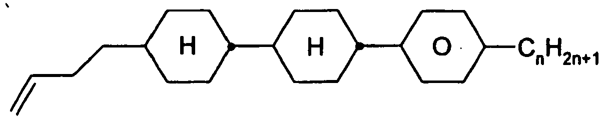 verwendet.

Bei LCD-Fernsehanwendungen kommt es häufig zu sogenannten Reliability-Problemen, wie beispielsweise dem Image Sticking, d. h., einem scheinbaren "Einbrennen" des Bildes, wenn das Display über längere Zeit hinweg angesteuert wurde.

Dieses Problem tritt häufig erst nach längeren Laufzeiten der Fernsehgeräte auf. Als Ursache wird häufig die lange Bestrahlungszeit mit dem sogenannten Backlight bei gleichzeitig erhöhten Betriebstemperaturen angesehen, die zu noch nicht geklärten Prozessen im Display, beispielsweise einer Wechselwirkung zwischen Orientierungsschicht und einer Flüssigkristall-Mischung führen kann. Auf Seiten der Flüssigkristall-Mischung, z.B. bekannt aus DE 198 32 789 A1, DE 197 07 807 A1, DE 199 43 649 A1, US 2003/136945 A1, DE 44 26 799 A1, DE 44 14 647 A1, EP 0 834 491 A1, DE 10 2005 058 541 A1, wird in den häufig verwendeten neutralen Alkenyl-Verbindungen, die Ursache für das Auftreten von Image Sticking Problemen gesehen.

Der Erfindung liegt die Aufgabe zugrunde, Flüssigkristall-Mischungen, insbesondere für Monitor- und TV-Anwendungen, welche auf dem ECB - oder auf dem IPS- oder FFS-Effekt beruhen, bereitzustellen, die die oben angegebenen Nachteile nicht oder nur in geringerem Maße aufweisen. Insbesondere muss für Monitore und Fernseher gewährleistet sein, dass diese auch bei extrem hohen und extrem niedrigen Temperaturen arbeiten und gleichzeitig niedrige Schaltzeiten aufweisen und gleichzeitig ein verbessertes Reliability-Verhalten, insbesondere kein oder ein deutlich verringertes Image-Sticking nach langen Laufzeitenaufweisen.

Überraschenderweise wurde nun gefunden, dass diese Aufgabe gelöst werden kann, wenn man in diesen Anzeigeelementen nematische Flüssigkristallmischungen verwendet, die mindestens eine Verbindung aus der Gruppe der Verbindungen der Formeln IA, IB und IC enthalten.

Die Verbindungen der Formeln IA, IB und IC zeichnen sich dadurch aus, dass in der Alkenyl-Seitenkette die Doppelbindung nicht endständig ist.

Verbindungen der Formel IA sind beispielsweise bekannt aus der EP 0 168 683 B1 und EP 0 122 389 B1. Die Verbindungen der Formeln IB sind beispielsweise bekannt aus der EP 0 969 071 B1. Die Verbindungen der Formel IC sind beispielsweise bekannt aus der EP 0 969 071 B1.

Gegenstand der Erfindung ist somit ein flüssigkristallines Medium gemäß Anspruch 1 auf der Basis eines Gemisches von polaren Verbindungen, welches mindestens eine Verbindung ausgewählt aus der Gruppe der Verbindungen der Formeln IA, IB, IC und eine oder mehrere Verbindungen der Formeln IIA und/oder IIB enthält.

Die erfindungsgemäßen Mischungen zeigen vorzugsweise sehr breite nematische Phasenbereiche mit Klärpunkten ≥ 60 °C, vorzugsweise ≥ 65 °C, insbesondere ≥ 70 °C, sehr günstige Werte für die kapazitive Schwelle, relativ hohe Werte für die Holding Ratio und gleichzeitig sehr gute Tieftemperaturstabilitäten bei -30 °C und -40 °C sowie sehr geringe Rotationsviskositäten und niedrige Schaltzeiten. Die erfindungsgemäßen Mischungen zeichnen sich weiterhin dadurch aus, dass zusätzlich zur Verbesserung der Rotationsviskosität γ₁ eine Erhöhung der elastischen Konstanten K₃₃ zur Verbesserung der Schaltzeiten zu beobachten ist, und ein verbessertes Reliability-Verhalten zeigen.

Einige bevorzugte Ausführungsformen der erfindungsgemäßen Mischungen werden im folgenden genannt:
a) R^{1A}, R^{1B}, R^{2B} und R^{1C} in den Formeln IA, IB und IC bedeuten vorzugsweise geradkettiges Alkyl, insbesondere C₂H₅, n-C₃H₇, n-C₄H₉, ferner n-C₅H₁₁, n-C₆H₁₃.
   R^{2A} und R^{2C} bedeuten vorzugsweise Alkyl und Alkoxy, insbesondere CH₃, n-C₃H₇, n-C₅H₁₁, ferner C₂H₅, n-C₄H₉.
   Die Alkenyl-Seitenketten in den Verbindungen der Formeln IA, IB und IC liegen vorzugsweise in der E-Konfiguration vor.
b) Flüssigkristallines Medium, welches ein, zwei, drei, vier oder mehr, vorzugsweise ein, zwei oder drei Verbindungen der Formeln IA, IB und/oder IC enthält,
c) Flüssigkristallines Medium, wobei der Anteil an Verbindungen der Formel IA im Gesamtgemisch ≥ 5 Gew.%, vorzugsweise mindestens 10 Gew.%, besonders bevorzugt ≥ 15 Gew.%, beträgt.
   Der Anteil an Verbindungen der Formel IB im Gesamtgemisch, sofern vorhanden, beträgt vorzugsweise ≥ 5 Gew.%, insbesondere ≥ 10 Gew.%, ganz besonders bevorzugt ≥ 20 Gew.%.
   Der Anteil an Verbindungen der Formel IC im Gesamtgemisch, sofern vorhanden, beträgt vorzugsweise ≥ 2 Gew.%, insbesondere ≥ 4 Gew.%, ganz besonders bevorzugt ≥ 5 Gew.%.
   Der Gesamtanteil der Verbindungen der Formeln IA, IB und/oder IC in der erfindungsgemäßen Mischung beträgt vorzugsweise ≥ 5 Gew.%, insbesondere ≥ 10 Gew.% und ganz besonders bevorzugt ≥ 15 Gew.%.
d) Bevorzugte Verbindungen der Formeln IA, IB und IC sind die Verbindungen der Formeln:

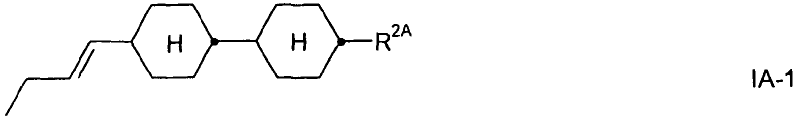

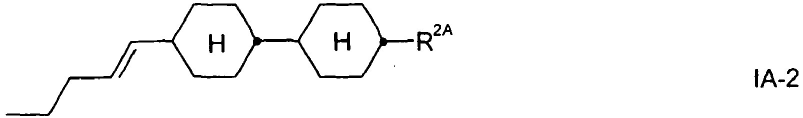

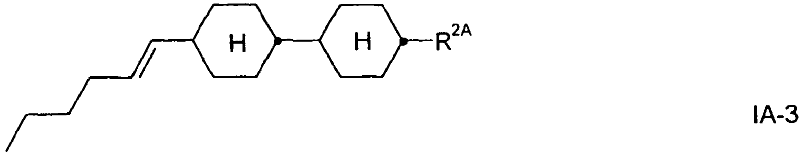

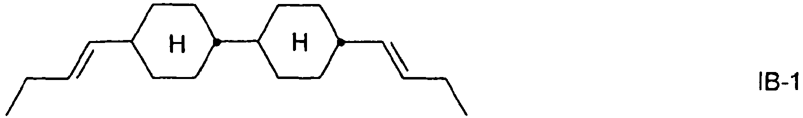

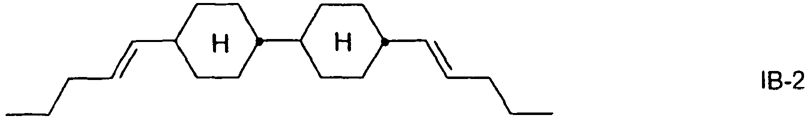

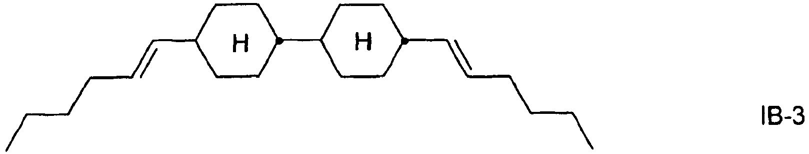

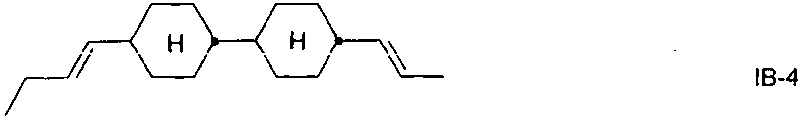

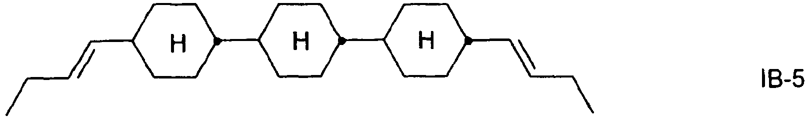

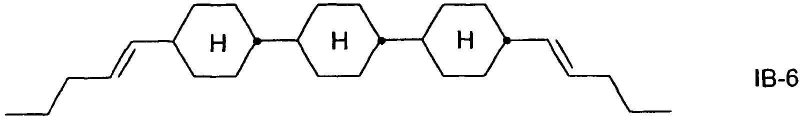

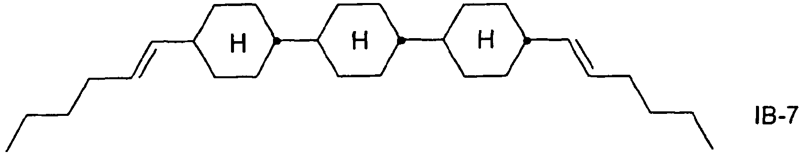

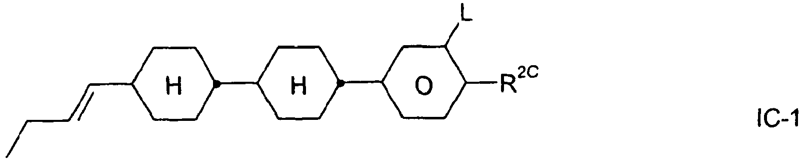

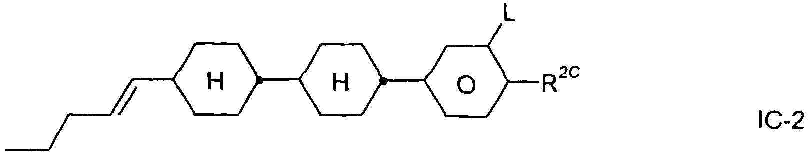

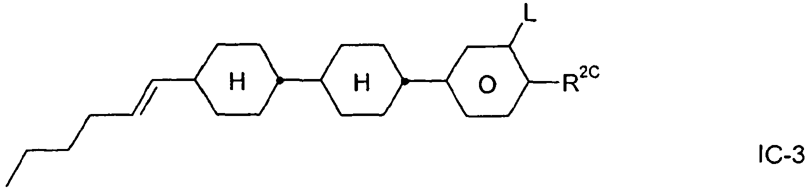

Besonders bevorzugte Verbindungen sind die Verbindungen der Formeln IA-1 und IC-1.

Ganz besonders bevorzugte Verbindungen der Formel IA sind die Verbindungen

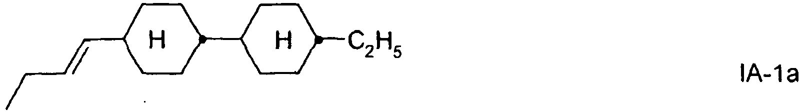

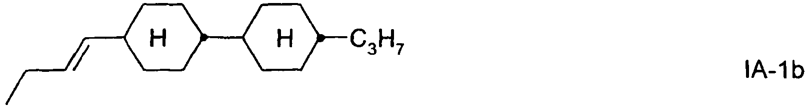

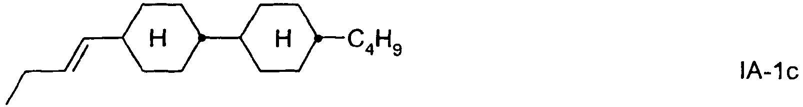

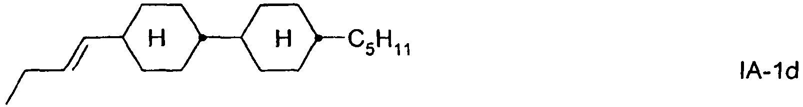

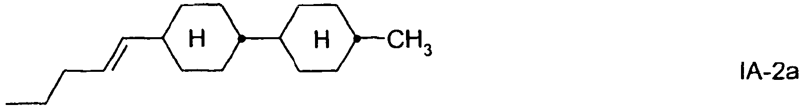

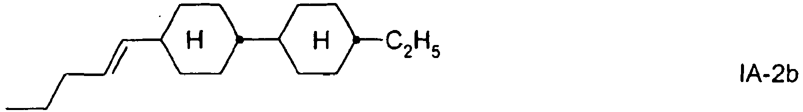

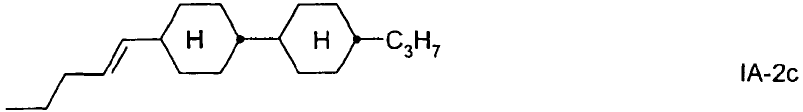

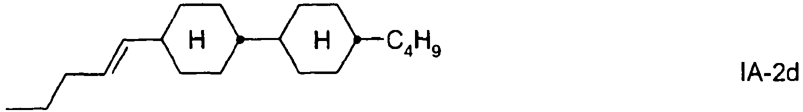

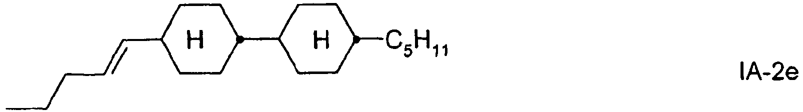

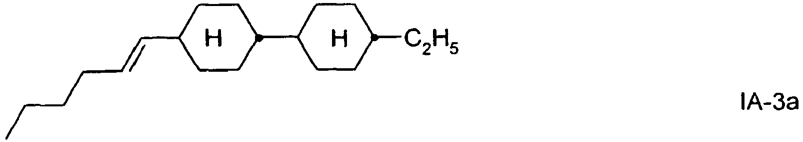

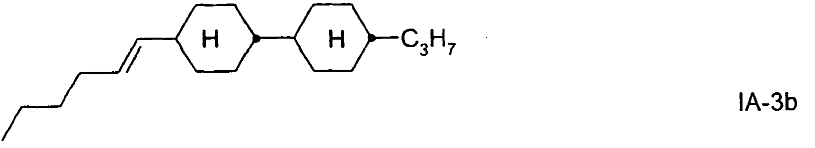

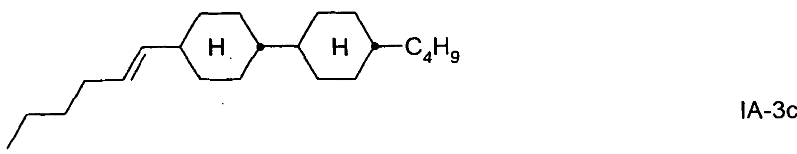

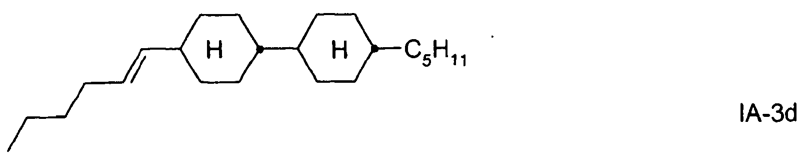

Bevorzugte Mischungen enthalten eine Verbindung der Formel 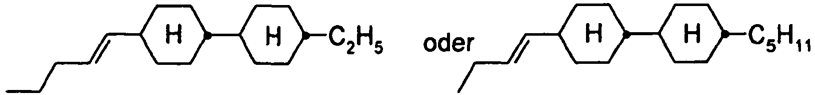 in Kombination mit einer Verbindung der Formel 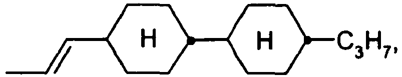 vorzugsweise jeweils in Konzentrationen von 5-15 Gew.%.

Bevorzugte Mischungen enthalten eine Verbindung der Formel 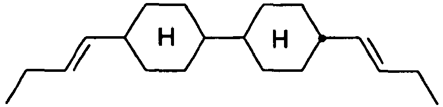 in Kombination mit einer Verbindung der Formel 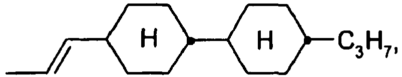 vorzugsweise jeweils in Konzentrationen von 5-15 Gew.%.

Das flüssigkristalline Medium enthält eine oder mehrere Verbindungen der Formeln IIA und/oder IIB : 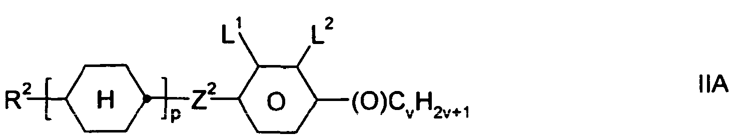 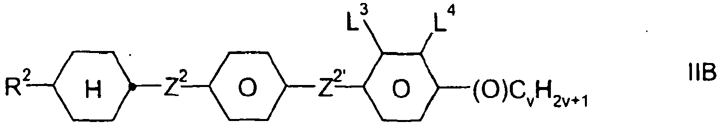 worin
- R²: H, einen unsubstituierten, einen einfach durch CN oder CF₃ oder mindestens einfach durch Halogen substituierten Alkylrest mit bis zu 15 C-Atomen, wobei in diesen Resten auch eine oder mehrere CH₂-Gruppen durch -O-, -S-, 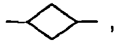 -C≡C-, -CF₂O-, -OCF₂-, -OC-O- oder -O-CO- so ersetzt sein können, dass O-Atome nicht direkt miteinander verknüpft sind,
- L¹⁻⁴: jeweils unabhängig voneinander F oder Cl,
- Z² und Z^{2'}: jeweils unabhängig voneinander Einfachbindung, -CH₂CH₂-, -CH=CH-, -CF₂O- -OCF₂-, -CH₂O-, -OCH₂-, -COO-, -OCO-, -C₂F₄-, -CF=CF-, -CH=CHCH₂O-,
- p: 1 oder 2, und
- v: 1 bis 6
bedeuten.

In den Verbindungen der Formeln IIA und IIB können Z² gleiche oder unterschiedliche Bedeutungen haben.

In den Verbindungen der Formeln IIA und IIB bedeuten R² vorzugsweise Alkyl mit 1-6 C-Atomen, insbesondere geradkettiges Alkyl, vorzugsweise CH₃, C₂H₅, n-C₃H₇, n-C₄H₉, n-C₅H₁₁.

In den Verbindungen der Formeln IIA und IIB bedeuten L¹, L², L³ und L⁴ vorzugsweise L¹ = L² = F und L³ = L⁴ = F, ferner L¹ = F und L² = Cl, L¹ = Cl und L² = F. L³ = F und L⁴ = Cl, L³ = Cl und L⁴ = F. Z² und Z^{2,} bedeuten in den Formeln IIA und IIB vorzugsweise jeweils unabhängig voneinander eine Einfachbindung, ferner eine -C₂H₄-Brücke.

Sofern in der Formel IIB Z² = -C₂H₄- ist, ist Z^{2,} vorzugsweise eine Einfachbindung bzw. falls Z^{2,} = -C₂H₄- bedeutet Z² vorzugsweise eine Einfachbindung. In den Verbindungen der Formeln IIA und IIB bedeutet (O)CᵥH2ᵥ₊₁ vorzugsweise OCᵥH₂ᵥ₊₁, ferner CᵥH₂ᵥ₊₁.

Bevorzugte Verbindungen der Formeln IIA und IIB werden nachfolgend genannt.

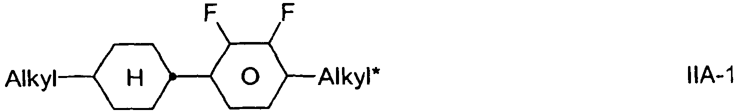

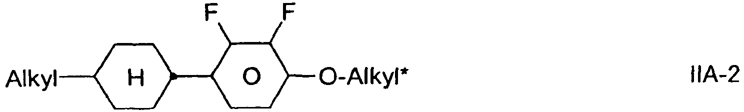

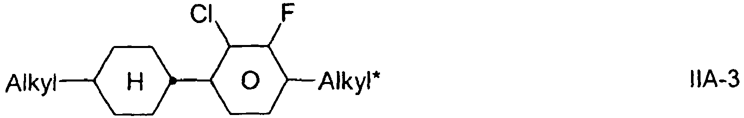

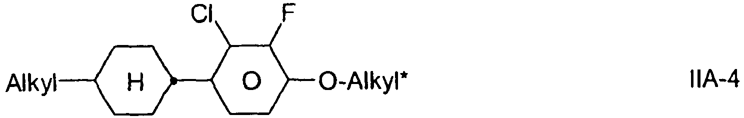

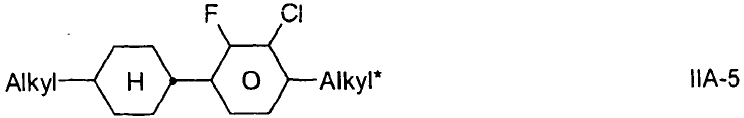

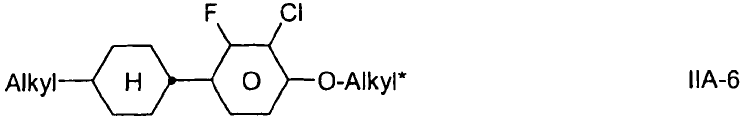

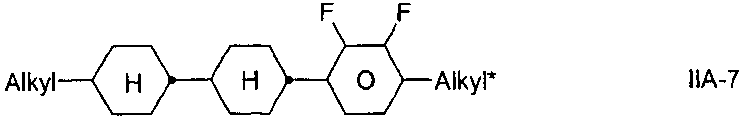

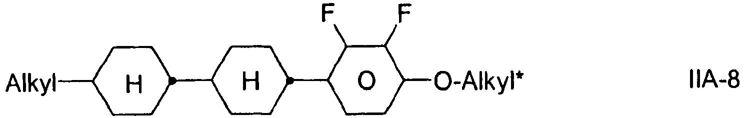

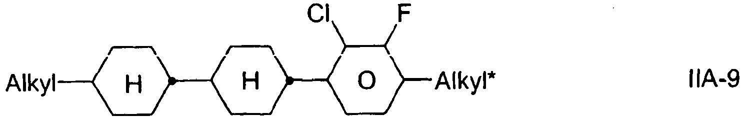

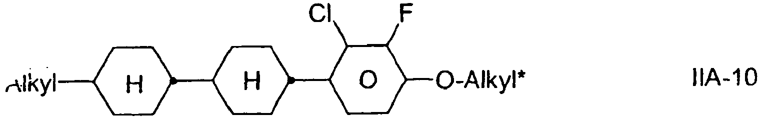

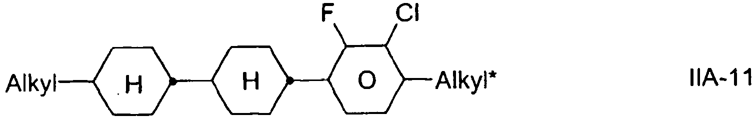

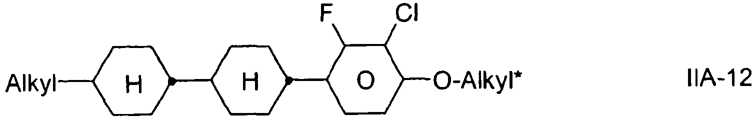

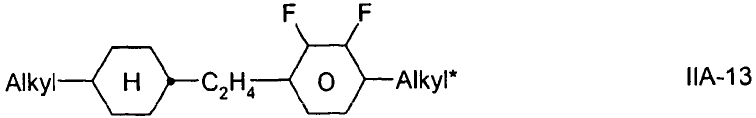

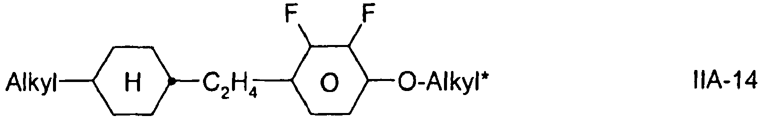

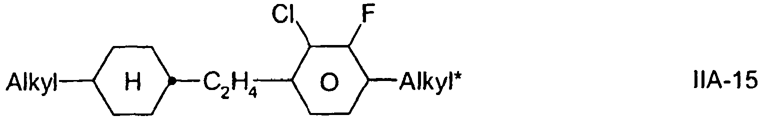

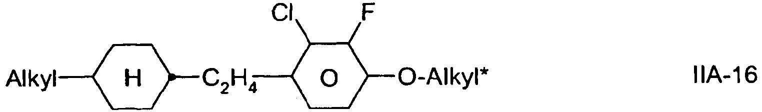

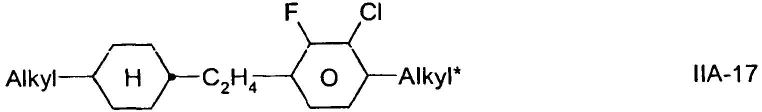

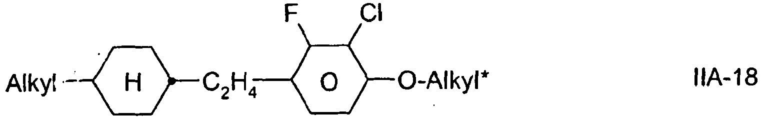

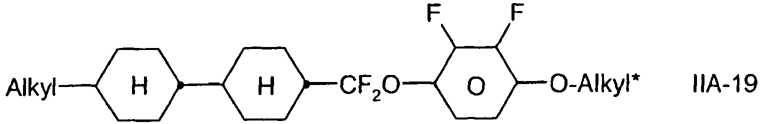

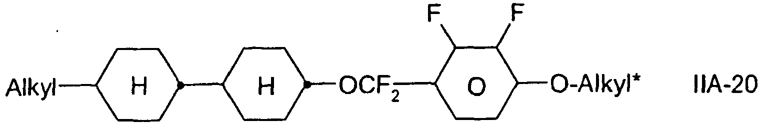

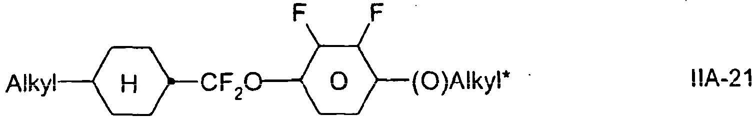

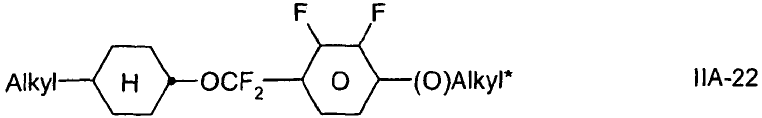

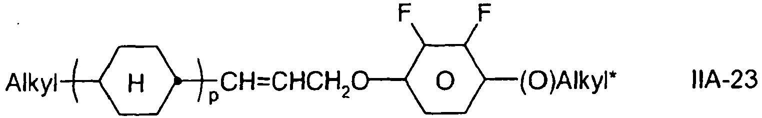

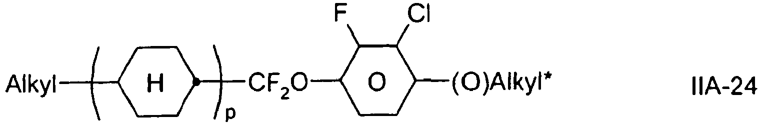

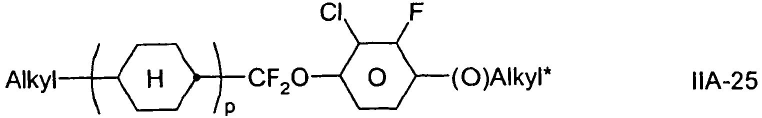

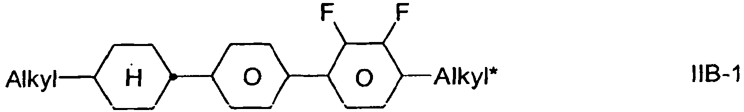

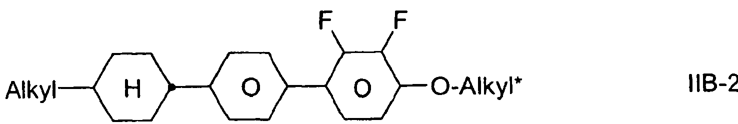

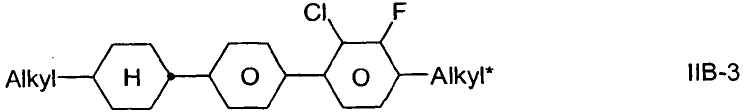

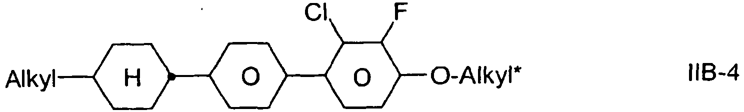

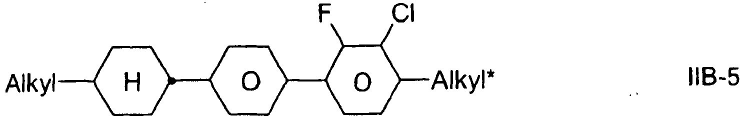

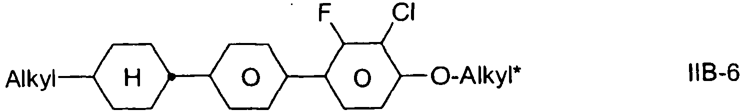

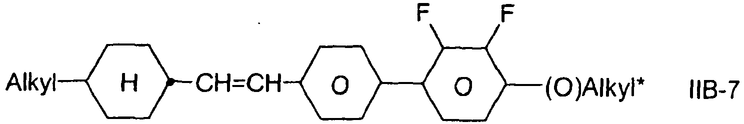

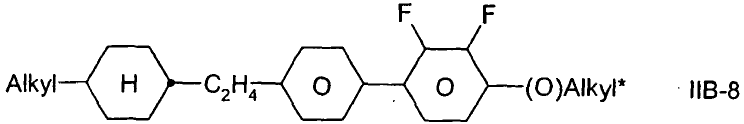

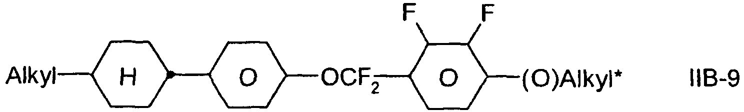

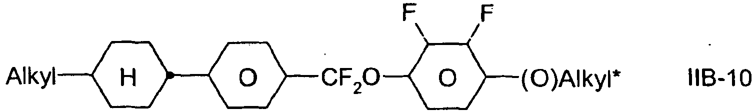

Vorzugsweise bedeuten in den Verbindungen der Formeln IIA und IIB R² jeweils geradkettiges Alkyl mit bis zu 6 C-Atomen, insbesondere CH₃, C₂H₅, n-C₃H₇, n-C₄H₉, n-C₅H₁₁. L¹⁻⁴ bedeuten vorzugsweise jeweils F.

Vorzugsweise beträgt der Anteil an Verbindungen der Formeln IIA und/oder IIB im Gesamtgemisch mindestens 20 Gew.%.
f) Flüssigkristallines Medium, welches zusätzlich eine oder mehrere Verbindungen der Formel III 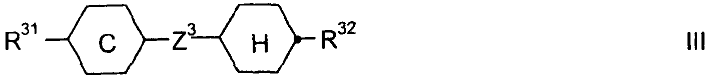 enthält,
   worin
   - R³¹ und R³²: jeweils unabhängig voneinander einen geradkettigen Alkyl-, Alkoxyalkyl- oder Alkoxyrest mit bis zu 12 C-Atomen, und 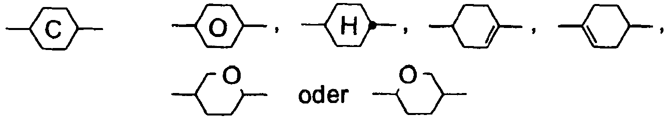
   - Z³: Einfachbindung, -CH₂CH₂-, -CH=CH-, -CF₂O- -OCF₂-, -CH₂O-, -OCH₂-, -COO-, -OCO-, -C₂F₄-, -C₄H₈-, -CF=CF-
   bedeuten.
   Bevorzugte Verbindungen der Formel III werden nachfolgend genannt: 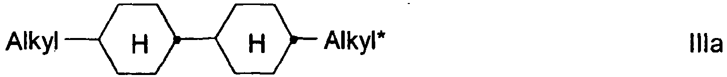 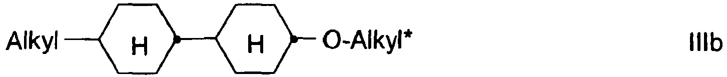 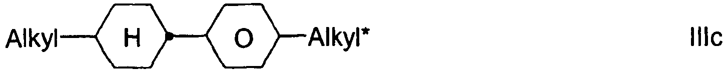 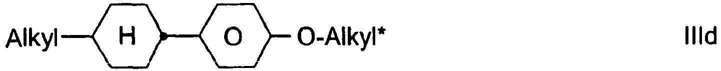 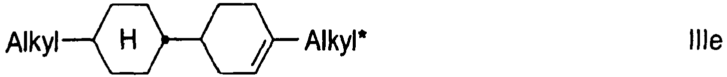 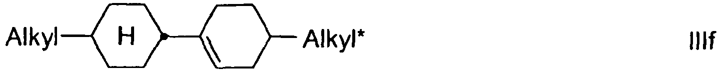 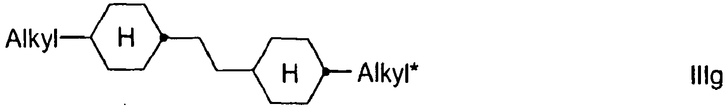 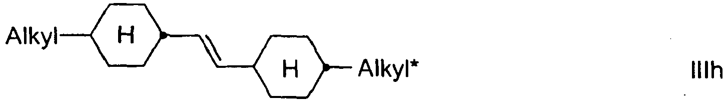 worin
   - Alkyl und Alkyl*: jeweils unabhängig voneinander einen geradkettigen Alkylrest mit 1-6 C-Atomen
   bedeuten.
   Vorzugsweise enthält das erfindungsgemäße Medium mindestens eine Verbindung der Formel IIIa, Formel IIIb und/oder Formel IIId.
   Der Anteil an Verbindungen der Formel III im Gesamtgemisch beträgt vorzugsweise mindestens 5 Gew.%.
g) Flüssigkristalline Medien enthaltend eine Verbindung der Formel 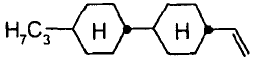 und/oder 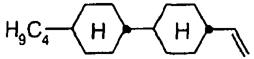 und / oder 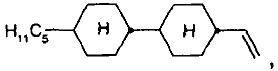 vorzugsweise in Gesamtmengen von < 20 Gew.%, insbesondere von <10 Gew.%. Weiterhin bevorzugt sind erfindungsgemäße Mischungen enthaltend die Verbindung 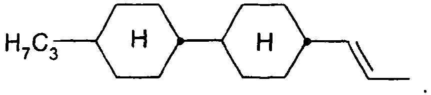
h) Flüssigkristallines Medium, welches zusätzlich eine oder mehrere Vierkernverbindungen der Formeln, 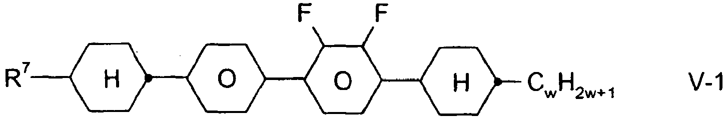 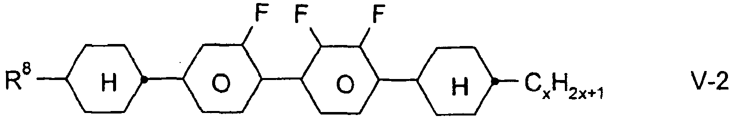 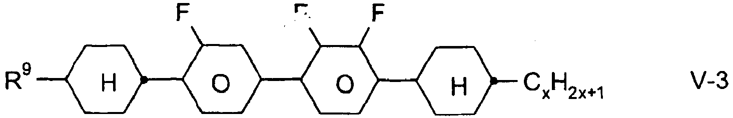 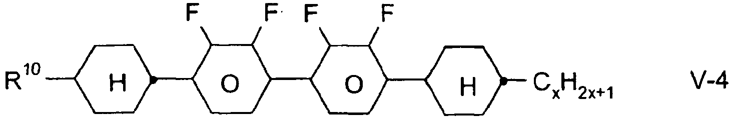 worin
   - R⁷⁻¹⁰: jeweils unabhängig voneinander eine der in Anspruch 2 für R² angegebenen Bedeutung haben, und
   - w und x: jeweils unabhängig voneinander 1 bis 6
   bedeuten,
   enthält.
i) Flüssigkristallines Medium, welches zusätzlich eine oder mehrere Verbindungen der Formeln Y-1 bis Y-6 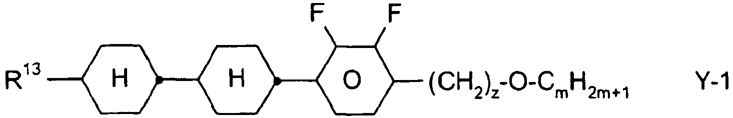 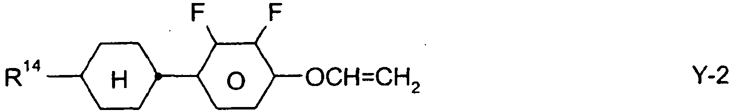 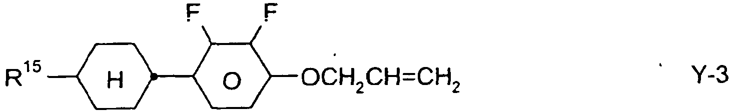 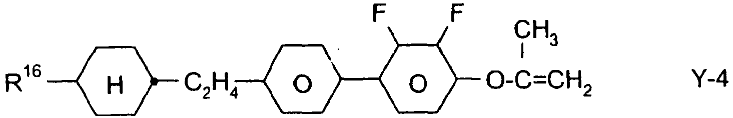 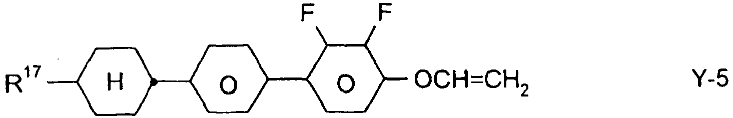 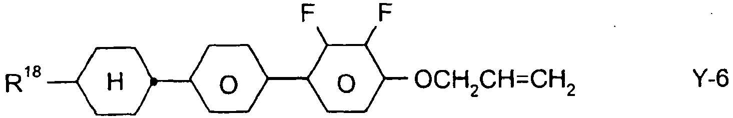 enthält,
   worin R¹³-R¹⁸ jeweils unabhängig voneinander einen Alkyl- oder Alkoxyrest mit 1-6 C-Atomen bedeuten; z und m bedeuten jeweils unabhängig voneinander 1-6; x bedeutet 0, 1, 2 oder 3.
   Insbesondere bevorzugt enthält das erfindungsgemäße Medium eine oder mehrere Verbindungen der Formeln Y-1 bis Y-6 in Mengen von ≥ 5 Gew.%.
j) Flüssigkristallines Medium, welches zusätzlich eine oder mehrere Verbindungen der Formeln, 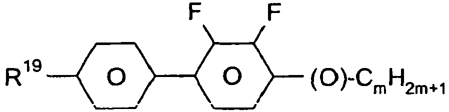 vorzugsweise in Mengen von > 3 Gew.%, insbesondere ≥ 5 Gew.%, und ganz besonders bevorzugt von 5-25 Gew.% enthält,
   wobei
   R¹⁹ Alkyl oder Alkoxy mit 1-7 C-Atomen bedeutet.
k) Flüssigkristallines Medium enthaltend zusätzlich ein oder mehrere fluorierte Terphenyle der Formeln T-1 bis T-21, 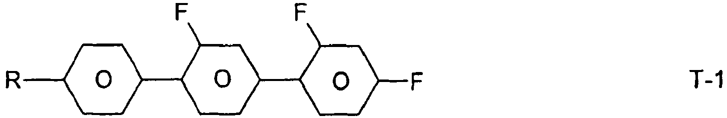 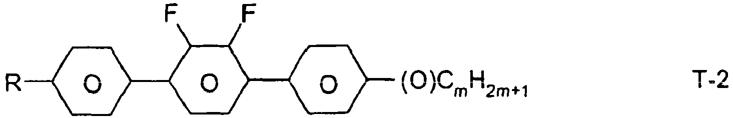 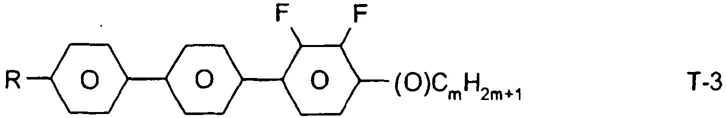 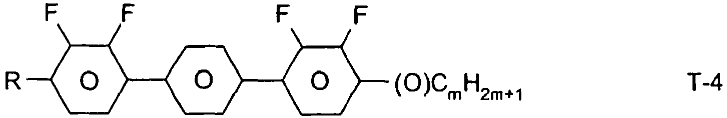 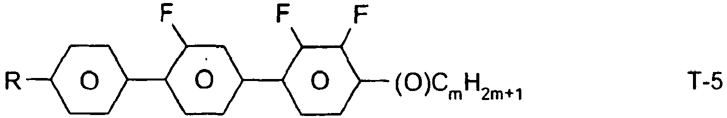 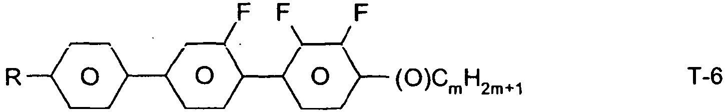 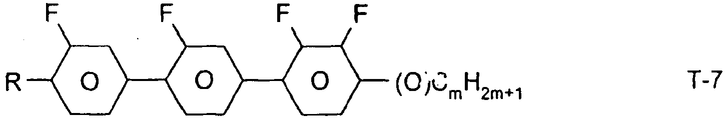 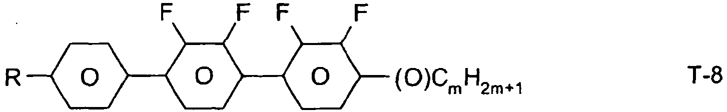 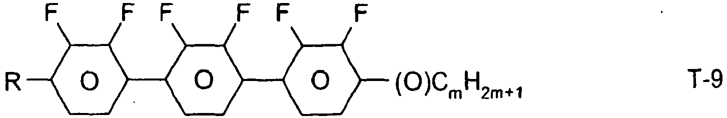 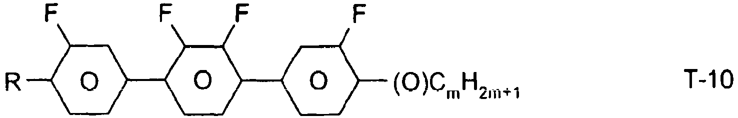 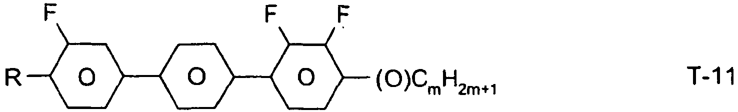 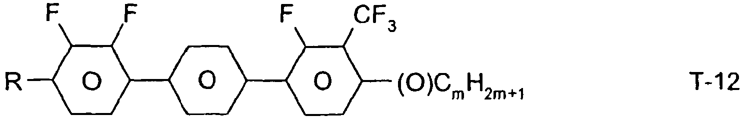 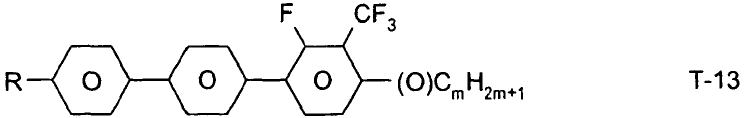 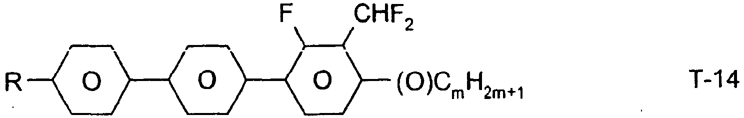 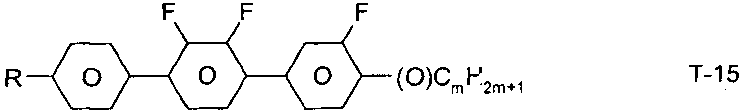 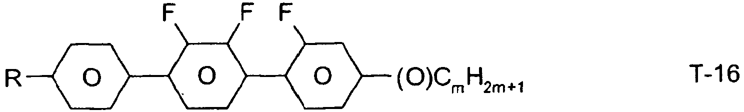 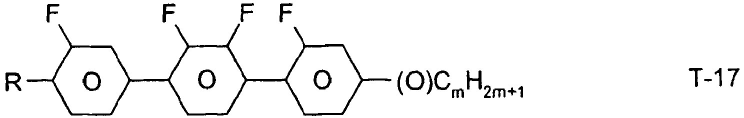 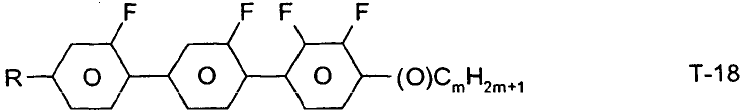 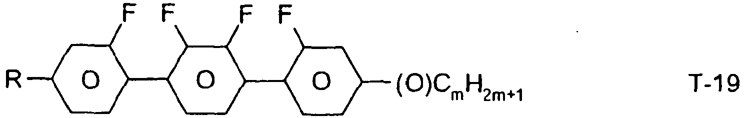 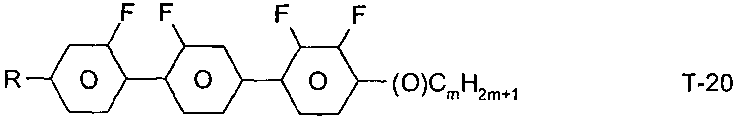 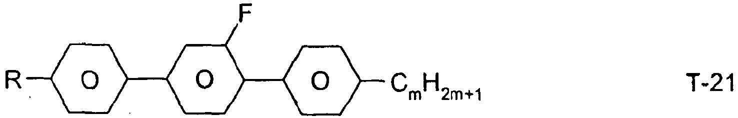 worin
   R geradkettiger Alkyl- oder Alkoxyrest mit 1-7 C-Atomen bedeutet, und m 1-6 ist,
   enthält.
   Vorzugsweise bedeutet R Methyl, Ethyl, Propyl, Butyl, Pentyl, Hexyl Methoxy, Ethoxy, Propoxy, Butoxy, Pentoxy.
   Das erfindungsgemäße Medium enthält die Terphenyle der Formeln T-1 bis T-21 vorzugsweise in Mengen von 2-30 Gew.%, insbesondere von 5-20 Gew.%.
   Besonders bevorzugt sind Verbindungen der Formeln T-1, T-2, T-3 und T-21. In diesen Verbindungen bedeutet R vorzugsweise Alkyl, ferner Alkoxy jeweils mit 1-5 C-Atomen.
   Besonders bevorzugte erfindungsgemäße Medien enthalten eine Verbindung der Formel, 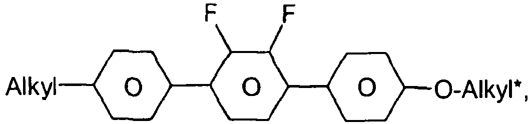 worin Alkyl und Alkyl*' die oben angegebenen Bedeutungen haben.
   Vorzugsweise werden die Terphenyle in den erfindungsgemäßen Mischungen eingesetzt, wenn der An-Wert der Mischung ≥ 0,1 sein soll. Bevorzugte Mischungen enthalten 2-20 Gew.% einer oder mehrerer Terphenyl-Verbindungen ausgewählt aus der Gruppe der Verbindungen T-1 bis T-21.
I) Flüssigkristallines Medium enthaltend zusätzlich ein oder mehrere Biphenyle der Formeln B-1 bis B-3, 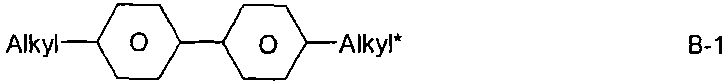 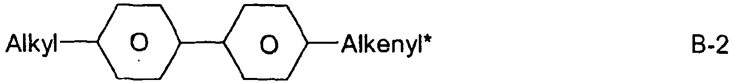 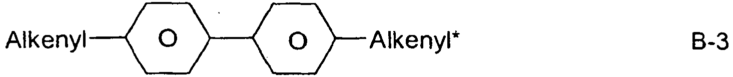 worin
   - Alkyl und Alkyl*: jeweils unabhängig voneinander einen geradkettigen Alkylrest mit 1-6 C-Atomen, und
   - Alkenyl und Alkenyl*: jeweils unabhängig voneinander einen geradkettigen Alkenylrest mit 2-6 C-Atomen
   bedeuten.
   Der Anteil der Biphenyle der Formeln B-1 bis B-3 in der Gesamtmischung beträgt vorzugsweise mindestens 3 Gew.%, insbesondere ≥ 5 Gew.%.
   Von den Verbindungen der Formeln B-1 bis B-3 sind die Verbindungen der Formel B-2 insbesondere bevorzugt.
   Besonders bevorzugte Biphenyle sind 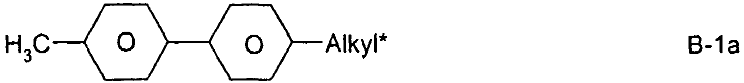 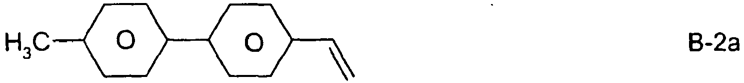 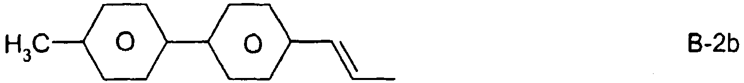 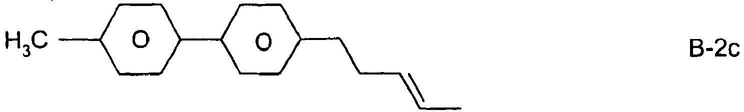 worin Alkyl* einen Alkylrest mit 1-6 C-Atomen bedeutet. Insbesondere bevorzugt enthält das erfindungsgemäße Medium eine oder mehrere Verbindungen der Formeln B-1a und/oder B-2c.
m) Flüssigkristallines Medium enthaltend mindestens eine Verbindung der Formeln Z-1 bis Z-7, 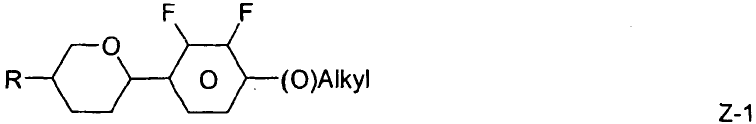 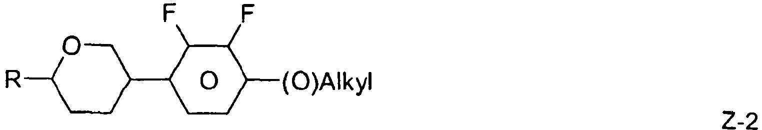 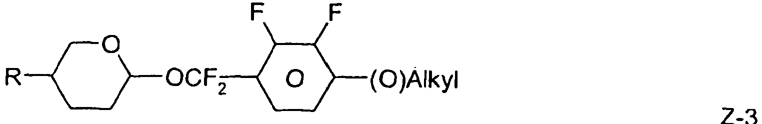 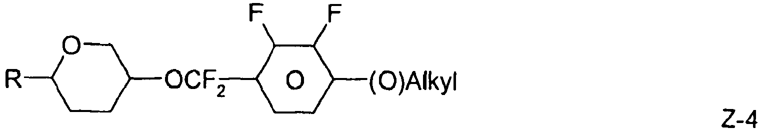 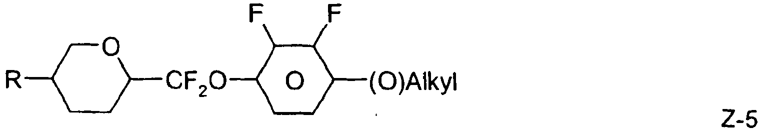 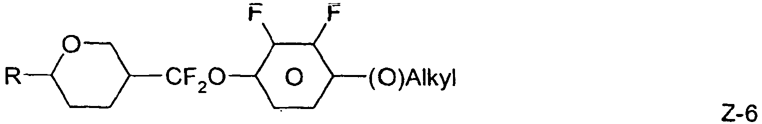 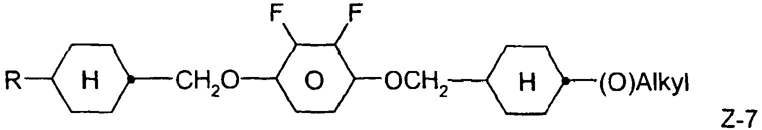 worin R und Alkyl die oben angegebenen Bedeutungen haben.
n) Flüssigkristallines Medium enthaltend mindestens eine Verbindung der Formeln O-1 bis O-15, 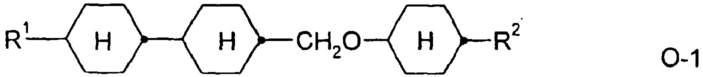 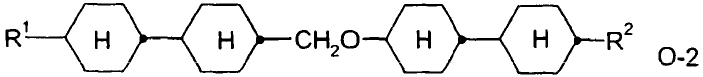 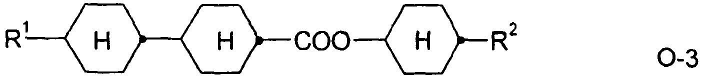 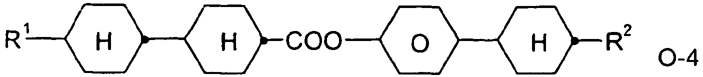 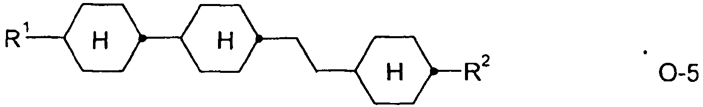 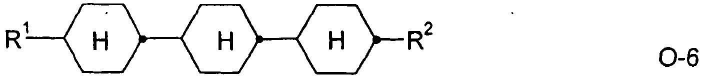 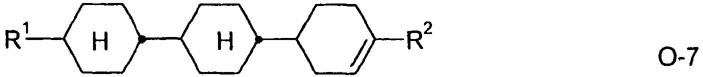 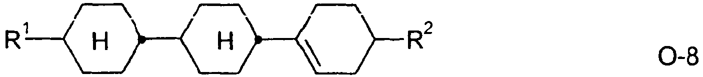 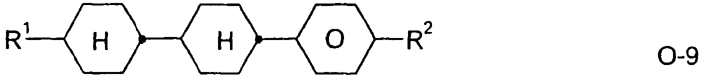 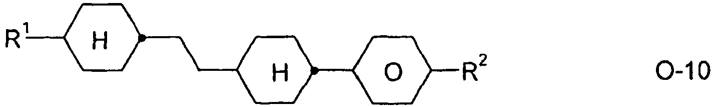 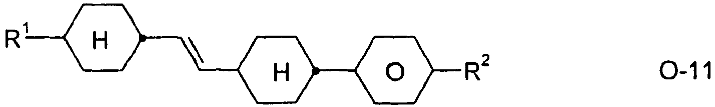 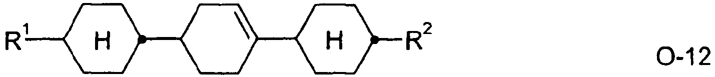 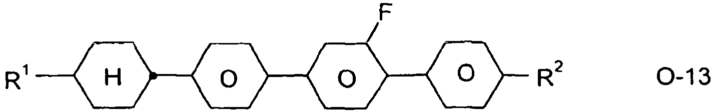 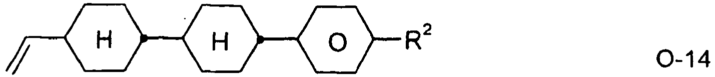 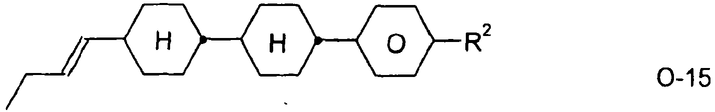 worin R¹ und R² die für R^{2A} angegebenen Bedeutungen haben, vorzugsweise bedeuten R¹ und R² jeweils unabhängig voneinander geradkettiges Alkyl.
   Bevorzugte Medien enthalten eine oder mehrere Verbindungen der Formeln O-1, O-3, O-4, O-9, O-13, O-14 und/oder O-15.
o) Bevorzugte erfindungsgemäße flüssigkristalline Medien enthalten eine oder mehrere Substanzen, die eine Tetrahydronaphthyl- oder Naphthyl-Einheit aufweisen, wie z.B. die Verbindungen der Formeln N-1 bis N-5, 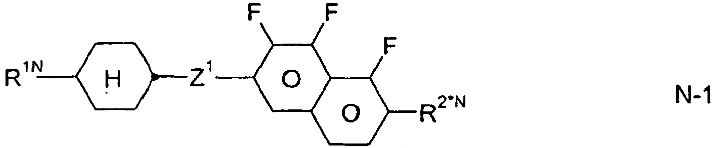 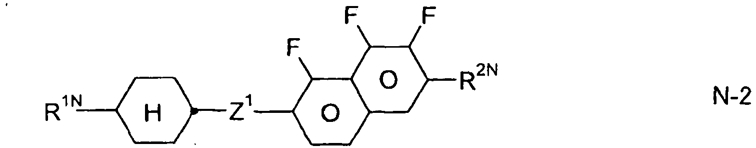 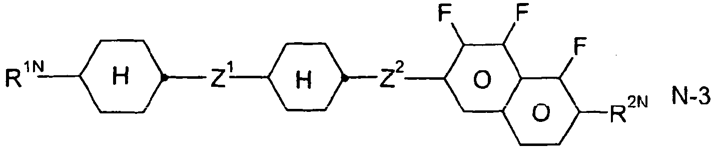 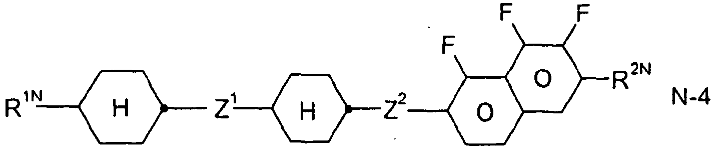 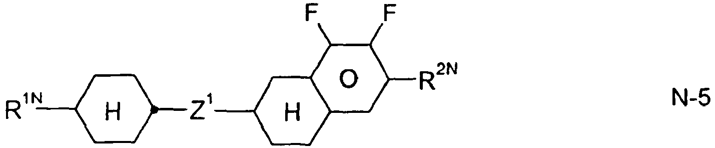 worin R^{1N} und R^{2N} jeweils unabhängig voneinander die für R^{2A} angegebenen Bedeutungen haben, vorzugsweise geradkettiges Alkyl, geradkettiges Alkoxy oder geradkettiges Alkenyl bedeuten, und Z¹ und Z² jeweils unabhängig voneinander
   -C₂H₄-, -CH=CH-, -(CH₂)₄-, -(CH₂)₃O-, -O(CH₂)₃-, -CH=CHCH₂CH₂-, -CH₂CH₂CH=CH-, -CH₂O-, -OCH₂-, -COO-, -OCO-, -C₂F₄-, -CF=CF-, -CF=CH-, -CH=CF-, -CF₂O-, -OCF₂-, -CH₂- oder eine Einfachbindung
   bedeuten.
p) Bevorzugte Mischungen enthalten eine oder mehrere Verbindungen ausgewählt aus der Gruppe der Difluordibenzochroman-Verbindungen der Formel BC, Chromane der Formeln CR, fluorierte Phenanthrene der Formeln PH-1 und PH-2, fluorierte Dibenzofurane der Formeln BF, 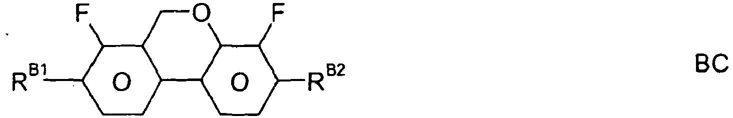 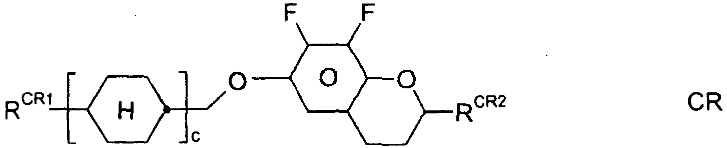 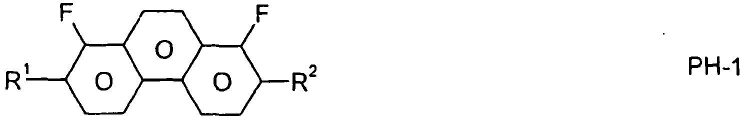 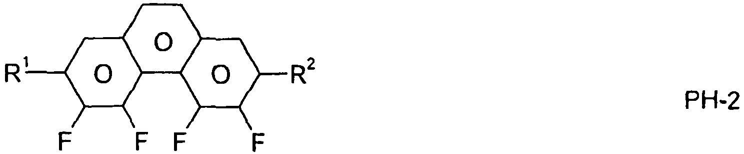 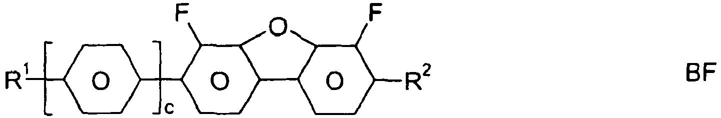 worin R^{B1}, R^{B2}, R^{CR1}, R^{CR2} R¹, R² jeweils unabhängig voneinander die Bedeutung von R^{2A} aufweisen. c ist 0, 1 oder 2. Die erfindungsgemäßen Mischungen enthalten die Verbindungen der Formeln BC, CR, PH-1, PH-2 und/oder BF vorzugsweise in Mengen von 3 bis 20 Gew.%, insbesondere in Mengen von 3 bis 15 Gew.%.
   Besonders bevorzugte Verbindungen der Formeln BC und CR sind die Verbindungen BC-1 bis BC-7 und CR-1 bis CR-5, 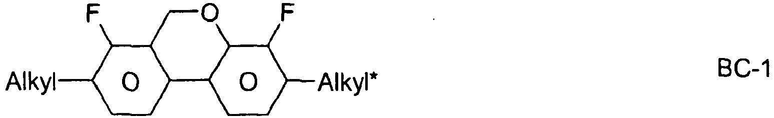 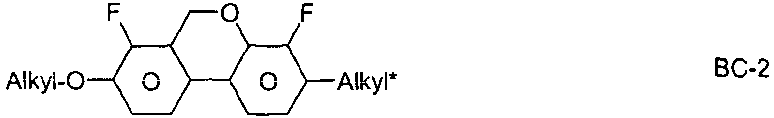 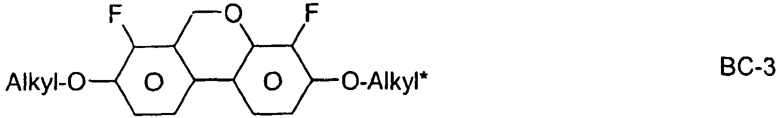 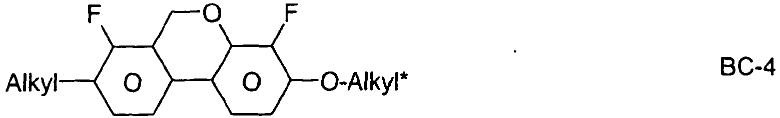 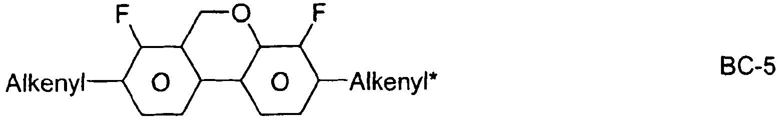 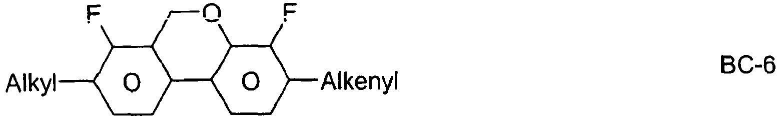 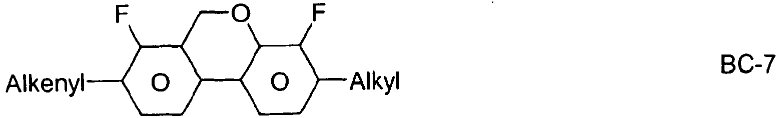 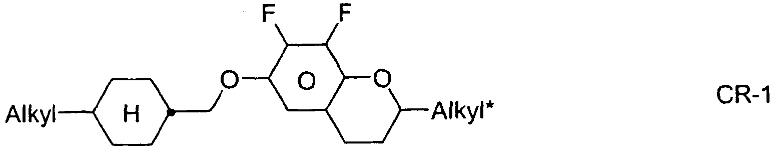 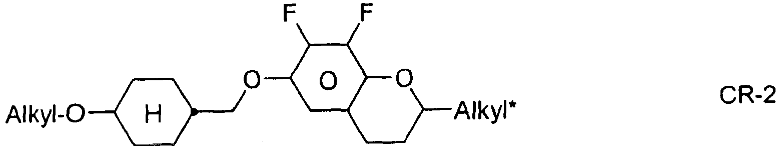 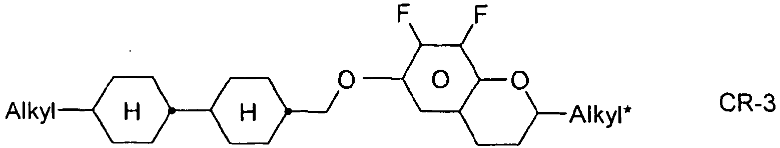 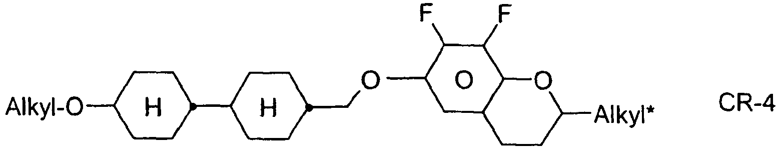 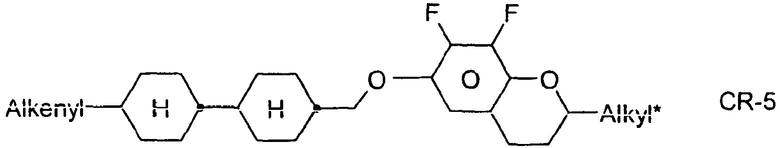 worin
   - Alkyl und Alkyl*: jeweils unabhängig voneinander einen geradkettigen Alkylrest mit 1-6 C-Atomen, und
   - Alkenyl und Alkenyl*: jeweils unabhängig voneinander einen geradkettigen Alkenylrest mit 2-6 C-Atomen,
   bedeuten.
   Ganz besonders bevorzugt sind Mischungen enthaltend eine, zwei oder drei Verbindungen der Formel BC-2.
q) Bevorzugte Mischungen enthalten ein oder mehrere Indan-Verbindungen der Formeln In, 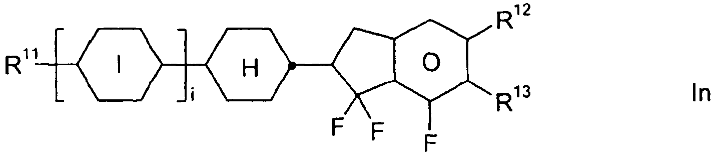 worin
   - R¹¹, R¹², R¹³: ein geradkettiger Alkyl-, oder Alkoxy-, Alkoxyalkyl-, Alkenylrest und 1-5 C-Atomen,
   - R¹² und R¹³: zusätzlich Halogen, vorzugsweise F, 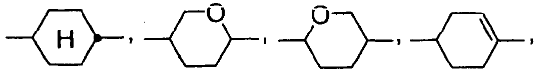 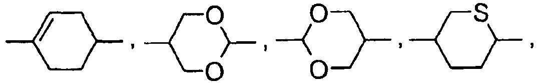 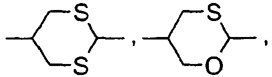
   - i: 0, 1 oder 2
   bedeuten.
   Bevorzugte Verbindungen der Formel In sind die nachfolgend genannten Verbindungen der Formeln In-1 bis In-16, 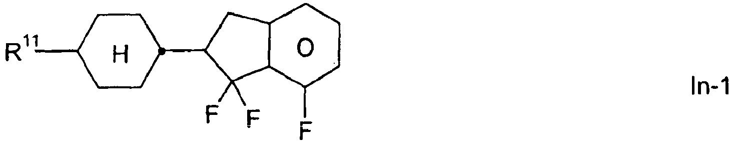 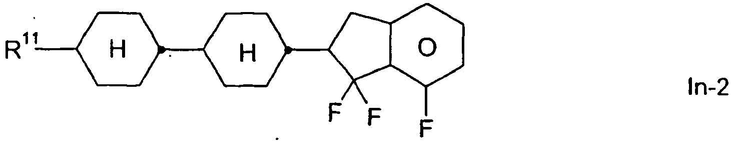 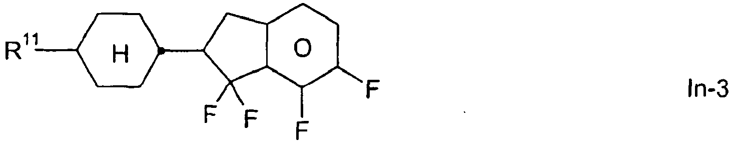 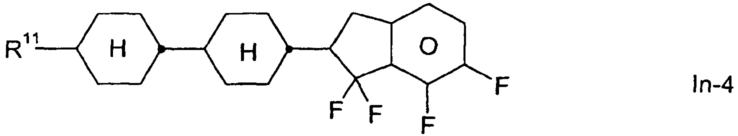 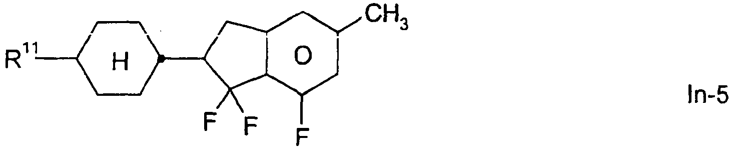 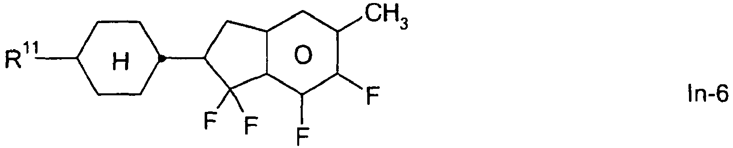 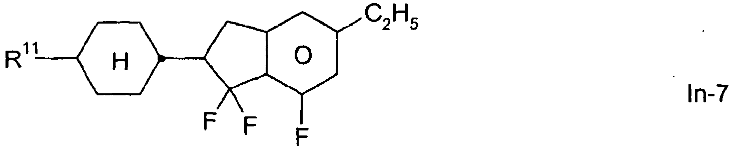 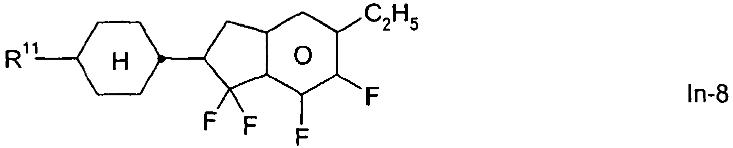 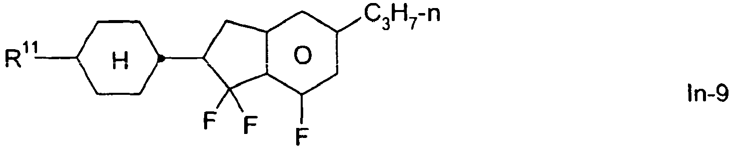 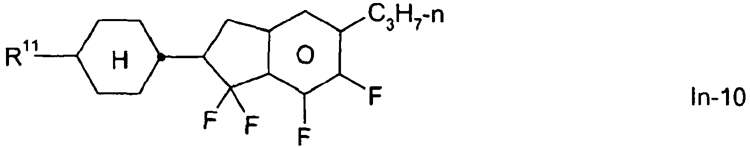 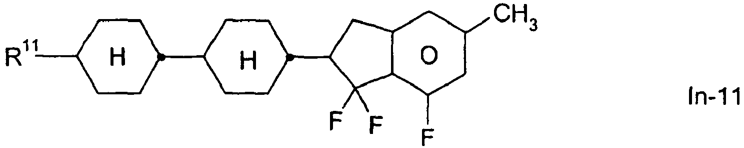 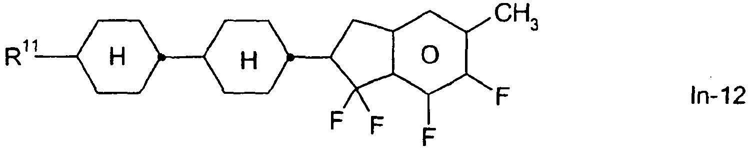 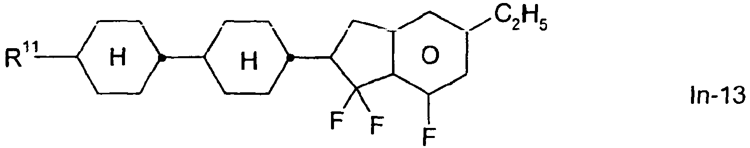 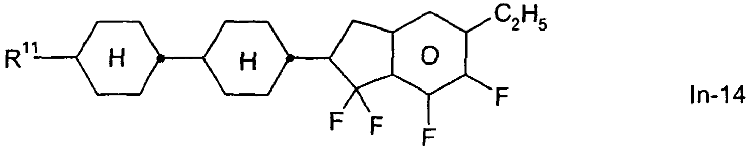 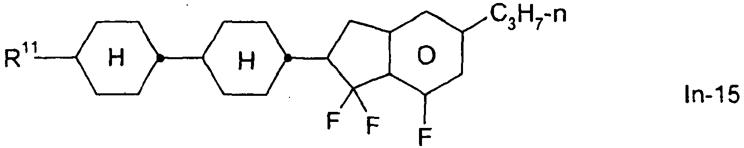 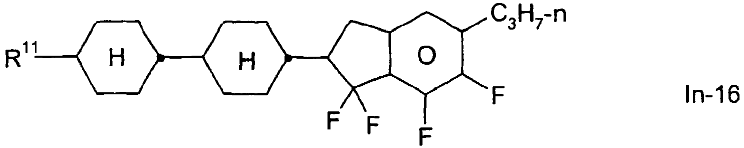
   Besonders bevorzugt sind die Verbindungen der Formeln In-1, In-2, In-3.
   Die Verbindungen der Formeln In und der Unterformeln In-1 bis In-16 werden vorzugsweise in Konzentrationen ≥ 5 Gew.%, insbesondere 5 - 30 Gew.% und ganz besonders bevorzugt 5 - 25 Gew.% in den erfindungsgemäßen Mischungen eingesetzt.
r) Bevorzugte Mischungen enthalten eine oder mehrere Verbindungen der Formeln L-1 bis L-11, 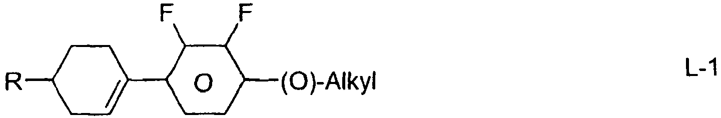 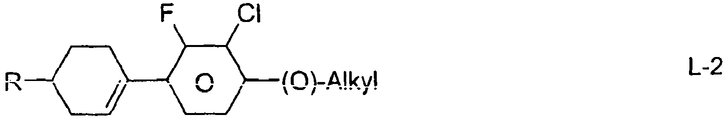 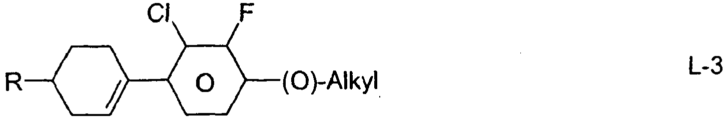 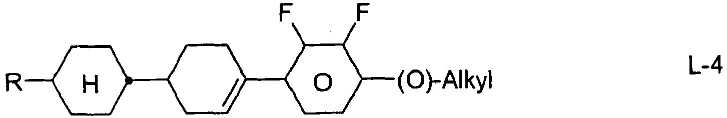 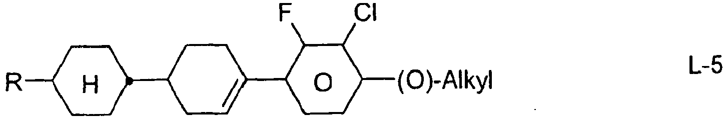 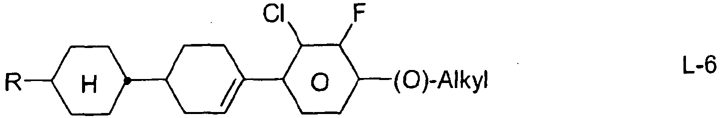 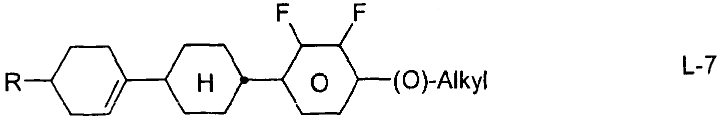 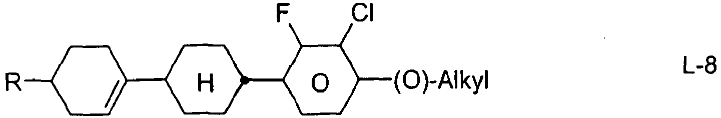 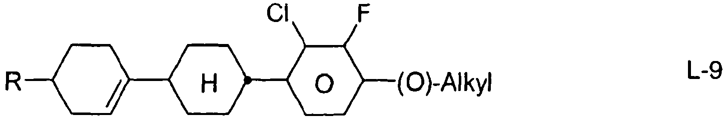 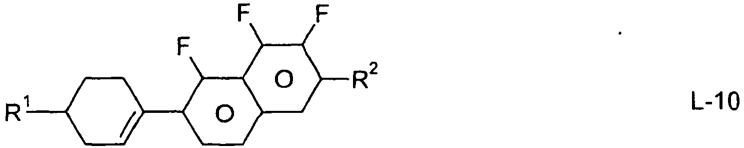 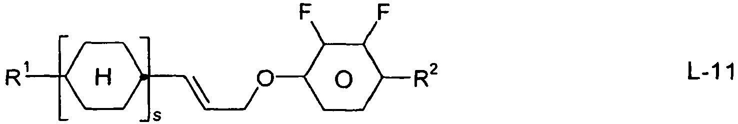 worin
   R, R¹ und R² jeweils unabhängig voneinander die für R^{2A} in Anspruch 1 angegebenen Bedeutungen haben und Alkyl ein Alkylrest mit 1-6 C-Atomen bedeutet. S bedeutet 1 oder 2.
   Besonders bevorzugt sind die Verbindungen der Formeln L-1 und L-4.
   Die Verbindungen der Formeln L-1 bis L-10 werden vorzugsweise in Konzentrationen von 5 - 50 Gew.%, insbesondere 5 - 40 Gew.% und ganz besonders bevorzugt 10 - 40 Gew.% eingesetzt.

Ein weiterer Gegenstand der Erfindung ist eine elektrooptische Anzeige mit einer Aktivmatrix-Adressierung basierend auf dem ECB-, IPS- oder FFS-Effekt, dadurch gekennzeichnet, dass sie als Dielektrikum ein flüssigkristallines Medium nach einem oder mehreren der Ansprüche 1 bis 9 enthält.

Das erfindungsgemäße flüssigkristalline Medium weist bevorzugt eine nematische Phase von ≤ -20 °C bis ≥ 70 °C, besonders bevorzugt von ≤ -30 °C bis ≥ 80 °C, ganz besonders bevorzugt von ≤ -40 °C bis ≥ 90 °C auf.

Hierbei bedeutet der Begriff "eine nematische Phase aufweisen" einerseits, dass bei tiefen Temperaturen bei der entsprechenden Temperatur keine smektische Phase und keine Kristallisation beobachtet wird und andererseits, dass beim Aufheizen aus der nematischen Phase noch keine Klärung auftritt. Die Untersuchung bei tiefen Temperaturen wird in einem Fließviskosimeter bei der entsprechenden Temperatur durchgeführt sowie durch Lagerung in Testzellen einer der elektrooptischen Anwendung entsprechenden Schichtdicke für mindestens 100 Stunden überprüft. Wenn die Lagerstabilität bei einer Temperatur von -20 °C in einer entsprechenden Testzelle 1.000 h oder mehr beträgt, wird das Medium als bei dieser Temperatur stabil bezeichnet. Bei Temperaturen von -30 °C bzw. -40 °C betragen die entsprechenden Zeiten 500 h bzw. 250 h. Bei hohen Temperaturen wird der Klärpunkt nach üblichen Methoden in Kapillaren gemessen.

Vorzugsweise weist die Flüssigkristallmischung einen nematischen Phasenbereich von mindestens 60 K und eine Fließviskosität v₂₀ von maximal 30 mm². s⁻¹ bei 20 °C auf.

Die Werte der Doppelbrechung Δn in der Flüssigkristallmischung liegen in der Regel zwischen 0,07 und 0,16, vorzugsweise zwischen 0,08 und 0,12.

Die erfindungsgemäße Flüssigkristallmischung weist ein Δε von -0,5 bis -8,0, insbesondere von -3,0 bis -6,0 auf, wobei Δε die dielektrische Anisotropie bedeutet. Die Rotationsviskosität γ₁ bei 20 °C ist vorzugsweise ≤ 165 mPa·s, insbesondere ≤ 140 mPa.s.

Die erfindungsgemäßen Flüssigkristallmedien weisen relativ kleine Werte für die Schwellenspannung (V₀) auf. Vorzugsweise sind sie im Bereich von 1,7 V bis 3,0 V, besonders bevorzugt ≤ 2,75 V und ganz besonders bevorzugt ≤ 2,4 V.

Der Begriff "Schwellenspannung" bezieht sich für die vorliegende Erfindung auf die kapazitive Schwelle (V₀), auch Freedericksz-Schwelle genannt, sofern nicht explizit anders angegeben.

Außerdem weisen die erfindungsgemäßen Flüssigkristallmedien hohe Werte für die Voltage Holding Ratio, insbesondere nach Belastung mit Display-Backlights, in Flüssigkristallzellen auf.

In der Regel zeigen dabei Flüssigkristallmedien mit einer geringen Ansteuerspannung bzw. Schwellenspannung eine geringere Voltage Holding Ratio als solche mit einer größeren Ansteuerspannung bzw. Schwellenspannung und umgekehrt.

Für die vorliegende Erfindung bedeuten die Begriffe "dielektrisch positive Verbindungen" solche Verbindungen mit einem Δε > 1,5, "dielektrisch neutrale Verbindungen" solche mit -1,5 ≤ Δε ≤ 1,5 und "dielektrisch negative" Verbindungen solche mit Δε < -1,5. Hierbei wird die dielektrische Anisotropie der Verbindungen bestimmt, indem 10 % der Verbindungen in einem flüssigkristallinen Host gelöst werden und von der resultierenden Mischung die Kapazität in mindestens jeweils einer Testzelle mit 20 µm Schichtdicke mit homeotroper und mit homogener Oberflächenorientierung bei 1 kHz bestimmt wird. Die Messspannung beträgt typischerweise 0,5 V bis 1,0 V, sie ist jedoch stets niedriger als die kapazitive Schwelle der jeweiligen untersuchten Flüssigkristallmischung.

Als Hostmischung für dielektrisch positive und dielektrisch neutrale Verbindungen wird ZLI-4792 und für dielektrisch negative Verbindungen ZLI-2857, beide von Merck KGaA, Deutschland, verwendet. Aus der Änderung der Dielektrizitätskonstanten der Hostmischung nach Zugabe der zu untersuchenden Verbindung und Extrapolation auf 100 % der eingesetzten Verbindung werden die Werte für die jeweiligen zu untersuchenden Verbindungen erhalten. Die zu untersuchende Verbindung wird zu 10 % in der Hostmischung gelöst. Wenn die Löslichkeit der Substanz hierzu zu gering ist, wird die Konzentration schrittweise solange halbiert, bis die Untersuchung bei der gewünschten Temperatur erfolgen kann.

Alle angegebenen Werte für Temperaturen für die vorliegende Erfindung sind in °C.

Die Voltage Holding Ratio wird in den bei der Merck KGaA hergestellten Testzellen bestimmt. Die Messzellen haben Substrate aus Natriumglas (Sodalime Glas) und sind mit Polyimidorientierungsschichten (Polyimid AL 60702 der Firma JSR) versehen. Die Schichtdicke beträgt einheitlich 6,0 µm. Die Fläche der durchsichtigen Elektroden aus ITO beträgt 1 cm².

Die erfindungsgemäßen Mischungen sind für alle VA-TFT-Anwendungen geeignet, wie z.B. VAN, MVA, (S)-PVA, ASV. Weiterhin sind sie für IPS (In plane switching)-, FFS (Fringe field switching)- und PALC-Anwendungen mit negativem Δε geeignet.

Die nematischen Flüssigkristallmischungen in den erfindungsgemäßen Anzeigen enthalten in der Regel zwei Komponenten A und B, die ihrerseits aus einer oder mehreren Einzelberbindungen bestehen.

Die Komponente A weist eine deutlich negative dielektrische Anisotropie auf und verleiht der nematischen Phase eine dielektrische Anisotropie von ≤ -0,5. Sie enthält bevorzugt neben einer oder mehreren Verbindungen der Formeln IA, IB und/oder IC, die Verbindungen der Formeln IIA und/oder IIB, ferner Verbindungen der Formeln III.

Der Anteil der Komponente A liegt vorzugsweise zwischen 45 und 100 %, insbesondere zwischen 60 und 100 %.

Für Komponente A wird vorzugsweise eine (oder mehrere) Einzelverbindung(en) gewählt, die einen Wert von Δε ≤ -0,8 haben. Dieser Wert muss umso negativer sein, je kleiner der Anteil A an der Gesamtmischung ist.

Die Komponente B weist eine ausgeprägte Nematogenität und eine Fließviskosität von nicht mehr als 30 mm^{2 ·} s⁻¹, vorzugsweise nicht mehr als 25 mm^{2 ·} 5_{.}¹, bei 20 °C auf.

Besonders bevorzugte Einzelverbindungen der Komponente B sind extrem niedrig viskose nematische Flüssigkristalle mit einer Fließviskosität von nicht mehr als 18, vorzugsweise nicht mehr als 12 mm^{2 ·} s⁻¹, bei 20 °C. Komponente B ist monotrop oder enantiotrop nematisch, weist keine smektischen Phasen auf und kann in Flüssigkristallmischungen das Auftreten von smektischen Phasen bis zu sehr tiefen Temperaturen verhindern. Versetzt man beispielsweise eine smektische Flüssigkristallmischung mit jeweils verschiedenen Materialien mit hoher Nematogenität, so kann durch den erzielten Grad der Unterdrückung smektischer Phasen die Nematogenität dieser Materialien verglichen werden.

Dem Fachmann sind aus der Literatur eine Vielzahl geeigneter Materialien bekannt. Besonders bevorzugt sind Verbindungen der Formel III.

Daneben können diese Flüssigkristallphasen auch mehr als 18 Komponenten, vorzugsweise 18 bis 25 Komponenten, enthalten.

Vorzugsweise enthalten die Phasen 4 bis 15, insbesondere 5 bis 12, und besonders bevorzugt < 10, Verbindungen der Formeln IA, IB und/oder IC und Verbindungen der Formeln IIA und/oder IIB und optional III.

Neben Verbindungen der Formeln IA, IB, IC, und den Verbindungen der Formeln IIA und/oder IIB und optional III können auch noch andere Bestandteile zugegen sein, z. B. in einer Menge von bis zu 45 % der Gesamtmischung, vorzugsweise jedoch bis zu 35 %, insbesondere bis zu 10 %.

Die anderen Bestandteile werden vorzugsweise ausgewählt aus den nematischen oder nematogenen Substanzen, insbesondere den bekannten Substanzen, aus den Klassen der Azoxybenzole, Benzylidenaniline, Biphenyle, Terphenyle, Phenyl- oder Cyclohexylbenzoate, Cyclohexan-carbonsäurephenyl- oder -cyclohexylester, Phenylcyclohexane, Cyclohexylbiphenyle, Cyclohexylcyclohexane, Cyclohexylnaphthaline, 1,4-Bis-cyclohexylbiphenyle oder Cylohexylpyrimidine, Phenyl- oder Cyclohexyldioxane, gegebenenfalls halogenierten Stilbenen, Benzylphenylether, Tolane und substituierten Zimtsäureestern.

Die wichtigsten als Bestandteile derartiger Flüssigkristallphasen in Frage kommenden Verbindungen lassen sich durch die Formel IV charakterisieren,

R⁹-L-G-E-R¹⁰ IV

worin L und E je ein carbo- oder heterocyclisches Ringsystem aus der aus 1,4-disubstituierten Benzol- und Cyclohexanringen, 4,4'-disubstituierten Biphenyl-, Phenylcyclohexan- und Cyclohexylcyclohexansystemen, 2,5-disubstituierten Pyrimidin- und 1,3-Dioxanringen, 2,6-disubstituierten Naphthalin, Di- und Tetrahydronaphthalin, Chinazolin und Tetrahydrochinazolin gebildeten Gruppe,

| | | |
|---|---|---|
| G | -CH=CH- | -N(O)=N- |
| | -CH=CQ- | -CH=N(O)- |
| | -C≡C | -CH₂-CH₂- |
| | -CO-O- | -CH₂-O- |
| | -CO-S- | -CH₂-S- |
| | -CH=N- | -COO-Phe-COO- |
| | -CF₂O- | -CF=CF- |
| | -OCF₂- | -OCH₂- |
| | -(CH₂)₄- | -(CH₂)₃O- |

oder eine C-C-Einfachbindung, Q Halogen, vorzugsweise Chlor oder -CN, und R⁹ und R¹⁰ jeweils Alkyl, Alkenyl, Alkoxy, Alkoxyalkyl oder Alkoxycarbonyloxy mit bis zu 18, vorzugsweise bis zu 8 Kohlenstoffatomen, oder einer dieser Reste auch CN, NC, NO₂, NCS, CF₃, SF₅, OCF₃, F, Cl oder Br bedeuten.

Bei den meisten dieser Verbindungen sind R⁹ und R¹⁰ voneinander verschieden, wobei einer dieser Reste meist eine Alkyl- oder Alkoxygruppe ist. Auch andere Varianten der vorgesehenen Substituenten sind gebräuchlich. Viele solcher Substanzen oder auch Gemische davon sind im Handel erhältlich. Alle diese Substanzen sind nach literaturbekannten Methoden herstellbar.

Es versteht sich für den Fachmann von selbst, dass die erfindungsgemäße VA-, IPS-, FFS- oder PALC-Mischung auch Verbindungen enthalten kann, worin beispielsweise H, N, O, Cl, F durch die entsprechenden Isotope ersetzt sind.

Die erfindungsgemäßen Mischungen können weiterhin polymerisierbare Verbindungen, sogenannte reaktive Mesogene (RMs), beispielsweise wie in U.S. 6,861,107 offenbart, in Konzentrationen von bevorzugt 0,12 - 5 Gew.%, besonders bevorzugt 0,2 - 2 % bezogen auf die Mischung zugesetzt werden. Derartige Mischungen können für sogenannte Polymer Stabilized VA-Modes, bei denen eine Polymerisierung der reaktiven Mesogene in der flüssigkristallinen Mischung erfolgen soll, verwendet werden. Voraussetzung hierfür ist, dass die Flüssigkristallmischung selbst keine polymerisierbaren Komponenten, enthält.

Der Aufbau der erfindungsgemäßen Flüssigkristallanzeigen entspricht der üblichen Geometrie, wie sie z.B. in EP-OS 0 240 379, beschrieben wird.

Die folgenden Beispiele sollen die Erfindung erläutern, ohne sie zu begrenzen. Vor- und nachstehend bedeuten Prozentangaben Gewichtsprozent; die Temperaturen sind in Grad Celsius angegeben.

Vorzugsweise enthalten die erfindungsgemäßen Mischungen neben den Verbindungen der Formeln IIA und/oder IIB und einer oder mehrerer Verbindungen aus der Gruppe der Verbindungen der Formeln IB, IC und ID, eine oder mehrere Verbindungen der nachfolgend genannten Verbindungen.

Folgende Abkürzungen werden verwendet:
(n, m, z: jeweils unabhängig voneinander 1, 2, 3, 4, 5 oder 6;
(O)CₘH₂ₘ₊₁ bedeutet OCₘH₂ₘ₊₁ oder CₘH₂ₘ₊₁)

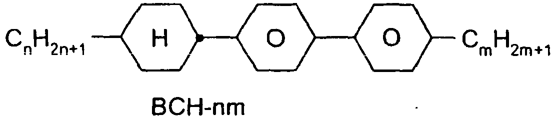

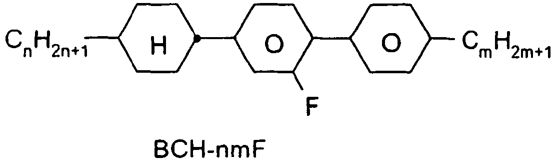

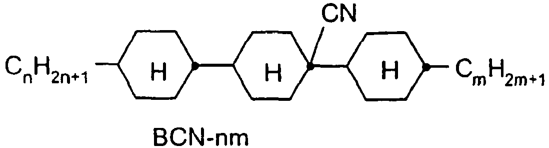

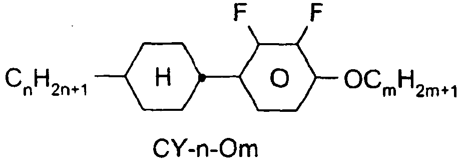

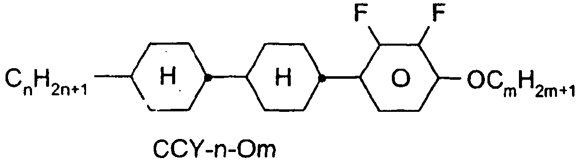

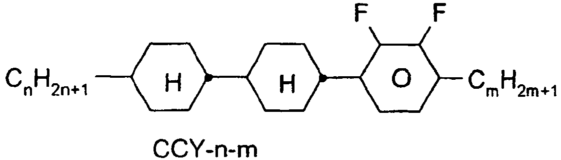

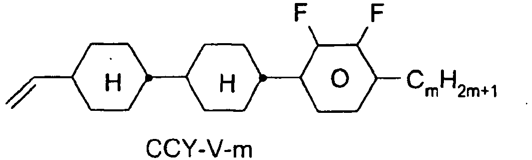

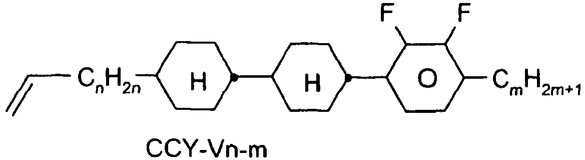

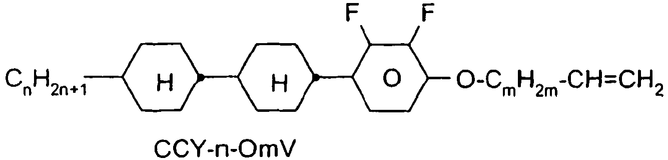

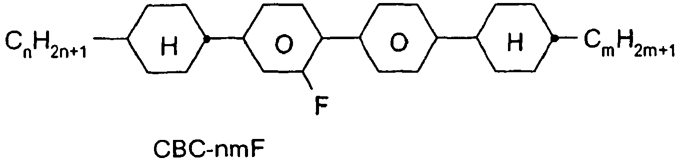

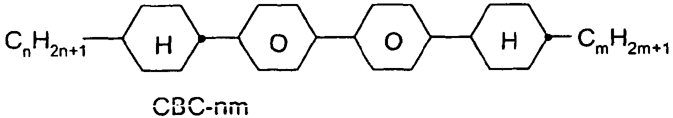

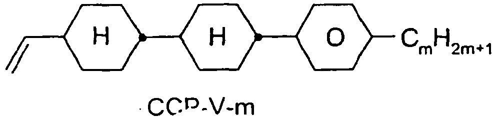

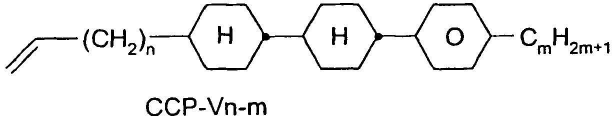

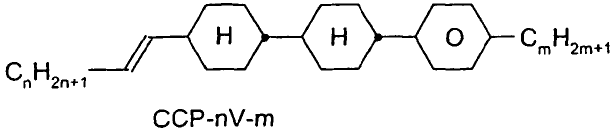

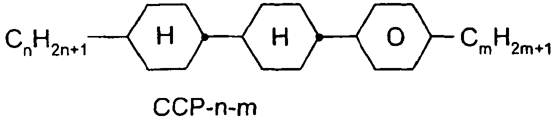

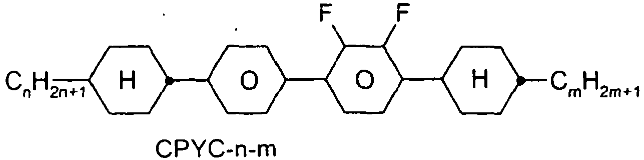

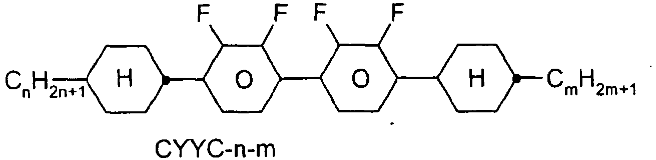

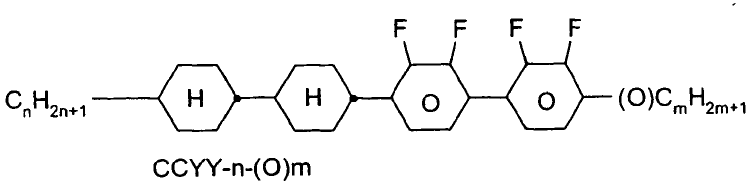

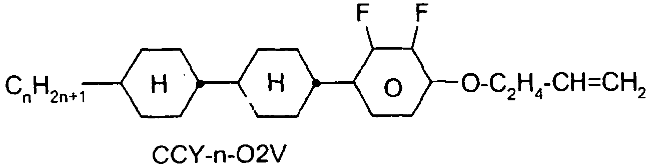

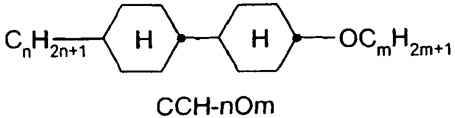

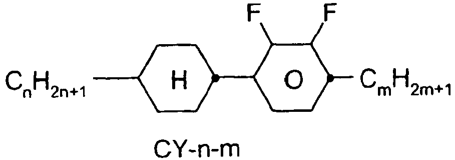

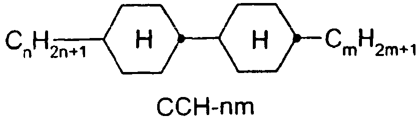

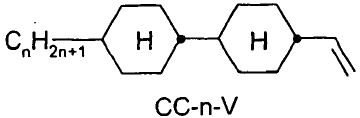

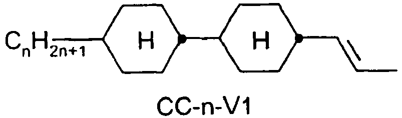

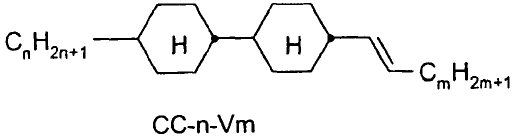

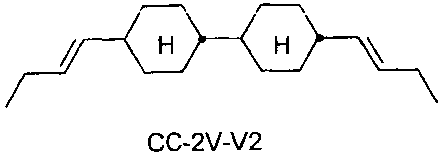

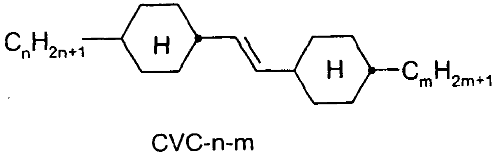

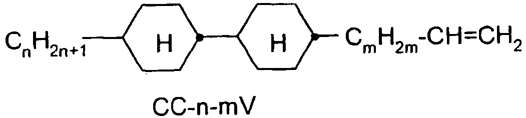

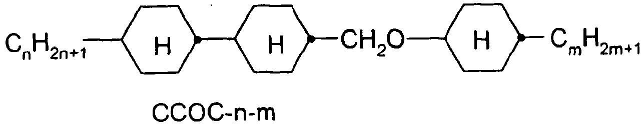

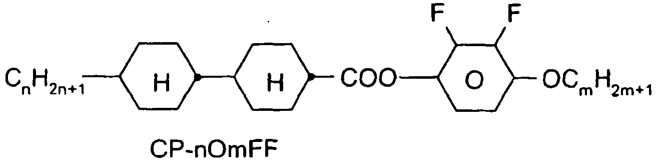

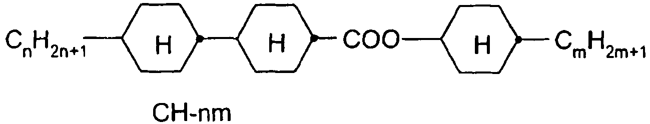

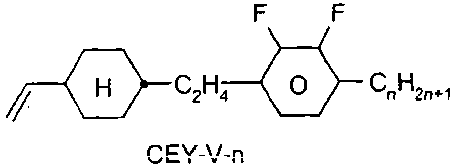

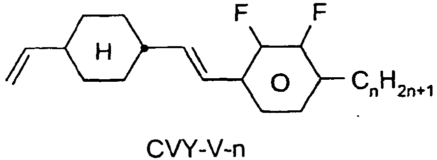

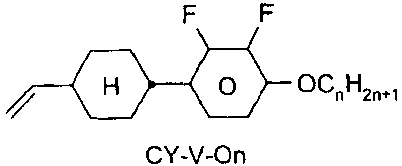

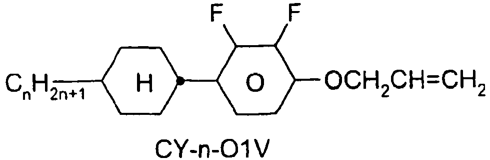

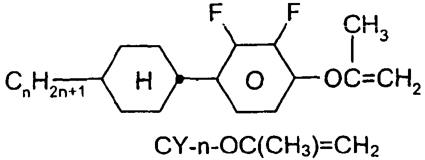

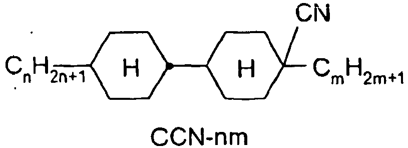

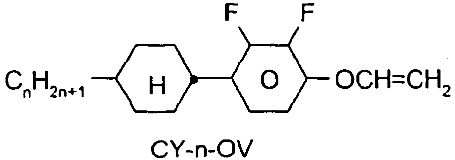

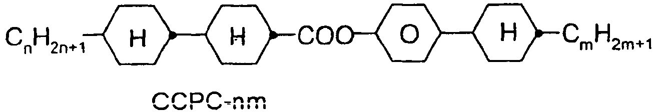

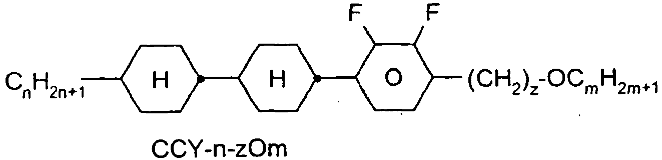

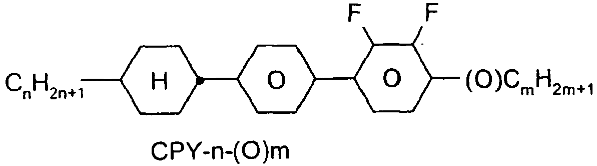

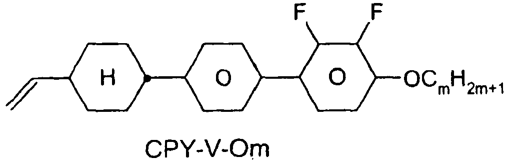

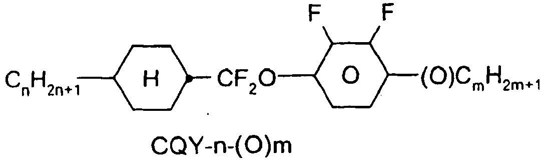

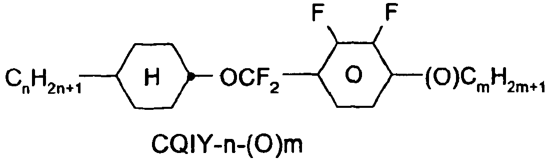

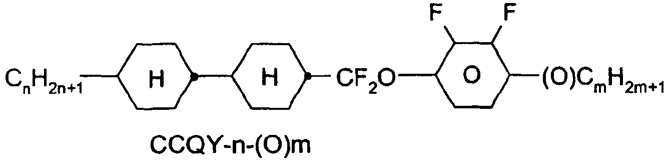

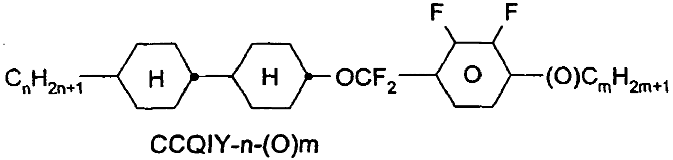

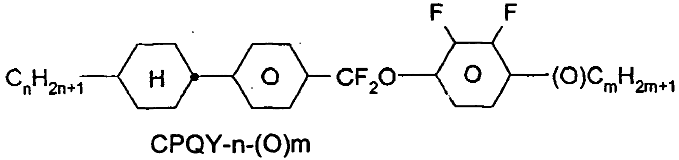

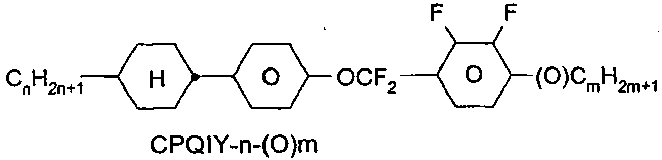

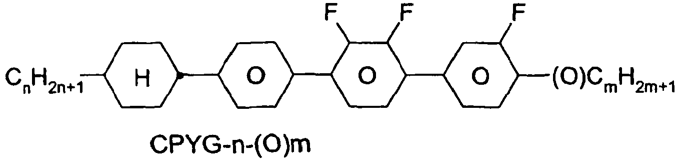

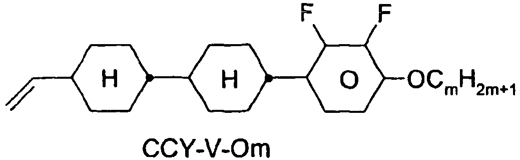

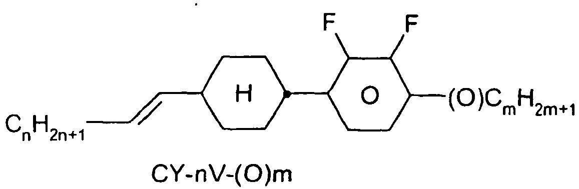

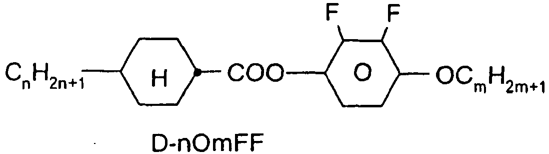

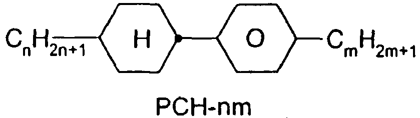

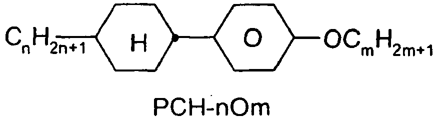

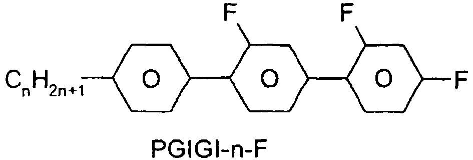

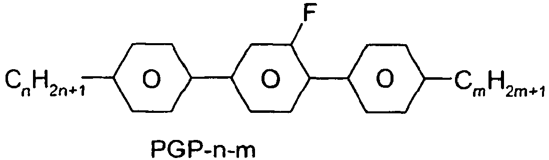

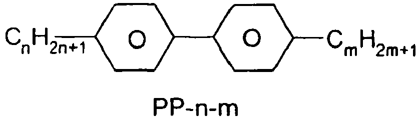

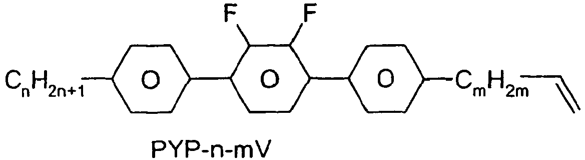

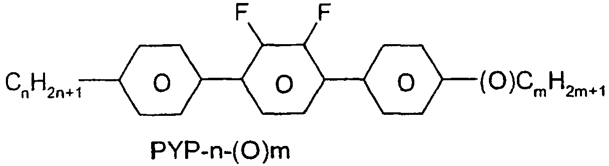

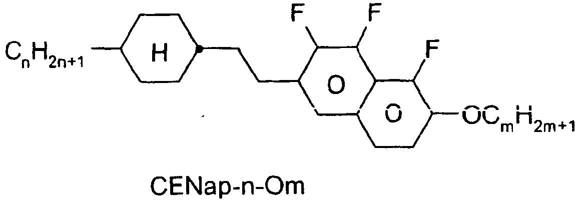

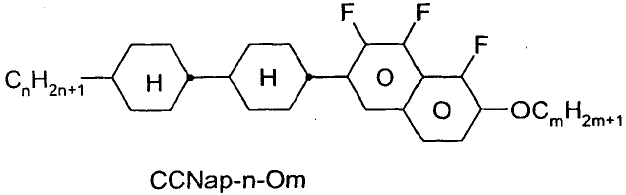

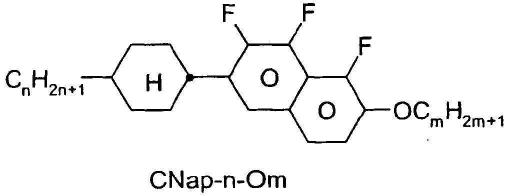

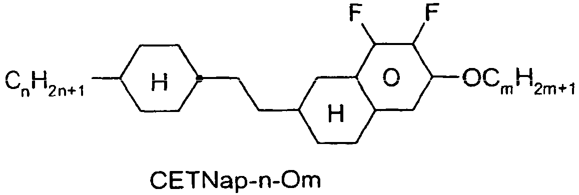

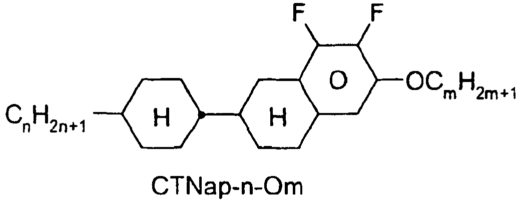

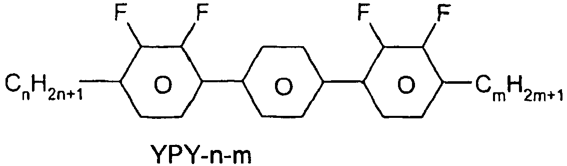

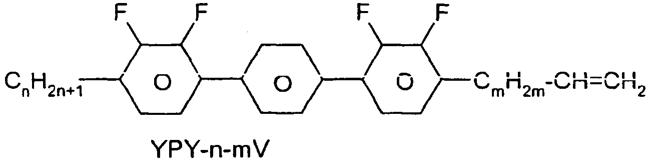

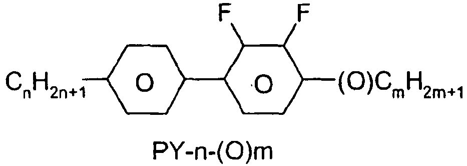

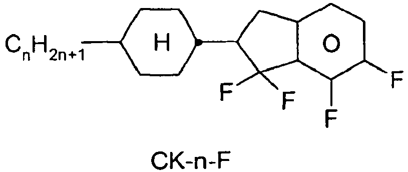

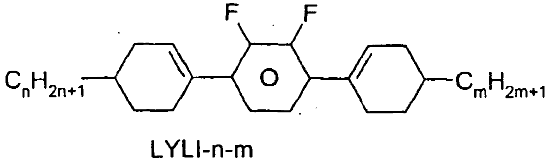

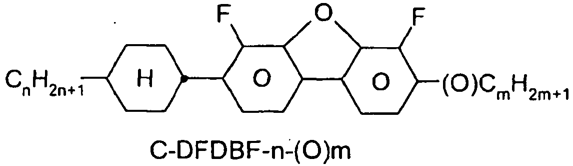

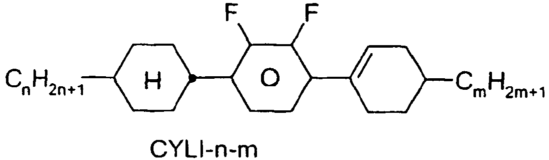

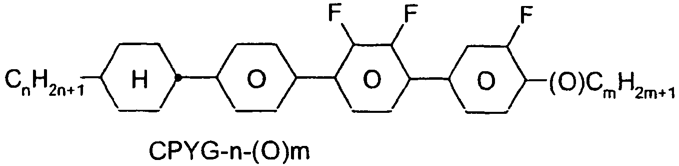

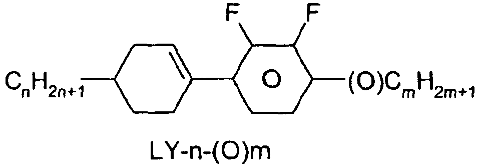

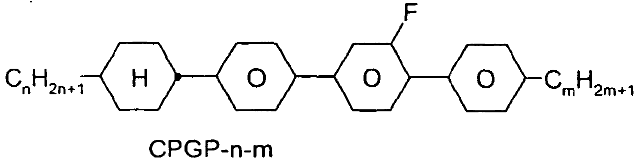

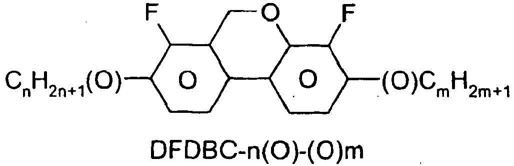

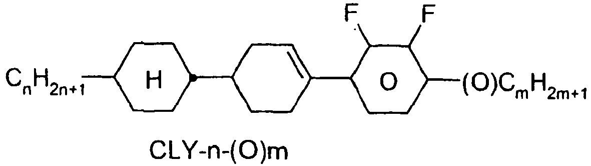

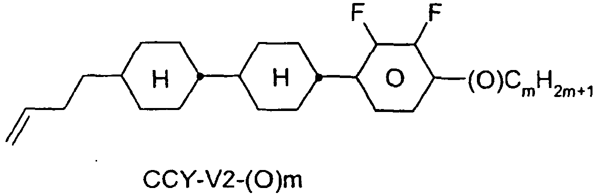

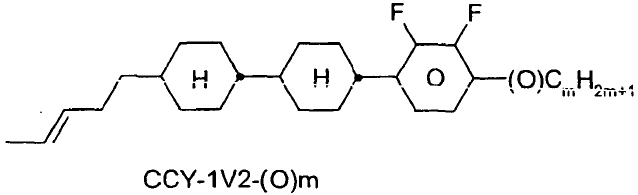

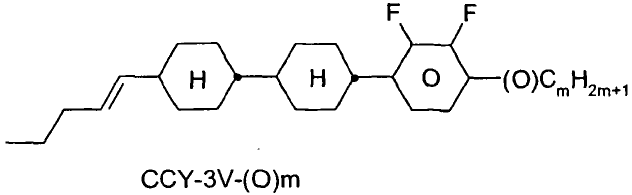

Die Herstellung der erfindungsgemäß verwendbaren Flüssigkristall-mischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Mittels geeigneter Zusatzstoffe können die erfindungsgemäßen Flüssigkristallphasen derart modifiziert werden, dass sie in jeder bisher bekannt gewordenen Art von z. B. ECB-, VAN-, IPS-, GH- oder ASM-VA LCD-Anzeige einsetzbar sind.

Die Dielektrika können auch weitere, dem Fachmann bekannte und in der Literatur beschriebene Additive, wie z. B. UV-Absorber, Antioxidantien, Nanoteilchen, Radikalfänger, enthalten. Beispielsweise können 0-15 % pleochroitische Farbstoffe, Stabilisatoren oder chirale Dotierstoffe zugesetzt werden.

Beispielsweise können 0-15 % pleochroitische Farbstoffe zugesetzt werden, ferner Leitsalze, vorzugsweise Ethyldimethyldodecylammonium-4-hexoxybenzoat, Tetrabutylammoniumtetraphenylboranat oder Komplexsalze von Kronenethern (vgl. z.B. Haller et al., Mol. Cryst. Liq. Cryst. Band 24, Seiten 249 258 (1973)) zur Verbesserung der Leitfähigkeit oder Substanzen zur Veränderung der dielektrischen Anisotropie, der Viskosität und/oder der Orientierung der nematischen Phasen. Derartige Substanze sind z. B. in den DE-OS 22 09 127, 22 40 864, 23 21 632, 23 38 281, 24 50 088, 26 37 430 und 28 53 728 beschrieben.

In der Tabelle A werden mögliche Dotierstoffe angegeben, die den erfindungsgemäßen Mischungen zugesetzt werden können. Sofern die Mischungen einen Dotierstoff enthalten, wird er in Mengen von 0,01-4 Gew.%, vorzugsweise 0,1-1,0 Gew.%, eingesetzt.

**Tabelle A**

| | |
|---|---|
| 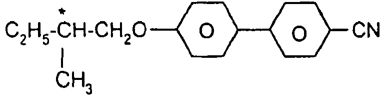 | 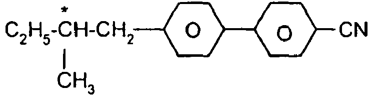 |
| **C15** | **CB 15** |
| 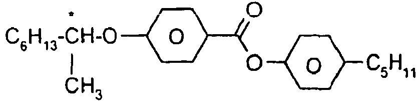 | |
| **CM 21** | |
| 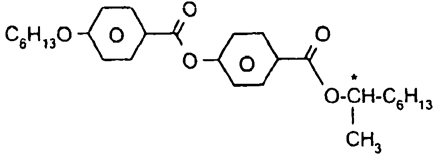 | |
| **R/S-811** | |
| 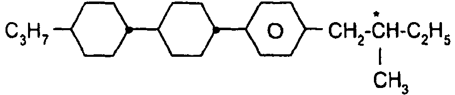 | |
| **CM 44** | |
| 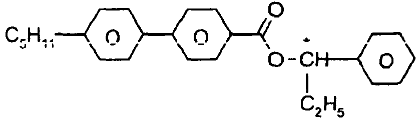 | 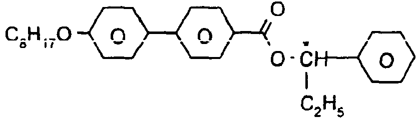 |
| **CM 45** | **CM 47** |
| 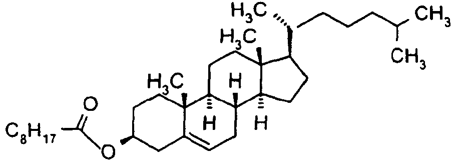 | |
| **CN** | |
| 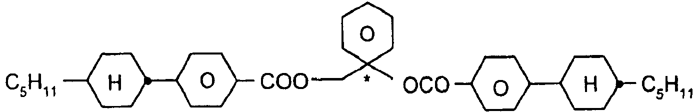 | |
| **R/S-1011** | |
| 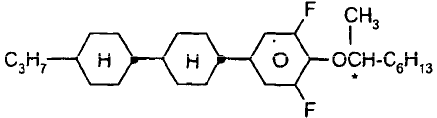 | |
| **R/S-2011** | |
| 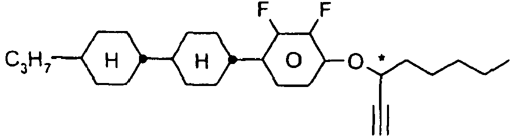 | |
| **R/S-3011** | |
| 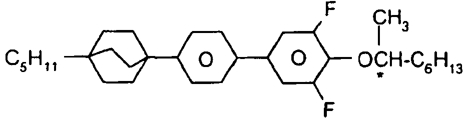 | |
| **R/S-4011** | |
| 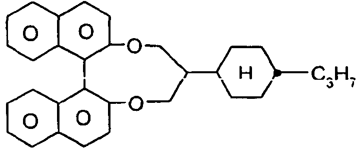 | |
| **R/S-5011** | |

Stabilisatoren, die beispielsweise den erfindungsgemäßen Mischungen in Mengen von bis zu 10 Gew.%, bezogen auf die gesamte Menge der Mischung, bevorzugt 0,01 bis 6 Gew.%, insbesondere 0,1 bis 3 Gew.%, zugesetzt werden können, werden nachfolgend in Tabelle B genannt.

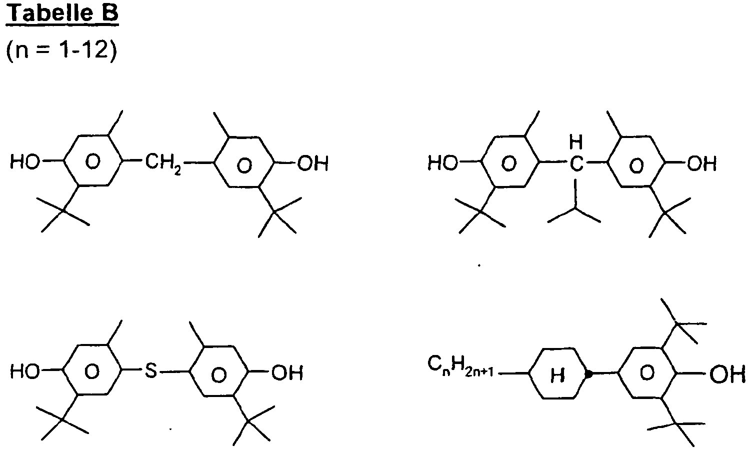

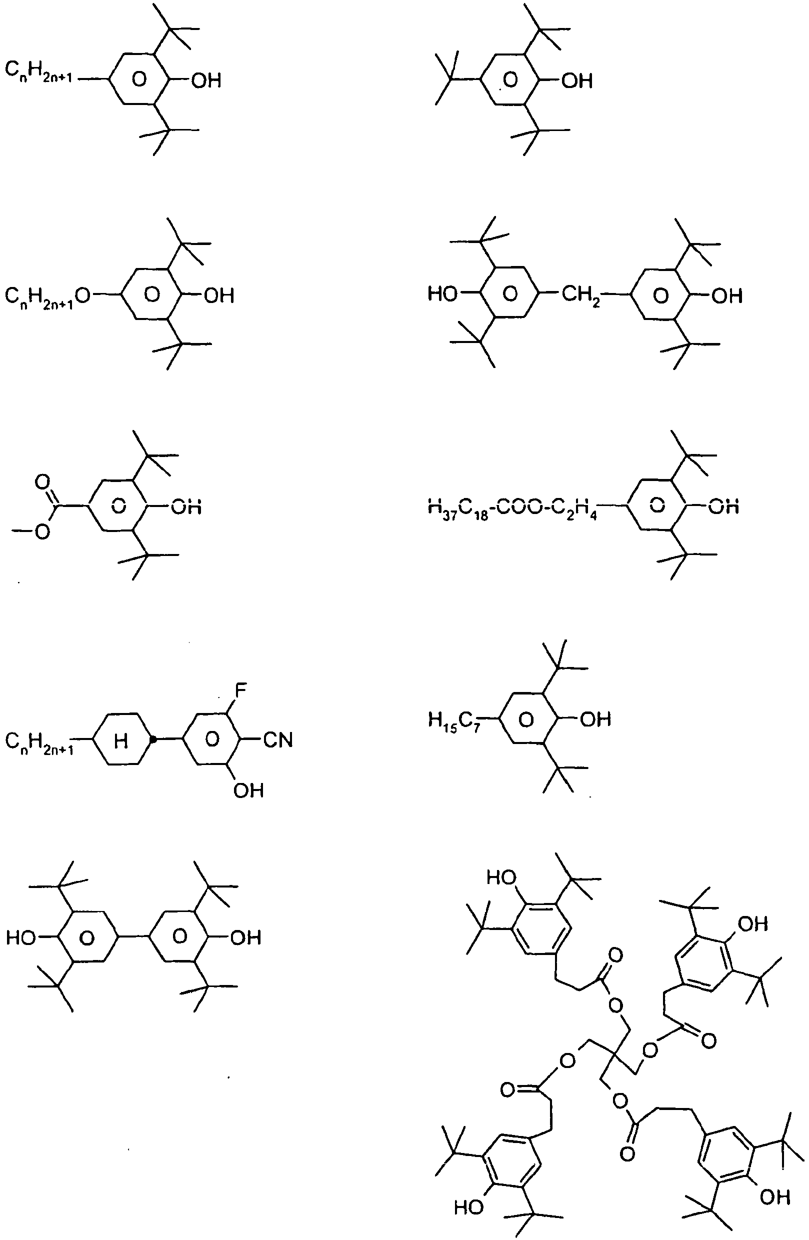

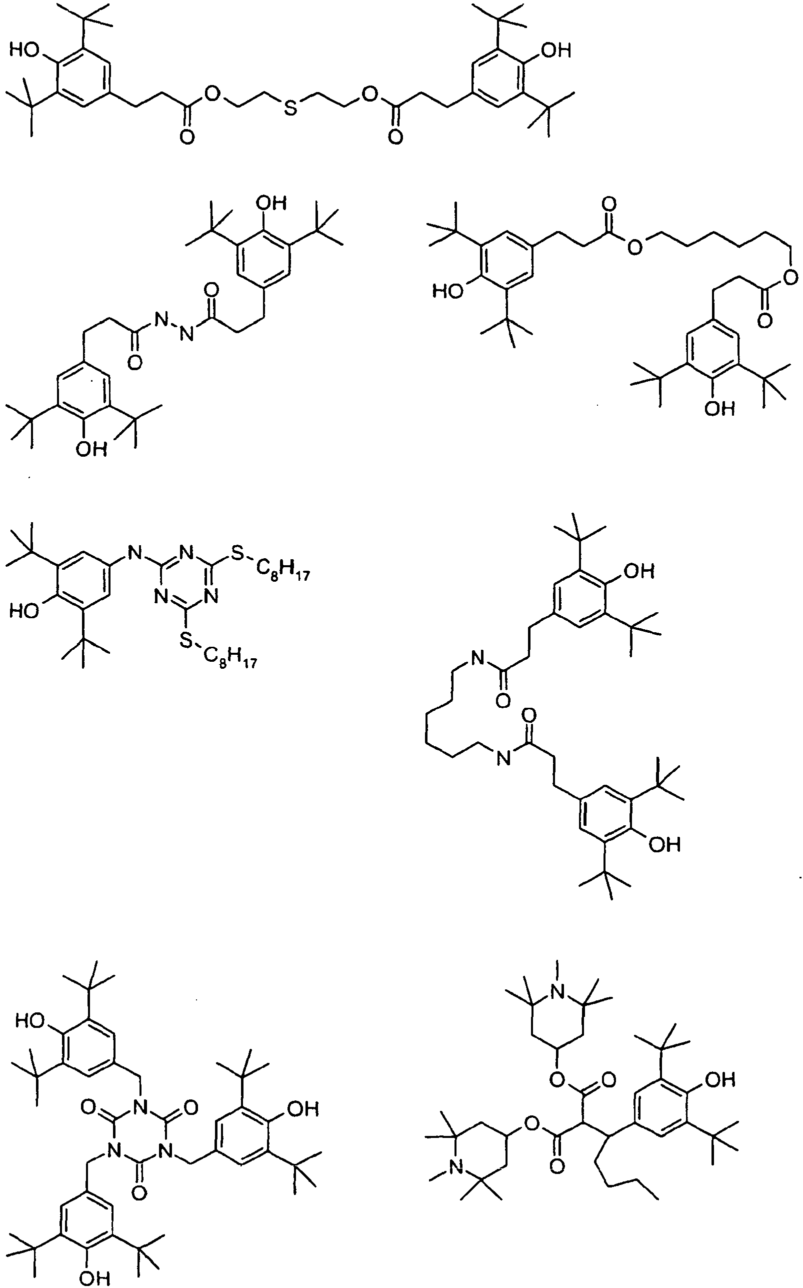

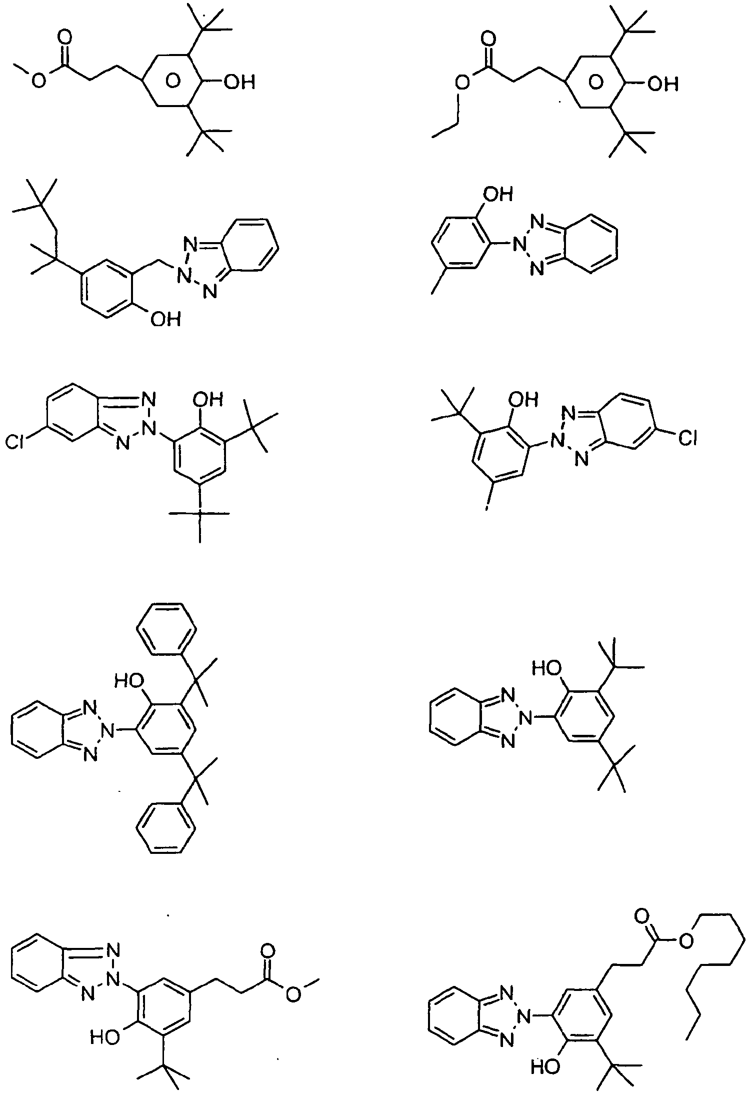

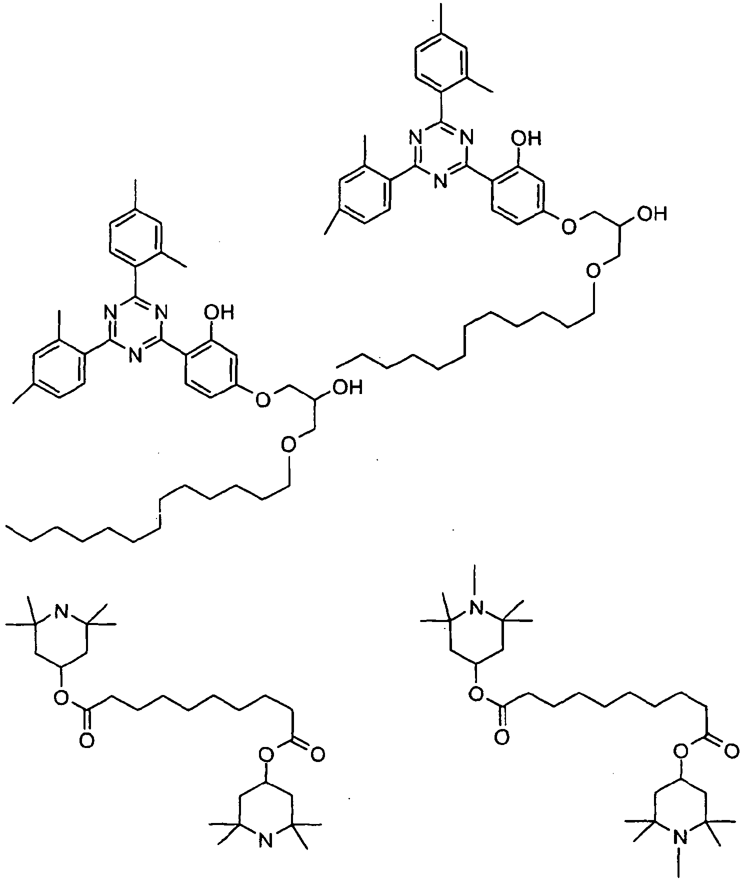

Die folgenden Beispiele sollen die Erfindung erläutern, ohne sie zu begrenzen. Vor- und nachstehend bedeuten
- Vₒ: Schwellenspannung, kapazitiv [V] bei 20 °C
- Δn: die optische Anisotropie gemessen bei 20 °C und 589 nm
- Δε: die dielektrische Anisotropie bei 20 °C und 1 kHz
- cp.: Klärpunkt [°C]
- K₁: elastische Konstante, "Splay"-Deformation bei 20 °C, [pN]
- K₃: elastische Konstante, "Bend"-Deformation bei 20 °C, [pN]
- γ₁: Rotationsviskosität gemessen bei 20 °C [mPa·s], bestimmt nach dem Rotationsverfahren in einem magnetischen Feld
- LTS: Tieftemperaturstabilität Low temperature stability (nematische Phase)], bestimmt in Testzellen
- VHR (20): Voltage holding ratio bei 20 °C [%]
- VHR (100): Voltage holding ratio nach 5 min. bei 100 °C [%]
- VHR (BL): Voltage holding ratio nach Backlight*-Belastung [%]
- VHR (100,: BL) Voltage holding ratio nach Backlight*-Belastung und nach 5 min. bei 100°C [%]
*kommerzielles CCFL (Cold Cathode Fluorescent Lamp)-Backlight

Die zur Messung der Schwellenspannung verwendete Anzeige weist zwei planparallele Trägerplatten im Abstand von 20 µm und Elektrodenschichten mit darüberliegenden Orientierungsschichten aus SE-1211 (Nissan Chemicals) auf den Innenseiten der Trägerplatten auf, welche eine homeotrope Orientierung der Flüssigkristalle bewirken.

Alle Konzentrationen in dieser Anmeldung, soweit nicht explizit anders angegeben, beziehen sich auf die entsprechende Mischung oder Mischungskomponente. Alle physikalischen Eigenschaften werden nach "Merck Liquid Crystals, Physical Properties of Liquid Crystals", Status November 1997, Merck KGaA, Deutschland bestimmt und gelten für eine Temperatur von 20 °C, sofern nicht explizit anders angegeben.

### Mischungsbeispiele

### Beispiel 1

| | | | |
|---|---|---|---|
| CY-3-O4 | 9,60 % | Klärpunkt [°C]: | 63 |
| CY-5-O4 | 9,60 % | Δn [589 nm, 20 °C]: | 0,0762 |
| CCY-2-O2 | 9,60 % | Δε [1 kHz, 20 °C]: | -3,0 |
| CCY-3-O2 | 9,60 % | γ₁ [mPa·s, 20 °C]: | 112 |
| CCY-5-O2 | 6,40 % | | |
| CCY-2-1 | 9,60 % | | |
| CCY-3-1 | 6,40 % | | |
| CC-5-V | 6,40 % | | |
| PCH-53 | 12,80 % | | |
| CC-1-V3 | 20,00 % | | |

### Beispiel 2

| | | | |
|---|---|---|---|
| CY-3-O4 | 9,60 % | Klärpunkt [°C]: | 78 |
| CY-5-O4 | 9,60 % | Δn [589 nm, 20 °C]: | 0,0820 |
| CCY-2-O2 | 9,60 % | Δε[1 kHz, 20°C]: | -3,1 |
| CCY-3-O2 | 9,60 % | γ₁[mPa·s, 20 °C]: | 140 |
| CCY-5-O2 | 6,40 % | | |
| CCY-2-1 | 9,60 % | | |
| CCY-3-1 | 6,40 % | | |
| CC-5-V | 6,40 % | | |
| PCH-53 | 12,80 % | | |
| CC-5-V3 | 20,00 % | | |

### Beispiel 3

| | | | |
|---|---|---|---|
| CY-3-O4 | 9,60 % | Klärpunkt [°C]: | 75 |
| CY-5-O4 | 9,60 % | Δn [589 nm, 20 °C]: | 0,0780 |
| CCY-2-O2 | 9,60 % | Δε [1 kHz, 20 °C]: | -3,3 |
| CCY-3-O2 | 9,60 % | γ₁ [mPa·s, 20 °C]: | 125 |
| CCY-5-O2 | 6,40 % | | |
| CCY-2-1 | 9,60 % | | |
| CCY-3-1 | 6,40 % | | |
| CC-5-V | 6,40 % | | |
| PCH-53 | 12,80 % | | |
| CC-4-V2 | 20,00 % | | |

### Beispiel 4

| | | | |
|---|---|---|---|
| CY-3-O2 | 15,00 % | Klärpunkt [°C]: | 79,5 |
| CY-5-O2 | 14,00 % | Δn [589 nm, 20 °C]: | 0,0829 |
| CCY-3-O2 | 10,00 % | ε_{\|\|} [1 kHz, 20 °C]: | 3,5 |
| CCY-3-O3 | 10,00 % | ε_{⊥} [1 kHz, 20 °C]: | 7,3 |
| CCY-4-O2 | 5,00 % | Δε [1 kHz, 20 °C]: | -3,7 |
| CPY-3-O2 | 8,00 % | K₁ [pN, 20 °C]: | 14,7 |
| CC-3-V1 | 10,00 % | K₃ [pN, 20 °C]: | 15,4 |
| CCH-34 | 10,00 % | K₁/K₃ [20 °C]: | 1,05 |
| CCH-35 | 3,00 % | V₀ [V, 20 °C]: | 2,14 |
| CCH-301 | 5,00 % | γ1 [mPa·s, 20 °C]: | 114 |
| CC-4-V2 | 10,00 % | LTS Zellen -20 °C | > 1000 h |
| | | LTS Zellen -30 °C | > 1000 h |
| | | LTS Bulk -20 °C | > 1000 h |

### Beispiel 5

| | | | |
|---|---|---|---|
| CY-3-O2 | 13,00 % | Klärpunkt [°C]: | 80 |
| CY-5-O2 | 12,00 % | Δn [589 nm, 20 °C]: | 0,035 |
| CCY-3-O2 | 10,00 % | ε_{∥}[1 kHz, 20 °C]: | 3,5 |
| CCY-3-O3 | 11,00 % | ε_{⊥} [1 kHz, 20 °C]: | 7,2 |
| CCY-4-O2 | 8,00 % | Δε [1 kHz, 20 °C]: | -3,7 |
| CPY-3-O2 | 8,00 % | K₁ [pN, 20 °C]: | 15,0 |
| CC-3-V1 | 10,00 % | K₃ [pN, 20 °C]: | 16,1 |
| CCH-34 | 10,00 % | K₁/K₃ [20 °C]: | 1,07 |
| CCH-35 | 3,00 % | V₀ [V, 20 °C]: | 2,20 |
| CCH-301 | 5,00 % | γ₁ [mPa·s, 20 °C]: | 119 |
| CC-1-V3 | 10,00 % | LTS Zellen -20 °C | > 1000 h |
| | | LTS Bulk -20 °C | > 1000 h |

### Beispiel 6

| | | | |
|---|---|---|---|
| CY-3-O2 | 15,00 % | Klärpunkt [°C]: | 80 |
| CY-5-O2 | 15,00 % | Δn [589 nm, 20 °C]: | 0,0821 |
| CCY-3-O2 | 10,00 % | ε_{∥} [1 kHz, 20 °C]: | 3,5 |
| CCY-3-O3 | 10,00 % | ε_{⊥} [1 kHz, 20 °C]: | 7,3 |
| CCY-4-O2 | 6,00 % | Δε [1 kHz, 20 °C]: | -3,8 |
| CPY-3-O2 | 6,00 % | K₁ [pN, 20 °C]: | 15,3 |
| CC-3-V1 | 10,00 % | K₃ [pN, 20 °C]: | 16,2 |
| CCH-34 | 10,00 % | K₁/K₃ [20 °C]: | 1,06 |
| CCH-35 | 3,00 % | V₀ [V, 20°C]: | 2,19 |
| CCH-301 | 5,00 % | γ₁ [mPa·s, 20 °C]: | 120 |
| CC-5-V3 | 10,00 % | LTS Zellen -20 °C | > 1000 h |

### Beispiel 7

| | | | |
|---|---|---|---|
| CY-3-O2 | 13,00 % | Klärpunkt [°C]: | 79,5 |
| CY-5-O2 | 14,00 % | Δn [589 nm, 20 °C]: | 0,0835 |
| CCY-3-O2 | 10,00 % | ε_{∥} [1 kHz, 20 °C]: | 3,5 |
| CCY-3-O3 | 10,00 % | ε_{⊥}[1 kHz, 20 °C]: | 7,2 |
| CCY-4-O2 | 6,00 % | Δε [1 kHz, 20 °C]: | -3,7 |
| CPY-3-O2 | 9,00 % | K₁ [pN, 20 °C]: | 14,7 |
| CC-3-V1 | 10,00 % | K₃ [pN, 20 °C]: | 15,4 |
| CCH-34 | 10,00 % | K₁/K₃ [20 °C]: | 1,05 |
| CCH-35 | 3,00 % | V₀ [V, 20 °C]: | 2,16 |
| CCH-301 | 5,00 % | γ₁ [mPa·s, 20 °C]: | 1000 |
| CC-2-V3 | 10,00 % | LTS Zellen -20 °C | > 1000 h |
| | | LTS Zellen -30 °C | > 1000 h |
| | | LTS Zellen -40 °C | > 1000 h |
| | | LTS Bulk -20 °C | > 1000 h |

### Beispiel 8

| | | | |
|---|---|---|---|
| CY-3-O2 | 18,00 % | Klärpunkt [°C]: | 80 |
| CY-5-O2 | 10,00 % | Δn [589 nm, 20 °C]: | 0,0837 |
| CCY-3-O2 | 10,00 % | ε_{∥} [589 nm, 20 °C]: | 4,6 |
| CCY-3-O3 | 10,00 % | ε_{⊥} [589 nm, 20 °C]: | 6,9 |
| CCY-4-O2 | 6,00 % | Δε [589 nm, 20 °C]: | -2,3 |
| CPY-3-O2 | 8,00 % | K₁ [pN, 20 °C] | 16,5 |
| CC-3-V1 | 10,00 % | K₃ [pN, 20 °C] | 15,3 |
| CCH-34 | 10,00 % | K₁/K₃ [20 °C] | 0,93 |
| CCH-35 | 3,00 % | V₀ [V, 20 °C] | 2,74 |
| CCH-301 | 5,00 % | γ₁ [mPa·s, 20 °C]: | 118 |
| CC-3-V2 | 10,00 % | LTS Zellen -20 °C | > 1000 h |
| | | LTS Bulk -20 °C | > 1000 h |

### Beispiel 9

| | | | |
|---|---|---|---|
| CY-3-O2 | 14,00 % | Klärpunkt [°C]: | 79 |
| CY-5-O2 | 15,00 % | Δn [589 nm, 20 °C]: | 0,0830 |
| CCY-3-O2 | 10,00 % | ε_{∥} [589 nm, 20 °C]: | 3,5 |
| CCY-3-O3 | 10,00 % | ε_{⊥} [589 nm, 20 °C]: | 7,1 |
| CCY-4-O2 | 4,00 % | Δε [589 nm, 20 °C]: | -3,6 |
| CPY-3-O2 | 8,00 % | K₁ [pN, 20 °C]: | 14,7 |
| CC-3-V1 | 10,00 % | K₃ [pN, 20 °C]: | 15,7 |
| CCH-34 | 10,00 % | K₁/K₃ [20 °C]: | 1,07 |
| CCH-35 | 4,00 % | V₀ [V, 20 °C]: | 2,19 |
| CCH-301 | 5,00 % | γ₁ [mPa·s, 20 °C]: | 109 |
| CC-2V-V2 | 10,00 % | LTS Zellen -20 °C | > 1000 h |
| | | LTS Zellen -30 °C | > 1000 h |

### Beispiel 10

| | | | |
|---|---|---|---|
| CY-3-O4 | 10,00 % | Klärpunkt [°C]: | 79 |
| CY-5-O2 | 15,00 % | Δn [589 nm, 20 °C]: | 0,0940 |
| CCY-3-O3 | 8,00 % | ε_{∥} [589 nm, 20 °C]: | 3,3 |
| PYP-2-3 | 7,00 % | ε_{⊥} [589 nm, 20 °C]: | 6,3 |
| CLY-2-O4 | 6,00 % | Δε [589 nm, 20 °C]: | -3,0 |
| CLY-3-O2 | 6,00 % | K₁ [pN, 20 °C]: | 15,8 |
| CLY-3-O3 | 6,00 % | K₃ [pN, 20 °C]: | 14,2 |
| CC-3-V1 | 11,00 % | K₁/K₃ [20 °C]: | 0,90 |
| CCP-31 | 6,00 % | V₀ [V, 20 °C]: | 2,30 |
| CC-4-V2 | 13,00 % | γ₁ [mPa·s, 20°C]: | 118 |
| CCH-34 | 6,00 % | | |
| PCH-53 | 6,00 % | | |

### Beispiel 11

| | | | |
|---|---|---|---|
| CY-3-O4 | 10,00 % | Klärpunkt [°C]: | 80 |
| CY-5-O2 | 15,00 % | Δn [589 nm, 20 °C]: | 0,0847 |
| CCY-3-O3 | 8,00 % | ε_{∥} [589 nm, 20 °C]: | 3,4 |
| CCY-4-O2 | 6,00 % | ε_{⊥} [589 nm, 20 °C]: | 6,4 |
| CPY-2-O2 | 8,00 % | Δε [589 nm, 20 °C]: | -3,1 |
| CPY-3-O2 | 8,00 % | K₁ [pN, 20 °C]: | 15,0 |
| PYP-2-3 | 3,00 % | K₃ [pN, 20 °C]: | 14,2 |
| CC-3-V1 | 12,00 % | K₁/K₃[20°C]: | 0,95 |
| CCP-31 | 5,00 % | V₀ [V, 20 °C]: | 2,26 |
| CC-4-V2 | 15,00 % | γ1 [mPa·s, 20 °C]: | 120 |
| CCH-34 | 5,00 % | LTS Zellen -20 °C | > 1000 h |
| PCH-53 | 5,00 % | LTS Zellen -30 °C | > 1000 h |
| | | LTS Zellen -40 °C | > 1000 h |
| | | LTS Bulk -20 °C | > 1000 h |

### Beispiel 12

| | | | |
|---|---|---|---|
| CY-3-O4 | 14,00 % | Klärpunkt [°C]: | 80,5 |
| CY-5-O2 | 14,00 % | Δn [589 nm, 20 °C]: | 0,0937 |
| CCY-3-O3 | 8,00 % | ε_{∥} [589 nm, 20 °C]: | 3,4 |
| CCY-4-O2 | 3,00 % | ε_{⊥} [589 nm, 20 °C]: | 6,5 |
| CPY-2-O2 | 9,00 % | Δε [589 nm, 20 °C]: | -3,1 |
| CPY-3-O2 | 8,00 % | K₁ [pN, 20 °C]: | 14,7 |
| CC-3-V1 | 10,00 % | K₃ [pN, 20 °C]: | 14,5 |
| CCP-2V-1 | 12,00 % | K₁/K₃ [20 °C]: | 0,99 |
| CC-4-V2 | 10,00 % | V₀ [V, 20 °C]: | 2,29 |
| CCH-34 | 6,00 % | γ₁ [mPa·s, 20°C]: | 126 |
| PCH-53 | 6,00 % | LTS Zellen -20 °C | > 1000 h |
| | | LTS Zellen -30 °C | > 1000 h |
| | | LTS Zellen -40 °C | > 1000 h |

### Beispiel 13

| | | | |
|---|---|---|---|
| CY-3-O4 | 27,00 % | Klärpunkt [°C]: | 81 |
| CY-5-O2 | 8,00 % | Δn [589 nm, 20 °C]: | 0,0945 |
| CCY-3-O3 | 4,00 % | ε_{∥} [589 nm, 20 °C]: | 3,4 |
| CPY-2-O2 | 8,00 % | ε_{⊥} [589 nm, 20 °C]: | 6,6 |
| CPY-3-O2 | 9,00 % | Δε [589 nm, 20 °C]: | -3,2 |
| CC-3-V1 | 9,00 % | K₁ [pN, 20 °C]: | 15,1 |
| CCP-2V-1 | 10,00 % | K₃ [pN.20°C]: | 15,5 |
| CCP-3V-1 | 9,00 % | K₁/K₃ [20 °C]: | 1,03 |
| CCH-34 | 12,00 % | V₀ [V, 20 °C]: | 2,32 |
| PCH-53 | 4,00 % | γ₁ [mPa·s, 20 °C]: | 132 |
| | | LTS Zellen -20 °C | > 1000 h |
| | | LTS Zellen -30 °C | > 1000 h |
| | | LTS Bulk -20 °C | > 1000 h |

### Beispiel 14

| | | | |
|---|---|---|---|
| CY-3-O4 | 20,00 % | Klärpunkt [°C]: | 80,5 |
| CY-5-O2 | 11,00 % | Δn [589 nm, 20 °C]: | 0,0938 |
| CCY-3-O3 | 5,00 % | ε_{∥} [589 nm, 20 °C]: | 3,4 |
| CPY-2-O2 | 10,00 % | ε_{⊥} [589 nm, 20 °C]: | 6,5 |
| CPY-3-O2 | 10,00 % | Δε [589 nm, 20 °C]: | -3,1 |
| CC-3-V1 | 10,00 % | K₁ [pN, 20 °C]: | 15,0 |
| CCP-3V-1 | 12,00 % | K₃ [pN, 20 °C]: | 14,4 |
| CC-4-V2 | 12,00 % | K₁/K₃ [20 °C]: | 0,96 |
| CCH-34 | 10,00 % | V₀ [V, 20 °C]: | 2,27 |
| | | γ₁ [mPa·s, 20 °C]: | 121 |
| | | LTS Zellen -20 °C | > 1000 h |

### Beispiel 15

| | | | |
|---|---|---|---|
| CY-3-O4 | 18,00 % | Klärpunkt [°C]: | 79,5 |
| CY-5-O2 | 10,00 % | Δn [589 nm, 20 °C]: | 0,0977 |
| CCY-3-O3 | 8,00 % | ε_{∥} [589 nm, 20 °C]: | 3,4 |
| CPY-2-O2 | 10,00 % | ε_{⊥} [589 nm, 20 °C]: | 6,5 |
| CPY-3-O2 | 10,00 % | Δε [589 nm, 20 °C]: | -3,1 |
| CC-3-V1 | 11,00 % | K₁ [pN, 20 °C]: | 14,6 |
| CCP-1V-1 | 12,00 % | K₃ [pN, 20 °C]: | 15,8 |
| CC-4-V2 | 8,00 % | K₁/K₃ [20 °C]: | 1,08 |
| CCH-34 | 6,00 % | V₀ [V, 20 °C]: | 2,37 |
| PCH-53 | 7,00 % | γ₁ [mPa·s, 20 °C]: | 127 |
| | | LTS Zellen -20 °C | > 1000 h |
| VHR (100, BL) | | LTS Zellen -30 °C | > 1000 h |
| 0 h | 96,7 % | LTS Zellen -40 °C | > 1000 h |
| 168 h | 88,0 % | LTS Bulk -20 °C | > 1000 h |
| 500 h | 77,9 % | | |

### Vergleichsbeispiel 1

| | | | |
|---|---|---|---|
| CY-3-O4 | 30,00 % | Klärpunkt [°C]: | 80 |
| CY-5-O4 | 5,00 % | Δn [589 nm, 20 °C]: | 0,0946 |
| CCY-3-O3 | 4,00 % | ε_{∥} [589 nm, 20 °C]: | 3,4 |
| CPY-2-O2 | 8,00 % | ε_{⊥} [589 nm, 20 °C]: | 6,5 |
| CPY-3-O2 | 8,00 % | Δε [589 nm, 20 °C]: | -3,1 |
| CC-3-V1 | 10,00 % | K₁ [pN, 20 °C]: | 14,2 |
| CCP-V-1 | 12,00 % | K₃ [pN, 20 °C]: | 15,2 |
| CCP-V2-1 | 12,00 % | K₁/K₃ [20 °C]: | 1,07 |
| CCH-34 | 11,00 % | V₀ [V, 20 °C]: | 2,33 |
| | | γ₁ [mPa·s, 20 °C]: | 127 |
| VHR (100, BL) | | LTS Bulk -30 °C | 384 |
| 0 h | 98,3 % | | |
| 168 h | 78,0 % | | |
| 500 h | 67,7 % | | |

### Beispiel 16

| | | | |
|---|---|---|---|
| CY-3-O4 | 14,00 % | Klärpunkt [°C]: | 81,5 |
| CY-5-O2 | 15,00 % | Δn [589 nm, 20 °C]: | 0,0953 |
| CCY-3-O3 | 8,00 % | ε_{∥} [589 nm, 20 °C]: | 3,4 |
| CCY-4-O2 | 3,00 % | ε_{⊥} [589 nm, 20 °C]: | 6,7 |
| CPY-2-O2 | 9,00 % | Δε [589 nm, 20 °C]: | -3,3 |
| CPY-3-O2 | 9,00 % | K₁ [pN, 20 °C]: | 15,2 |
| CC-3-V1 | 10,00 % | K₃ [pN, 20°C]: | 15,0 |
| CCP-31 | 6,00 % | K₁/K₃ [20 °C]: | 0,99 |
| CCP-33 | 7,00 % | V₀ [V, 20 °C]: | 2,26 |
| CC-4-V2 | 10,00 % | γ₁ [mPa·s, 20 °C]: | 135 |
| CCH-34 | 4,00 % | LTS Zellen -20 °C | > 1000 h |
| PCH-53 | 5,00 % | LTS Zellen -30 °C | > 1000 h |
| | | LTS Zellen -40 °C | > 1000 h |
| VHR (100, BL) | | LTS Bulk -20 °C | > 1000 h |
| 0 h | 97,0 % | | |
| 168 h | 87,1 % | | |
| 500 h | 74,5 % | | |

### Beispiel 17

| | | | |
|---|---|---|---|
| CY-3-O4 | 10,00 % | Klärpunkt [°C]: | 79,5 |
| CY-5-O2 | 15,00 % | Δn [589 nm, 20 °C]: | 0,0949 |
| CCY-3-O3 | 9,00 % | ε_{∥} [589 nm, 20 °C]: | 3,4 |
| CCY-4-O2 | 8,00 % | ε_{⊥} [589 nm, 20 °C]: | 6,7 |
| CPY-2-O2 | 8,00 % | Δε [589 nm, 20 °C]: | -3.3 |
| CPY-3-O2 | 7,00 % | K₁ [pN, 20 °C] | 15,0 |
| PYP-2-3 | 3,00 % | K₃ [pN, 20 °C] | 14,4 |
| CC-3-V1 | 11,00 % | K₁/K₃ [20 °C] | 0,96 |
| CCP-31 | 5,00 % | V₀ [V, 20 °C] | 2,22 |
| CC-4-V2 | 10,00 % | γ₁ [mPa·s, 20 °C]: | 127 |
| CCH-34 | 7,00 % | LTS Zellen -20 °C | > 1000 h |
| PCH-53 | 7,00 % | LTS Zellen -30 °C | > 1000 h |
| | | LTS Zellen -40 °C | > 1000 h |
| VHR (100, BL) | | LTS Bulk -20 °C | > 1000 h |
| 0 h | 96,9 % | | |
| 168 h | 88,8 % | | |
| 500 h | 77,7 % | | |

### Beispiel 18 (Vergleichsbeispiel)

| | | | |
|---|---|---|---|
| CY-3-O4 | 12,00 % | Klärpunkt [°C]: | 74.5 |
| CY-5-O4 | 12,00 % | Δn [589nm,20°C]: | 0,084 |
| CCY-2-O2 | 12,00 % | Δε [1 kHz, 20°C]: | -4,0 |
| CCY-3-O2 | 12,00 % | | |
| CCY-5-O2 | 8,00 % | | |
| CCY-2-1 | 12,00 % | | |
| CCY-3-1 | 8,00 % | | |
| CC-5-V | 8,00 % | | |
| PCH-53 | 16,00 % | | |

In dem oben angegebenen Host werden jeweils eine der unter V18 a-i genannten Einzelsubstanzen zu 20 % eingelagert und VHR(100) [%] nach Belastung mit einem Backlight gemessen:

| | | **Belastungsdauer [h]** | | |
|---|---|---|---|---|
| | | **0** | **330** | **500** |
| Referenzen | CC-3-V | 98.5 | 77.0 | 72.3 |
| | CC-5-V | 98.4 | 77.6 | 73.0 |
| V18 a | CC-4-V2 | 98.8 | 86.5 | 84.2 |
| V18 b | CC-2-V3 | 98.6 | 89.6 | 84.5 |
| V18 c | CC-1-V3 | 98.8 | 87.8 | 83.3 |
| V18 d | CC-2V-V2 | 98.6 | 86.9 | 82.6 |
| V18 e | CC-3-V2 | 98.7 | 89.2 | 84.4 |
| | | | | |
| Referenz | CCP-V-1 | 98.5 | 77.0 | 72.3 |
| V18 f | CCP-2V-1 | 98.4 | 84.5 | 76.9 |
| V18 g | CCP-3V-1 | 98.1 | 86.0 | 80.0 |
| V18 h | CCP-4V-1 | 97.7 | 90.3 | 87.7 |
| V18 i | CCP-1V-2 | 98.2 | 88.4 | 85.1 |

Die Tabelle zeigt, dass die Verbindungen der Formeln IA, IB und IC im Host eine höhere Voltage Holding Ratio nach Backlight-Belastung zeigen als die Referenzsubstanzen.

## Patentansprüche

1. Flüssigkristallines Medium mit negativer dielektrischer Anisotropie, **dadurch gekennzeichnet, dass** es mindestens eine Verbindung ausgewählt aus der Gruppe der Verbindungen der Formeln IA, IB und IC, 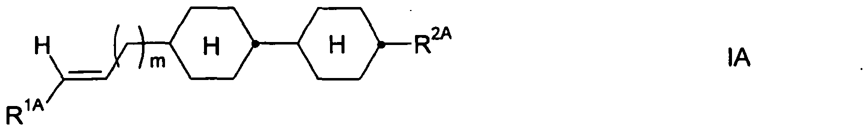 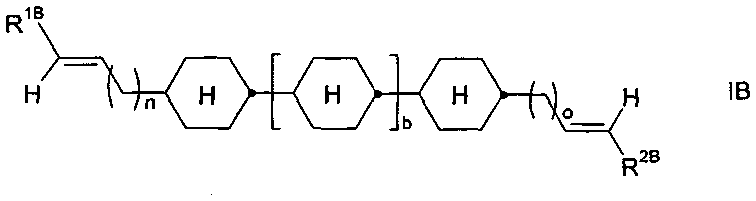 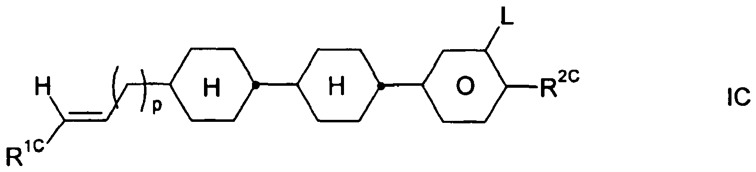 worin
R^{1A}, R^{1B}, R^{2B} und R^{1C} jeweils unabhängig voneinander einen Alkylrest mit 2-6 C-Atomen,
R^{2A} und R^{2C} jeweils unabhängig voneinander einen unsubstituierten, einen einfach durch CN oder CF₃ oder mindestens einfach durch Halogen substituierten Alkylrest mit bis zu 6 C-Atomen, wobei in diesen Resten auch eine oder mehrere CH₂-Gruppen durch -O-, -S-, 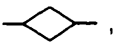 -C≡_{C}-, -CF₂O-, -OCF₂-, -OC-O- oder -O-CO- so ersetzt sein können, dass O-Atome nicht direkt miteinander verknüpft sind, und falls L = F ist, kann R^{2C} auch Halogen, vorzugsweie F oder Cl, bedeuten,
L H oder F,
m, n, o und p jeweils unabhängig voneinander 0, 1 oder 2,
b 0 oder 1
bedeuten,
und eine oder mehrere Verbindungen der Formeln IIA und/oder IIB, 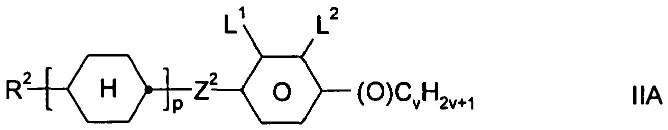 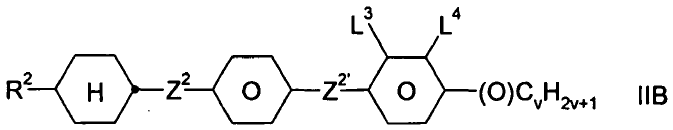 worin
R² H, einen unsubstituierten, einen einfach durch CN oder CF₃ oder einen mindestens einfach durch Halogen substituierten Alkyl- oder Alkenylrest mit bis zu 15 C-Atomen, wobei in diesen Resten auch eine oder mehrere CH₂-Gruppen jeweils unabhängig voneinander durch -O-, -S-, 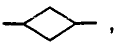 -C≡C-, -CO-, -CO-O-, -O-CO- oder -O-CO-O- so ersetzt sein können, dass O-Atome nicht direkt miteinander verknüpft sind,
L¹⁻⁴ jeweils unabhängig voneinander F oder Cl,
Z² und Z^{2'} jeweils unabhängig voneinander Einfachbindung, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-,
p 1 oder 2, und
v 1 bis 6
bedeuten,
enthält.

2. Flüssigkristallines Medium nach Anspruch 1, **dadurch gekennzeichnet, dass** es zusätzlich eine oder mehrere Verbindungen der Formeln, 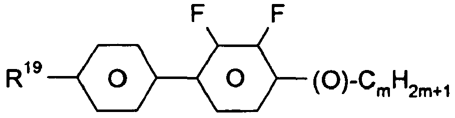 worin
R¹⁹ Alkyl oder Alkoxy mit 1-7 C-Atomen bedeutet,
enthält.

3. Flüssigkristallines Medium nach Anspruch 1 oder 2, **dadurch gekennzeichnet, dass** es zusätzlich eine oder mehrere Verbindungen der Formel III, 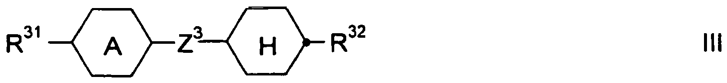 worin
R³¹ und R³² jeweils unabhängig voneinander einen geradkettigen Alkyl-, Alkoxyalkyl- oder Alkoxyrest mit bis zu 12 C-Atomen, und 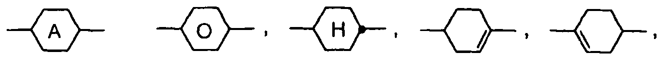 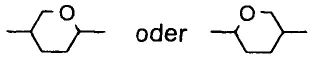
Z³ Einfachbindung, -CH₂CH₂-, -CH=CH-, -CF₂O-, -OCF₂-, -CH₂O-, -OCH₂-, -COO-, -OCO-, -C₂F₄-, -C₄H₉-, -CF=CF-
bedeuten,
enthält.

4. Flüssigkristallines Medium nach einem oder mehreren der Ansprüche 1 bis 3, **dadurch gekennzeichnet, dass** das Medium mindestens eine Verbindung der Formeln IA-1 bis IC-3, 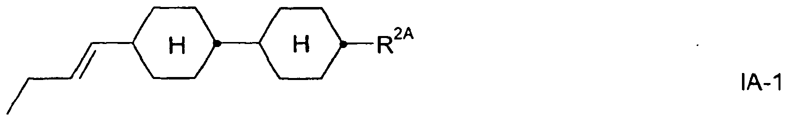 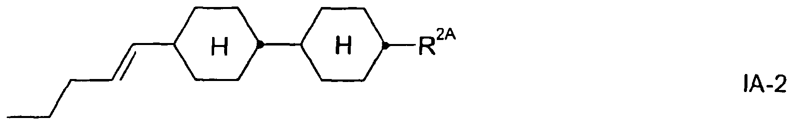 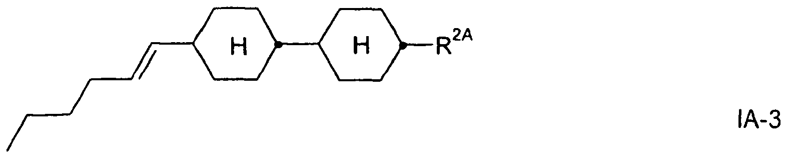 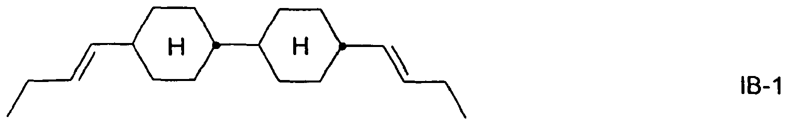 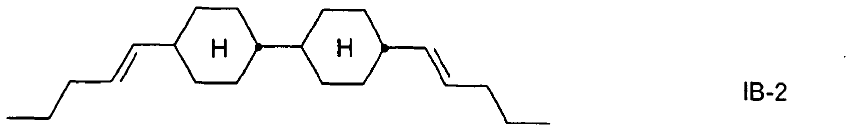 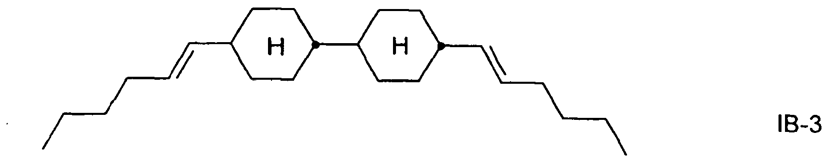 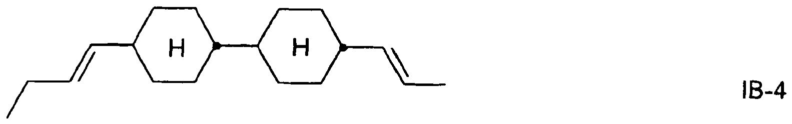 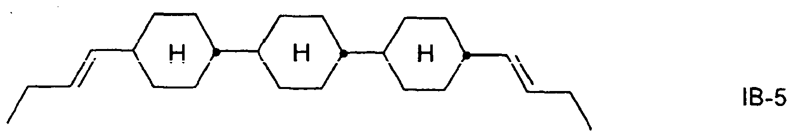 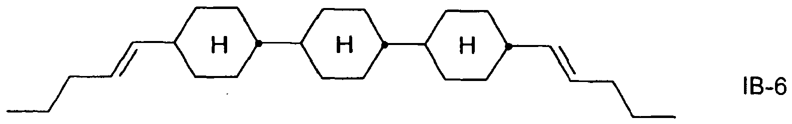 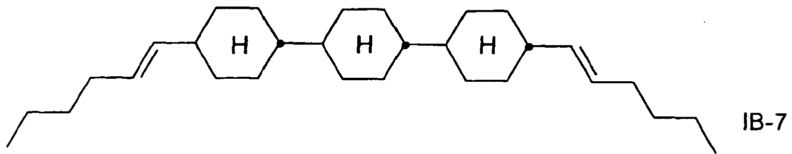 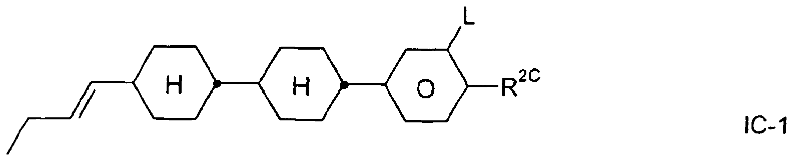 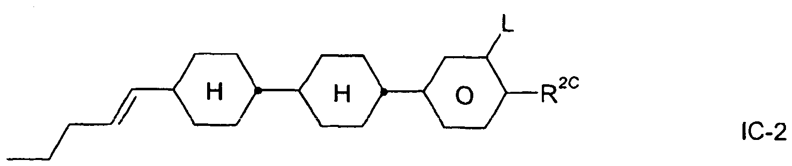 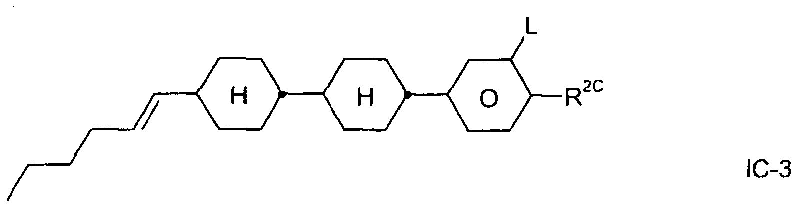 worin R^{2A}, R^{2C} und L die in Anspruch 1 angegebenen Bedeutungen, enthält.

5. Flüssigkristallines Medium nach einem oder mehreren der Ansprüche 1 bis 4, **dadurch gekennzeichnet, dass** das Medium zusätzlich eine oder mehrere Verbindungen der Formeln 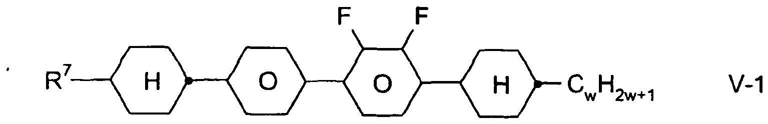 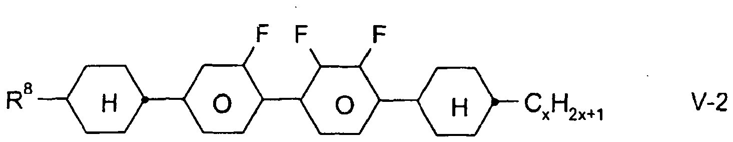 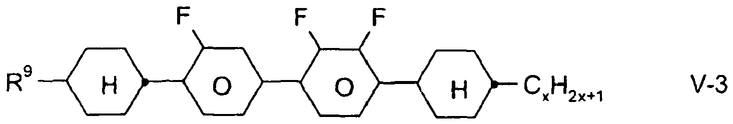 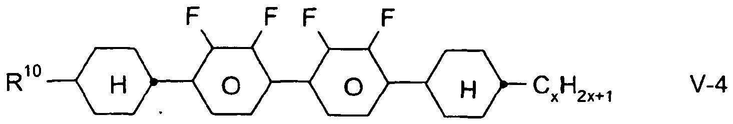 worin
R⁷⁻¹⁰ jeweils unabhängig voneinander eine der in Anspruch 2 für R² angegebenen Bedeutung haben, und
w und x jeweils unabhängig voneinander 1 bis 6
bedeuten,
enthält.

6. Flüssigkristallines Medium nach einem oder mehreren der Ansprüche 1 bis 5, **dadurch kennzeichnet, dass** das Medium zusätzlich eine oder mehrere Terphenyle der Formeln T-1 bis T-21 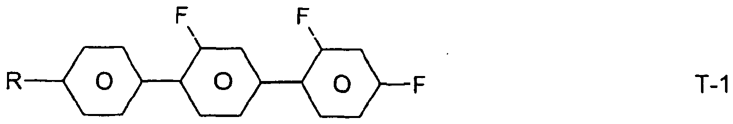 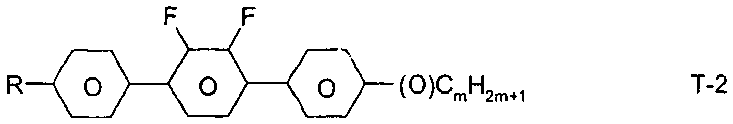 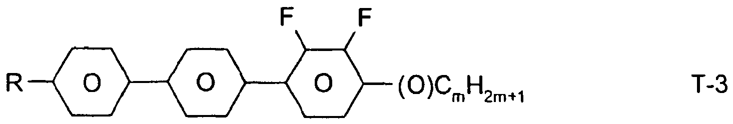 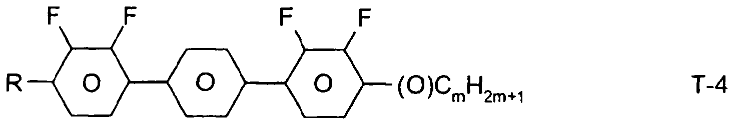 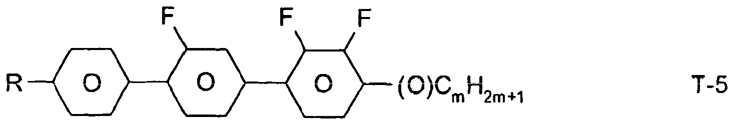 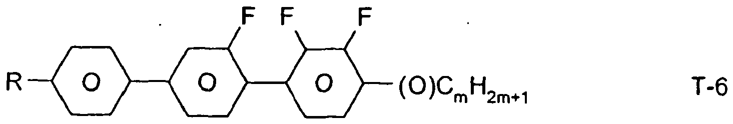 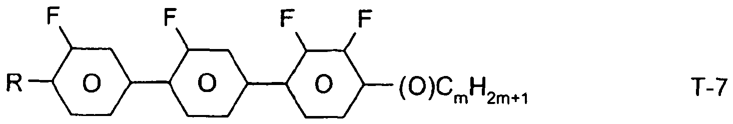 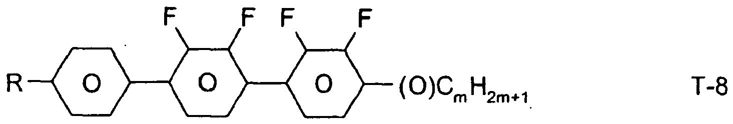 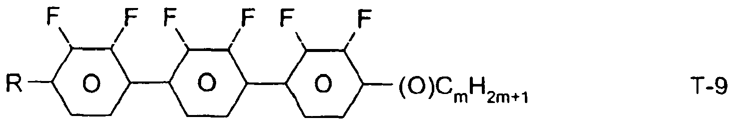 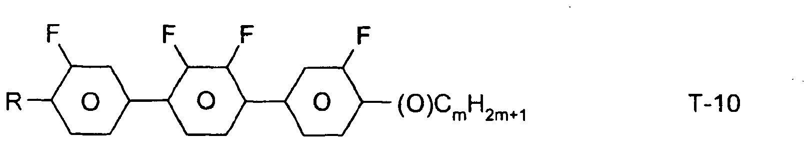 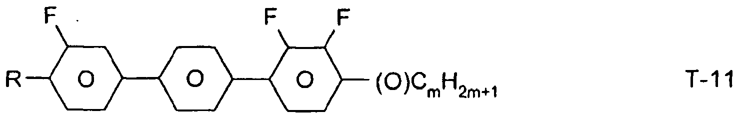 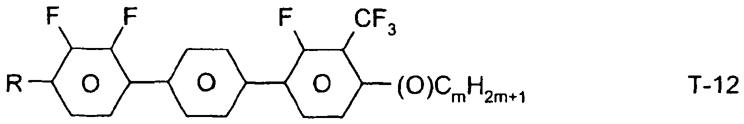 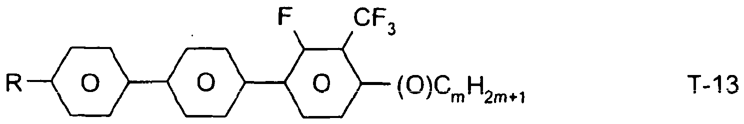 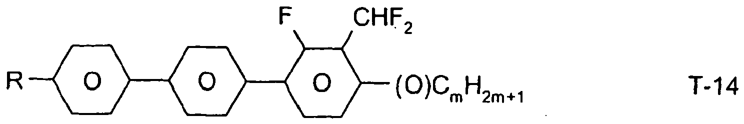 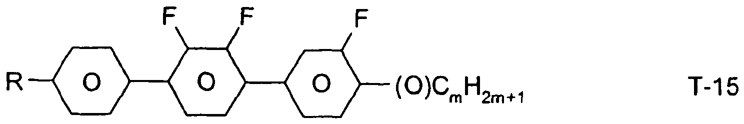 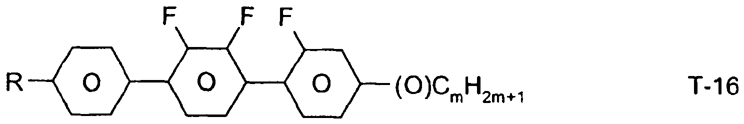 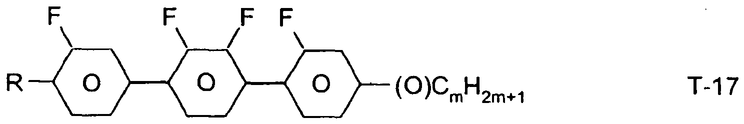 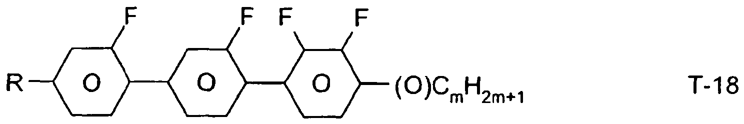 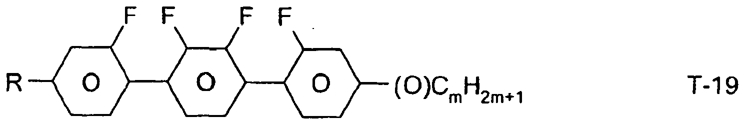 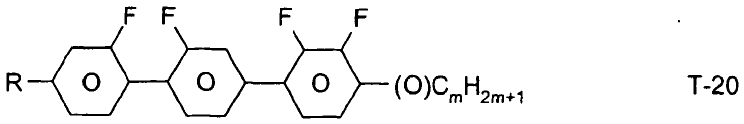 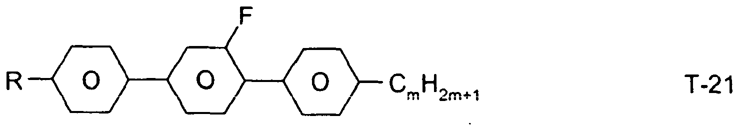 worin
R geradkettiger Alkyl- oder Alkoxyrest mit 1-7 C-Atomen bedeutet, und m 1-6
bedeuten,
enthält

7. Flüssigkristallines Medium nach einem oder mehreren der Ansprüche 1 bis 6, **dadurch gekennzeichnet, dass** das Medium zusätzlich eine oder mehrere Verbindungen der Formeln O-1 bis O-14 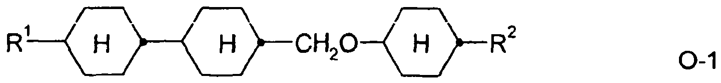 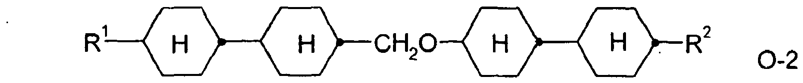 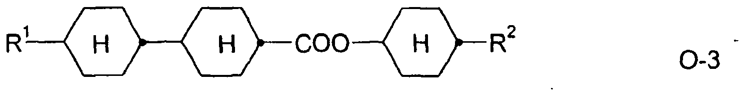 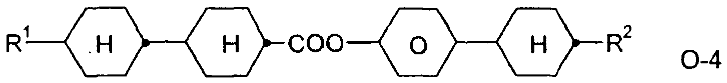 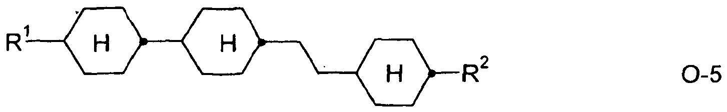 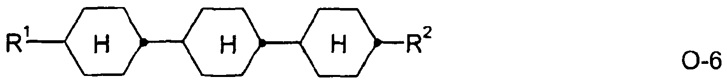 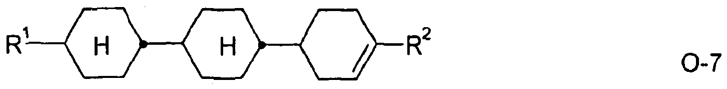 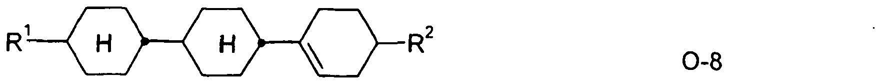 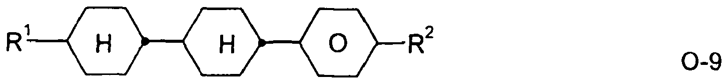 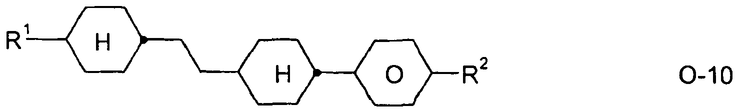 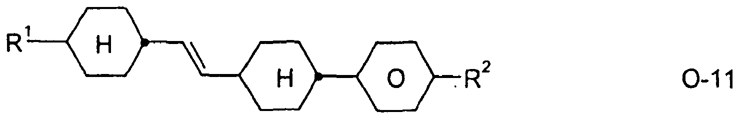 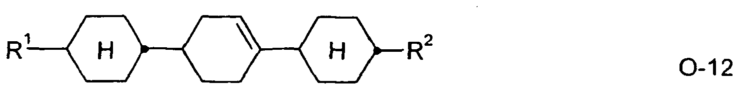 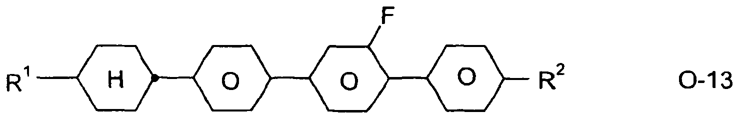 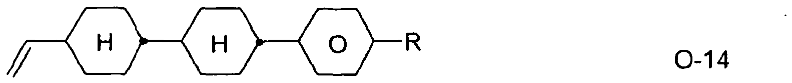 worin
R¹ und R² jeweils unabhängig voneinander die für R^{2A} in Anspruch 1 angegebenen Bedeutungen haben,
enthält.

8. Flüssigkristallines Medium nach einem oder mehreren der Ansprüche 1 bis 7, **dadurch gekennzeichnet, dass** das Medium zusätzlich eine oder mehrere Indan-Verbindungen der Formel In 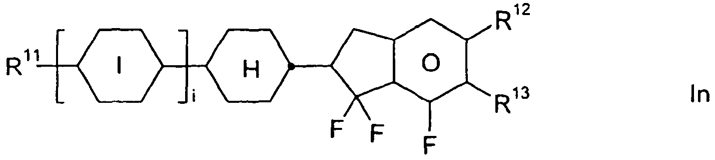 worin
R¹¹, R¹², R¹³ ein geradkettiger Alkyl-, oder Alkoxy-, Alkoxyalkyl-, Alkenylrest und 1-5 C-Atomen,
R¹² und R¹³ zusätzlich Halogen, 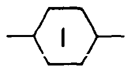 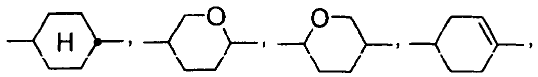 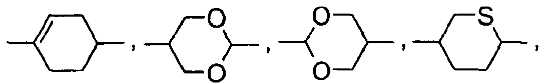 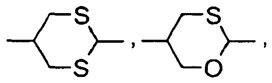
i 0, 1 oder 2
bedeuten,
enthält.

9. Flüssigkristallines Medium nach einem oder mehreren der Ansprüche 1 bis 8, **dadurch gekennzeichnet, dass** der Anteil an Verbindungen der Formeln IA, IB und/oder IC im Gesamtgemisch ≥ 5 Gew.% beträgt.

10. Verfahren zur Verstellung eines flüssigkristallinen Mediums nach einem oder mehreren der Ansprüche 1 bis 9, **dadurch gekennzeichnet, dass** man mindestens eine Verbindung der Formeln IA, IB und IC mit mindestens einer weiteren flüssigkristallinen Verbindung mischt und gegebenenfalls Additive zusetzt.

11. Verwendung des flüssigkristallinen Mediums nach einem oder mehreren der Ansprüche 1 bis 9 in elektrooptischen Anzeigen.

12. Elektrooptische Anzeige mit einer Aktivmatrix-Addressierung, **dadurch gekennzeichnet, dass** sie als Dielektrikum ein flüssigkristallines Medium nach einem oder mehreren der Ansprüche 1 bis 9 enthält.

13. Elektrooptische Anzeige nach Anspruch 12, **dadurch gekennzeichnet, dass** es sich um eine ECB-, PALC-, FFS- oder dem IPS- Anzeige handelt.

## Claims

1. Liquid-crystalline medium having negative dielectric anisotropy, **characterised in that** it comprises at least one compound selected from the group of the compounds of the formulae IA, IB and IC, 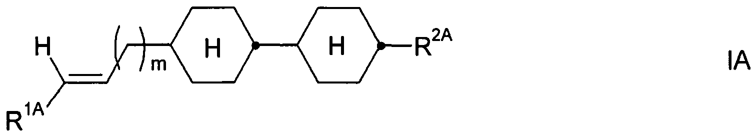 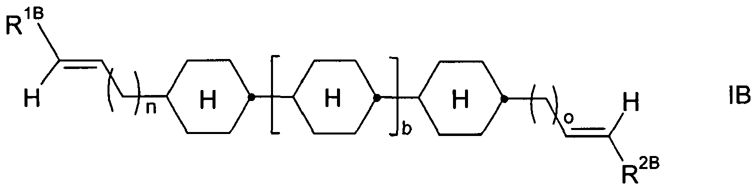 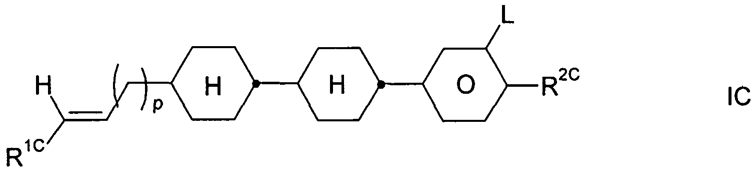 in which
R^{1A}, R^{1B}, R^{2B} and R^{1C} each, independently of one another, denote an alkyl radical having 2-6 C atoms,
R^{2A} and R^{2C} each, independently of one another, denote an alkyl radical having up to 6 C atoms which is unsubstituted, monosubstituted by CN or CF₃ or at least monosubstituted by halogen, where, in addition, one or more CH₂ groups in these radicals may be replaced by -O-, -S-, 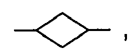 -C≡C-, -CF₂O-, -OCF₂-, -OC-O- or -O-CO- in such a way that O atoms are not linked directly to one another, and, if L = F, R^{2C} may also denote halogen, preferably F or Cl,
L denotes H or F,
m, n, o and p each, independently of one another, denote 0, 1 or 2,
b denotes 0 or 1,
and one or more compounds of the formulae IIA and/or IIB, 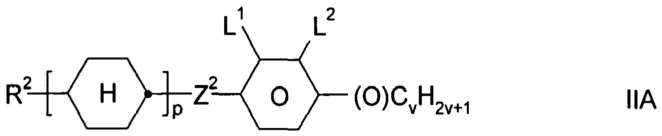 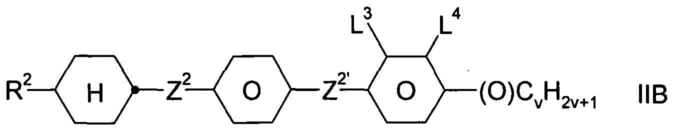 in which
R² denotes H, an alkyl or alkenyl radical having up to 15 C atoms which is unsubstituted, monosubstituted by CN or CF₃ or at least monosubstituted by halogen, where, in addition, one or more CH₂ groups in these radicals may each be replaced, independently of one another, by -O-, -S-, 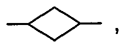 -C≡C-, -CO-, -CO-O-, -O-CO- or -O-CO-O- in such a way that O atoms are not linked directly to one another,
L¹⁻⁴ each, independently of one another, denote F or Cl,
Z² and Z^{2'} each, independently of one another, denote a single bond, -CH₂CH₂-, -CH=CH-, -CF₂O- -OCF₂-, -CH₂O-, -OCH₂-, -COO-, -OCO-, -C₂F₄-, -CF=CF-, -CH=CHCH₂O-,
p denotes 1 or 2, and
v denotes 1 to 6.

2. Liquid-crystalline medium according to Claim 1, **characterised in that** it additionally comprises one or more compounds of the formula 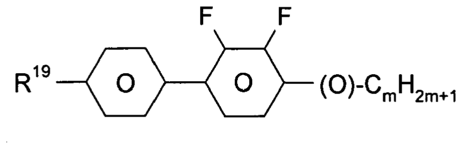 in which
R¹⁹ denotes alkyl or alkoxy having 1-7 C atoms.

3. Liquid-crystalline medium according to Claim 1 or 2, **characterised in that** it additionally comprises one or more compounds of the formula III, 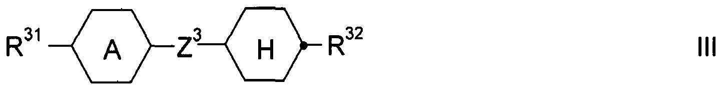 in which
R³¹ and R³² each, independently of one another, denote a straight-chain alkyl, alkoxyalkyl or alkoxy radical having up to 12 C atoms, and 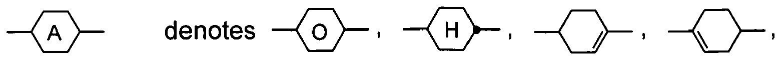 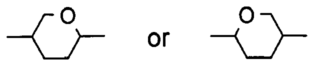
Z³ denotes a single bond, -CH₂CH₂-, -CH=CH-, -CF₂O-, -OCF₂-, -CH₂O-, -OCH₂-, -COO-, -OCO-, -C₂F₄-, -C₄H₉-, -CF=CF-.

4. Liquid-crystalline medium according to one or more of Claims 1 to 3, **characterised in that** the medium comprises at least one compound of the formulae IA-1 to IC-3, 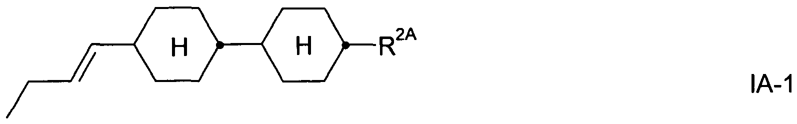 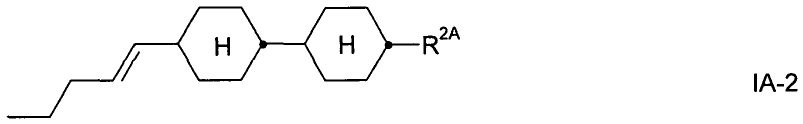 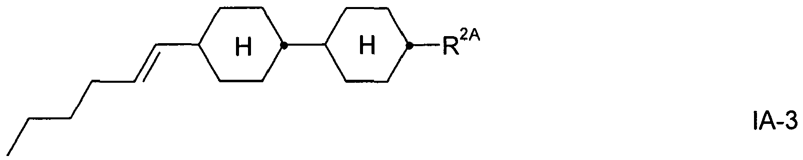 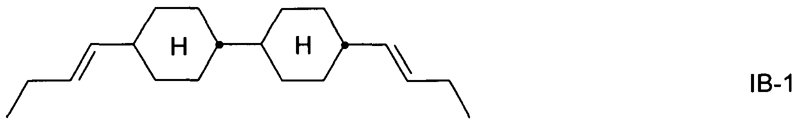 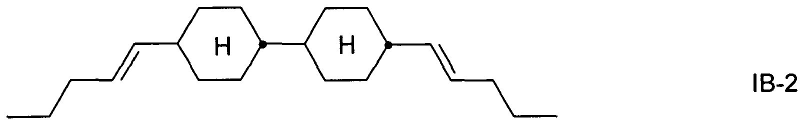 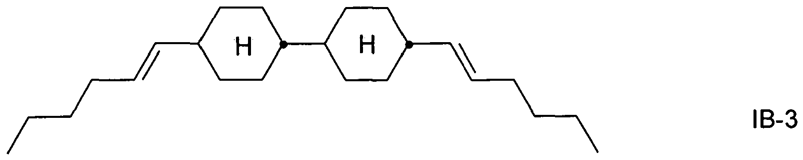 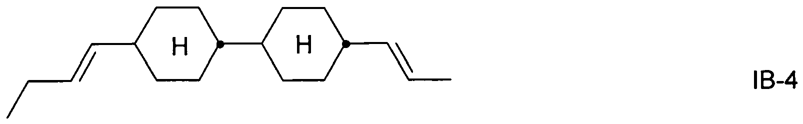 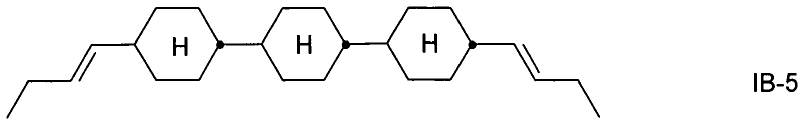 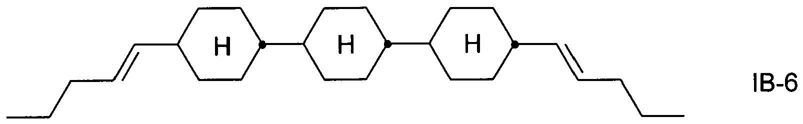 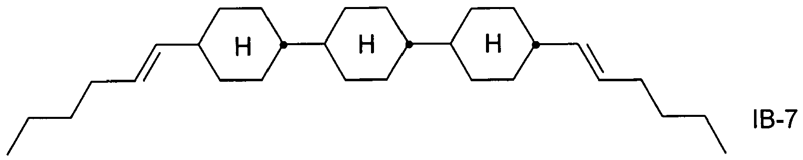 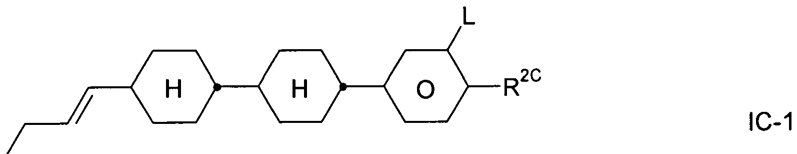 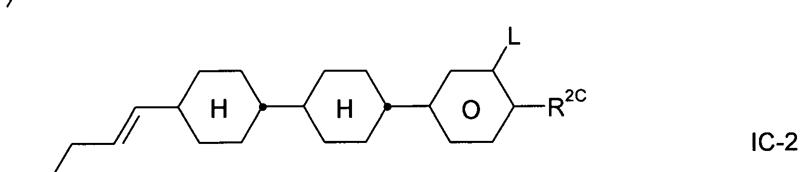 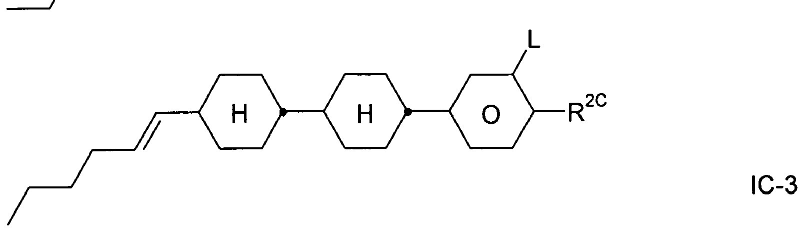 in which R^{2A}, R^{2C} and L have the meanings indicated in Claim 1.

5. Liquid-crystalline medium according to one or more of Claims 1 to 4, **characterised in that** the medium additionally comprises one or more compounds of the formulae 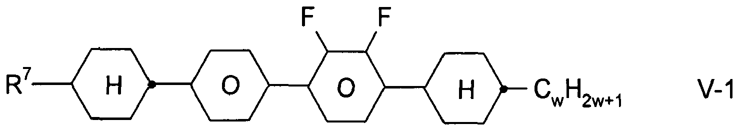 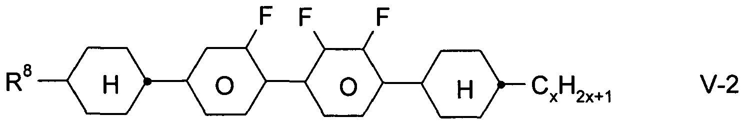 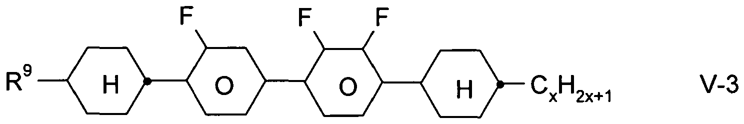 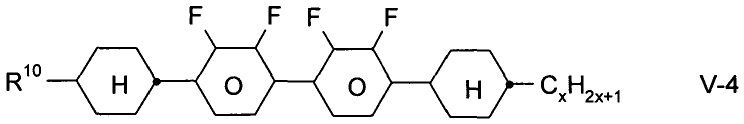 in which
R⁷⁻¹⁰ each, independently of one another, have one of the meanings indicated for R² in Claim 2, and
w and x each, independently of one another, denote 1 to 6.

6. Liquid-crystalline medium according to one or more of Claims 1 to 5, **characterised in that** the medium additionally comprises one or more terphenyls of the formulae T-1 to T-21 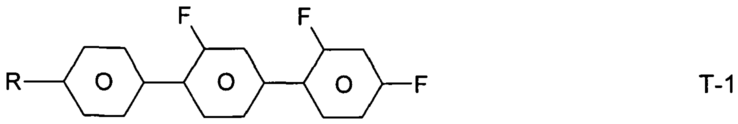 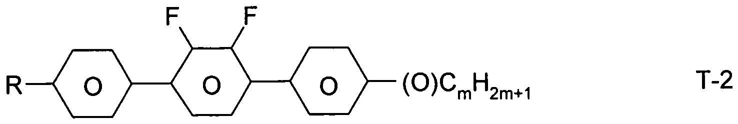 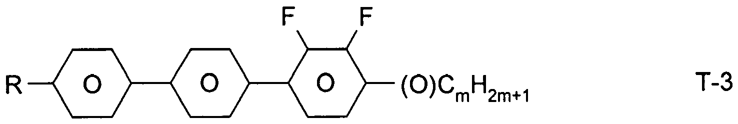 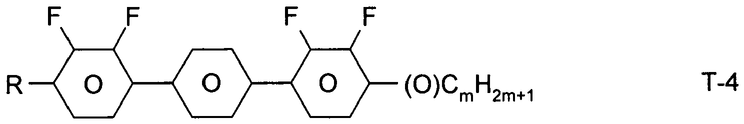 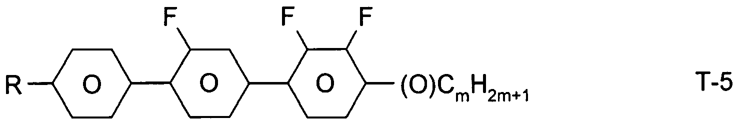 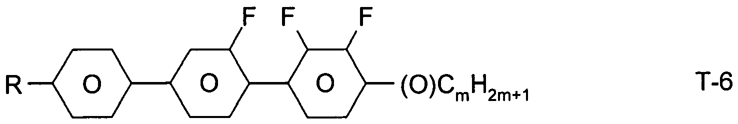 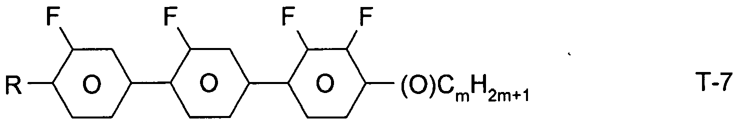 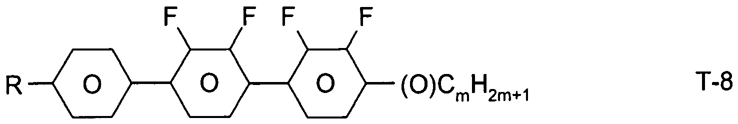 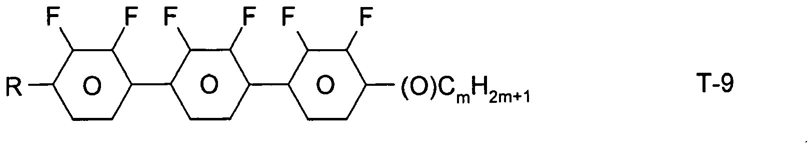 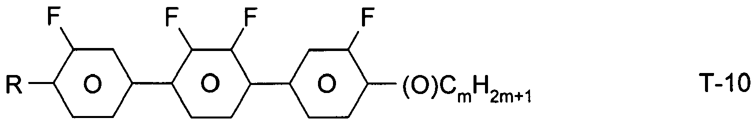 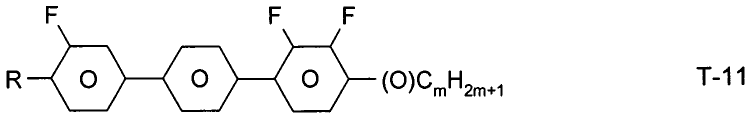 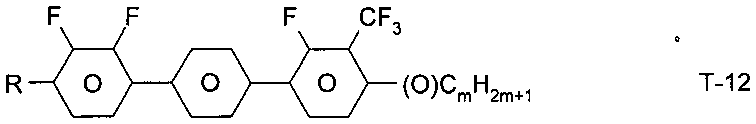 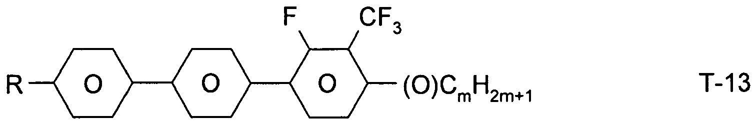 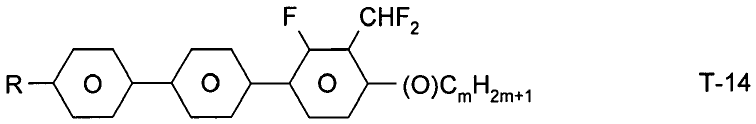 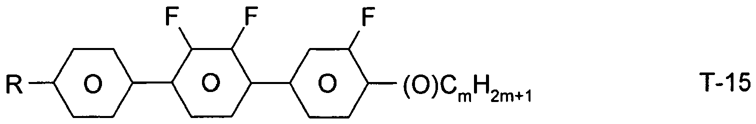 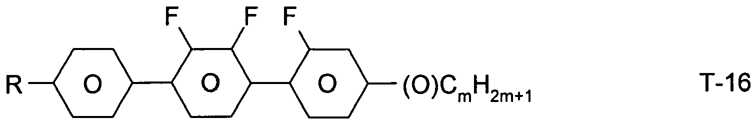 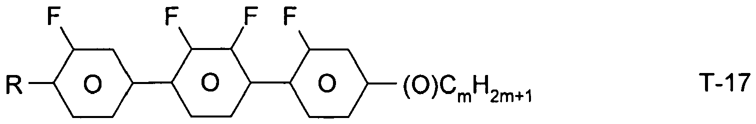 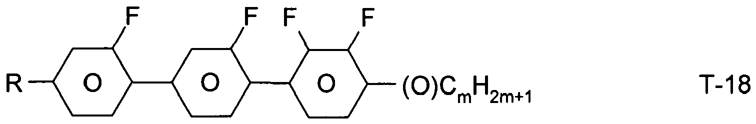 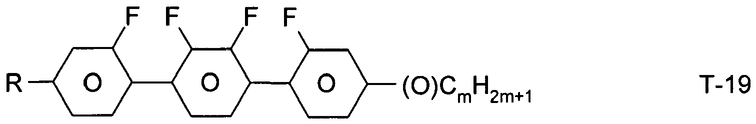 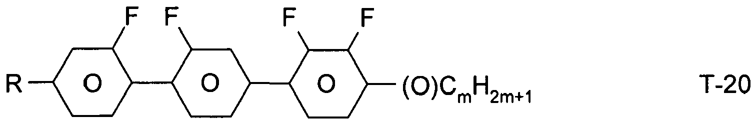 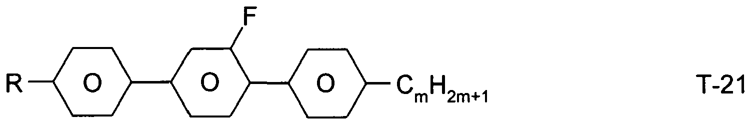 in which
R denotes a straight-chain alkyl or alkoxy radical having 1-7 C atoms, and m denotes 1-6.

7. Liquid-crystalline medium according to one or more of Claims 1 to 6, **characterised in that** the medium additionally comprises one or more compounds of the formulae O-1 to O-14 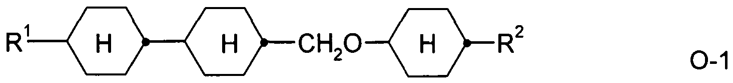 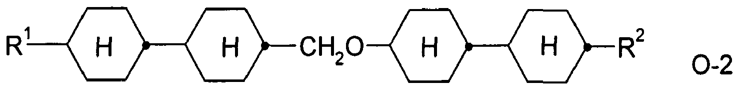 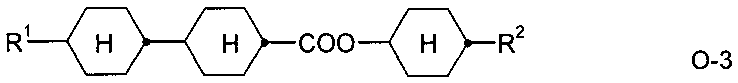 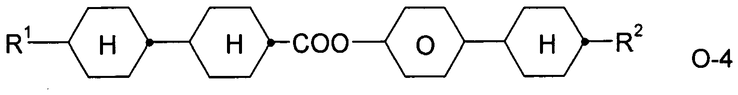 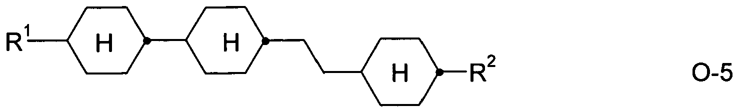 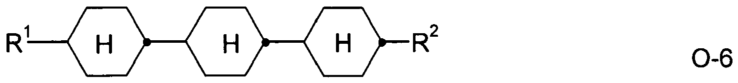 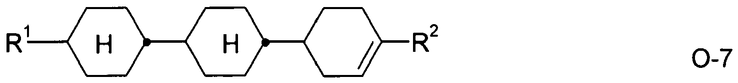 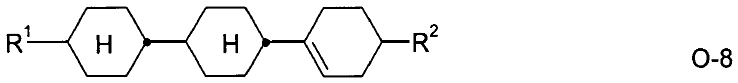 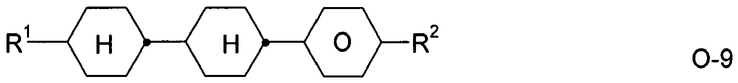 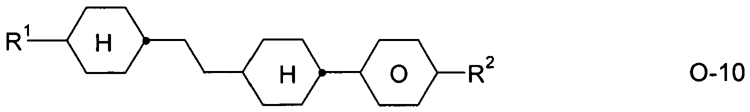 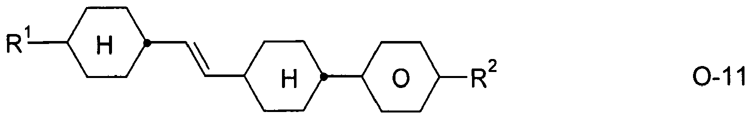 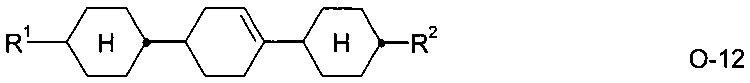 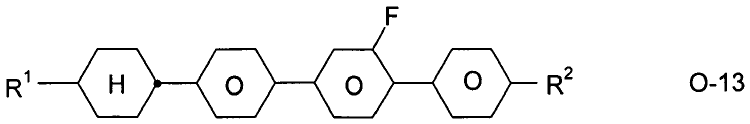 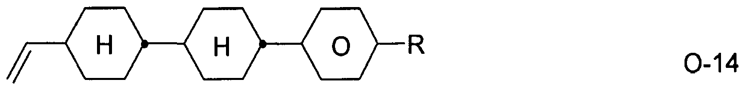 in which
R¹ and R² each, independently of one another, have the meanings indicated for R^{2A} in Claim 1.

8. Liquid-crystalline medium according to one or more of Claims 1 to 7, **characterised in that** the medium additionally comprises one or more indane compounds of the formula In 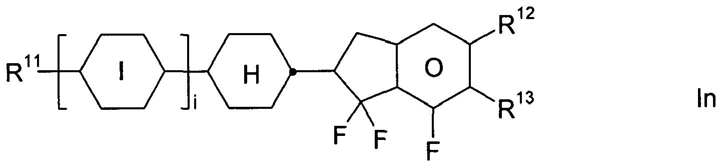 in which
R¹¹, R¹², R¹³ denote a straight-chain alkyl, alkoxy, alkoxyalkyl or alkenyl radical having 1-5 C atoms,
R¹² and R¹³ additionally denote halogen, 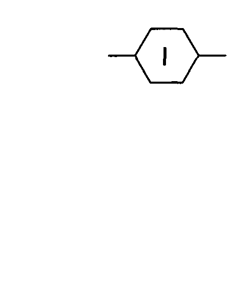 denotes 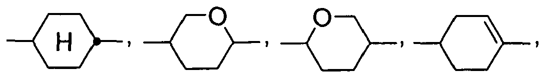 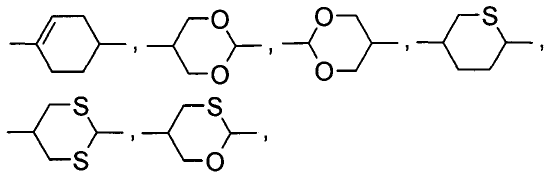
i denotes 0, 1 or 2.

9. Liquid-crystalline medium according to one or more of Claims 1 to 8, **characterised in that** the proportion of compounds of the formulae IA, IB and/or IC in the mixture as a whole is ≥ 5% by weight.

10. Process for the preparation of a liquid-crystalline medium according to one or more of Claims 1 to 9, **characterised in that** at least one compound of the formulae IA, IB and IC is mixed with at least one further liquid-crystalline compound, and additives are optionally added.

11. Use of the liquid-crystalline medium according to one or more of Claims 1 to 9 in electro-optical displays.

12. Electro-optical display having active-matrix addressing, **characterised in that** it contains, as dielectric, a liquid-crystalline medium according to one or more of Claims 1 to 9.

13. Electro-optical display according to Claim 12, **characterised in that** it is an ECB, PALC, FFS or IPS display.

## Revendications

1. Milieu cristallin liquide présentant une anisotropie diélectrique négative, **caractérisé en ce qu'**il comprend au moins un composé choisi parmi le groupe des composés des formules IA, IB et IC, 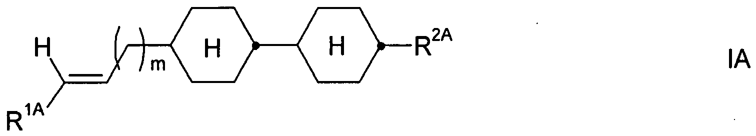 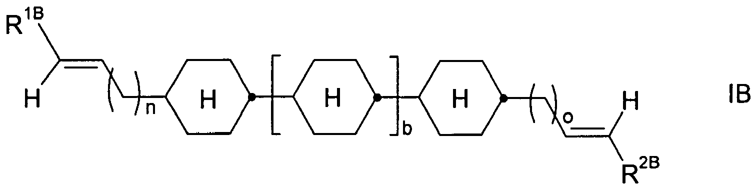 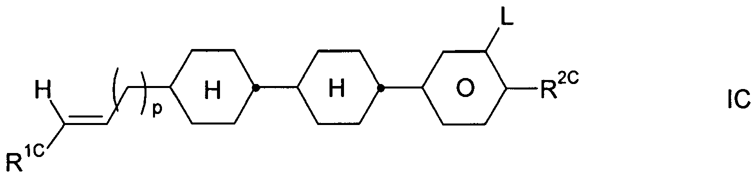 dans lesquelles
R^{1A}, R^{1B}, R^{2B} et R^{1C} représentent, chacun indépendamment des autres, un radical alkyle comportant de 2 à 6 atomes de C,
R^{2A} et R^{2C} représentent, chacun indépendamment de l'autre, un radical alkyle comportant jusqu'à 6 atomes de C, lequel est non substitué, monosubstitué par CN ou CF₃ ou au moins monosubstitué par halogène, où, en outre, un ou plusieurs groupes CH₂ dans ces radicaux peut/peuvent être remplacé(s) par -O-, -S-, 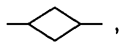 -C≡C-, -CF₂O-, -OCF₂-, -OC-O- ou -O-CO- de telle sorte que des atomes de O ne soient pas liés directement les uns aux autres, et, si L = F, R^{2C} peut également représenter un halogène, de préférence F ou Cl,
L représente H ou F,
m, n, o et p représentent, chacun indépendamment des autres, 0, 1 ou 2,
b représente 0 ou 1,
et un ou plusieurs composés des formules IIA et/ou IIB, 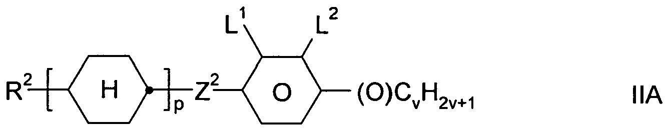 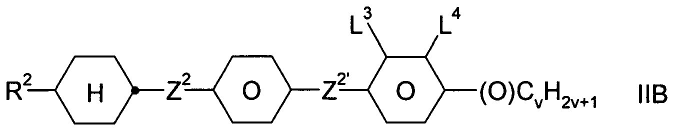 dans lesquelles
R² représente H, un radical alkyle ou alkényle comportant jusqu'à 15 atomes de C, lequel est non substitué, monosubstitué par CN ou CF₃ ou au moins monosubstitué par un halogène, où, en outre, un ou plusieurs groupes CH₂ dans ces radicaux peuvent chacun être remplacés, indépendamment les uns des autres, par -O-, -S-, 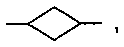 -C≡C-, -CO-, -CO-O-, -O-CO- ou -O-CO-Ode telle sorte que des atomes de O ne soient pas liés directement les uns aux autres,
L¹⁻⁴ représentent, chacun indépendamment des autres, F ou Cl,
Z² et Z^{2'} représentent, chacun indépendamment de l'autre, une liaison simple, -CH₂CH₂-, -CH=CH-, -CF₂O-, -OCF₂-, -CH₂O- -OCH₂-, -COO-, -OCO-, -C₂F₄-, -CF=CF-, -CH=CHCH₂O-,
p représente 1 ou 2, et
v représente 1 à 6.

2. Milieu cristallin liquide selon la revendication 1, **caractérisé en ce qu'**ilcomprend additionnellement un ou plusieurs composés de la formule 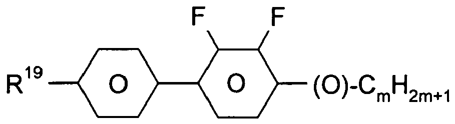 dans laquelle
R¹⁹ représente alkyle ou alcoxy comportant de 1 à 7 atomes de C.

3. Milieu cristallin liquide selon la revendication 1 ou 2, **caractérisé en ce qu'**il comprend additionnellement un ou plusieurs composés de la formule III, 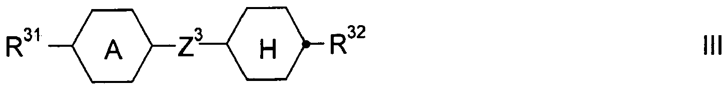 dans laquelle
R³¹ et R³² représentent, chacun indépendamment de l'autre, un radical alkyle, alcoxyalkyle ou alcoxy en chaîne droite comportant jusqu'à 12 atomes de C, et 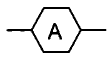 représente 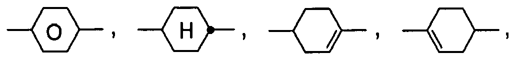 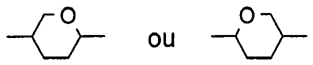
Z³ représente une liaison simple, -CH₂CH₂-, -CH=CH-, -CF₂O-, -OCF₂-, -CH₂O-, -OCH₂-, -COO-, -OCO-, -C₂F₄-, -C₄H₉-, -CF=CF-.

4. Milieu cristallin liquide selon une ou plusieurs des revendications 1 à 3, **caractérisé en ce que** le milieu comprend au moins un composé des formules IA-1 à IC-3, 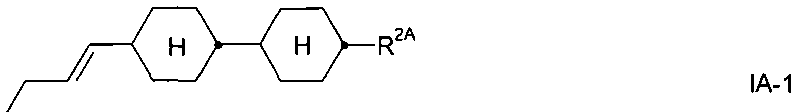 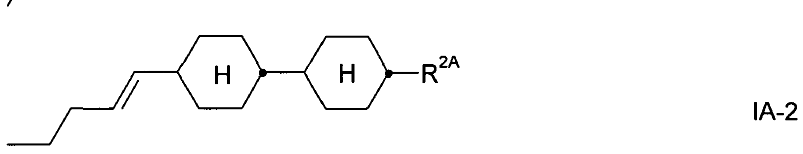 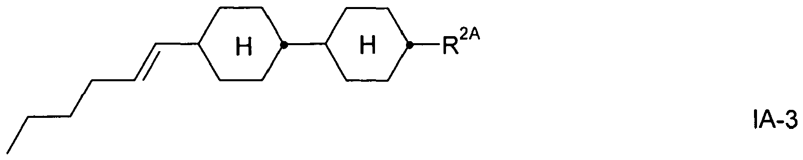 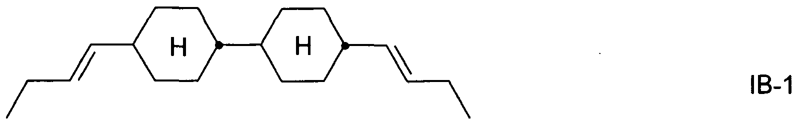 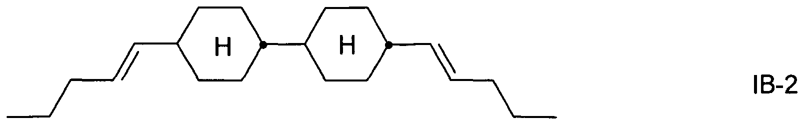 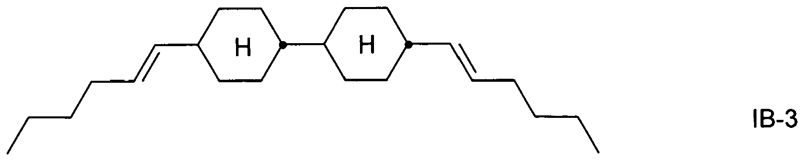 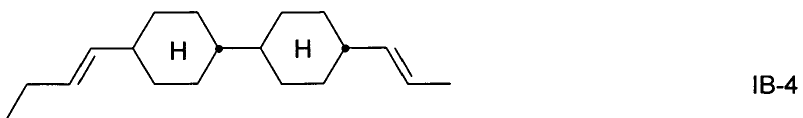 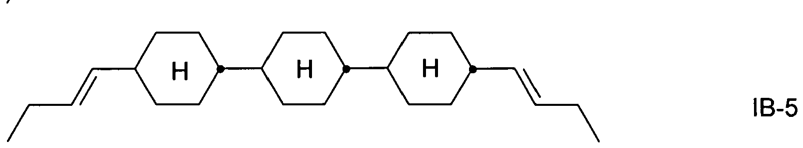 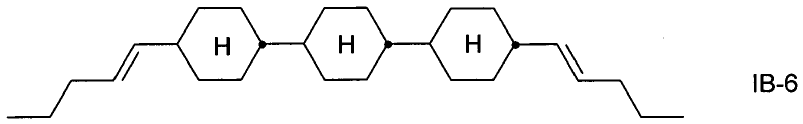 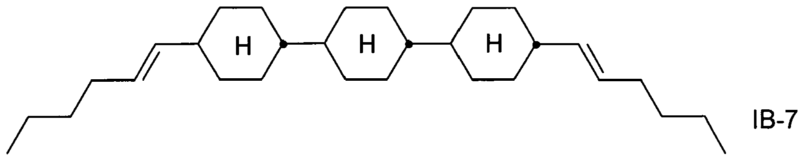 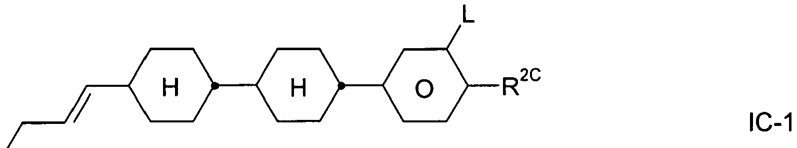 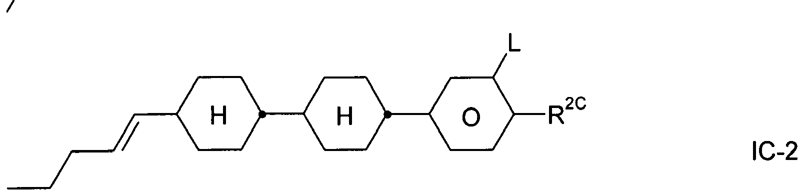 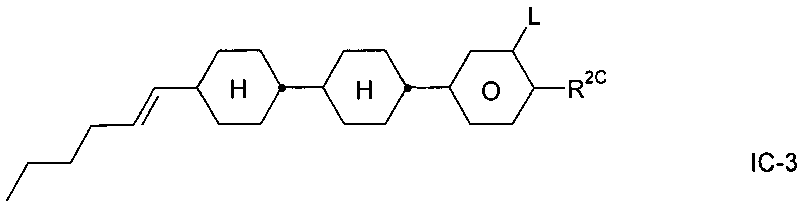 dans lesquelles R^{2A}, R^{2C} et L présentent les significations indiquées selon la revendication 1.

5. Milieu cristallin liquide selon une ou plusieurs des revendications 1 à 4, **caractérisé en ce que** le milieu comprend additionnellement un ou plusieurs composés des formules 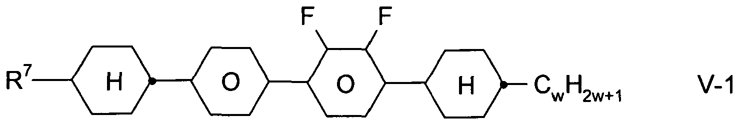 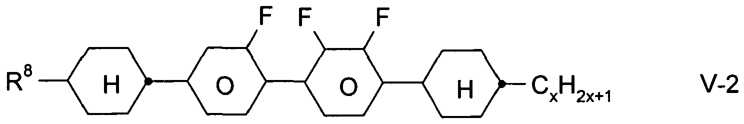 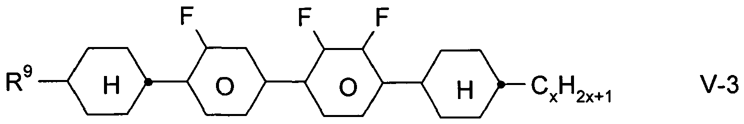 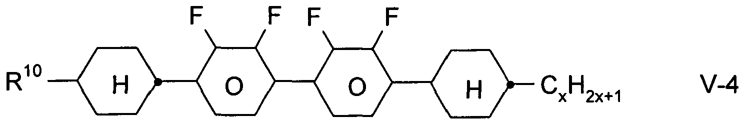 dans lesquelles
R⁷⁻¹⁰ présentent, chacun indépendamment des autres, l'une des significations indiquées pour R² selon la revendication 2, et
w et x représentent, chacun indépendamment de l'autre, 1 à 6.

6. Milieu cristallin liquide selon une ou plusieurs des revendications 1 à 5, **caractérisé en ce que** le milieu comprend additionnellement un ou plusieurs terphényls des formules T-1 à T-21 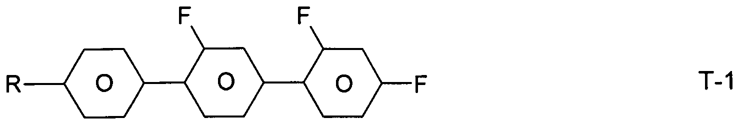 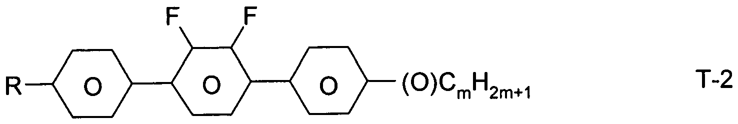 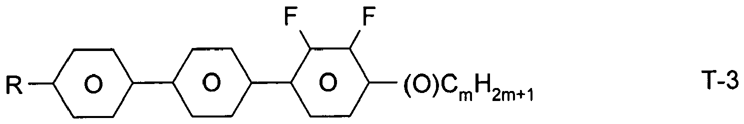 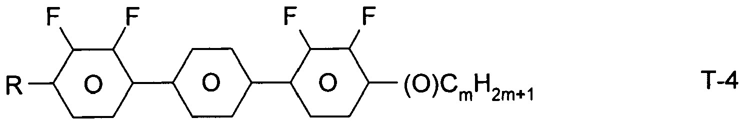 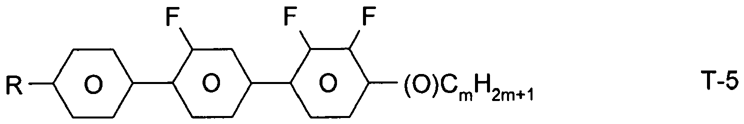 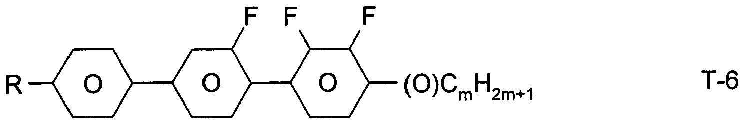 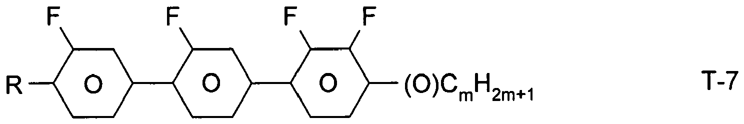 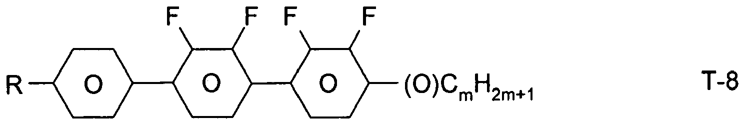 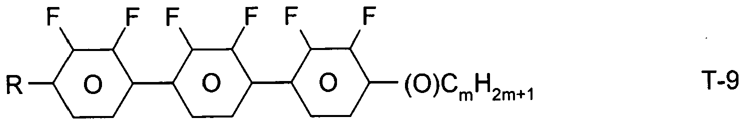 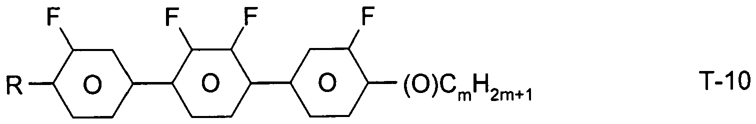 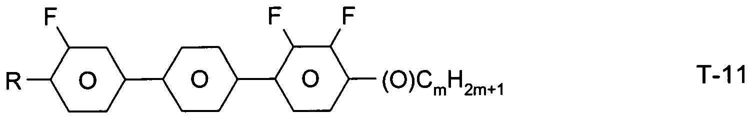 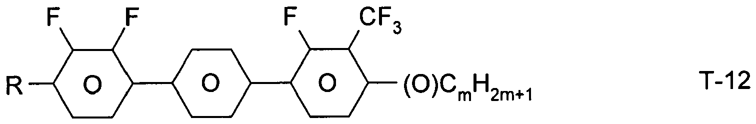 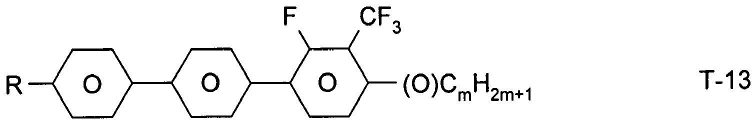 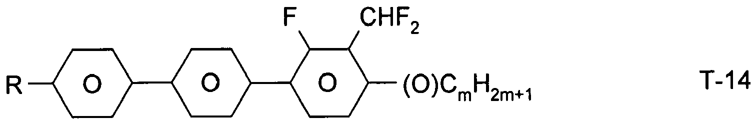 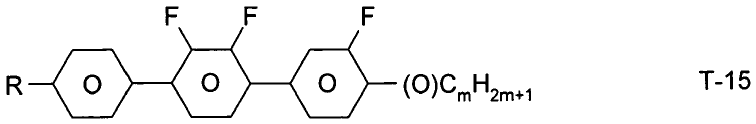 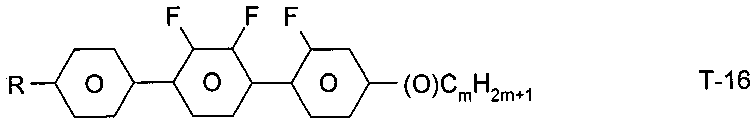 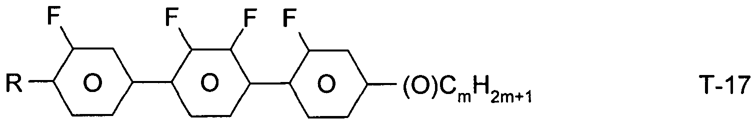 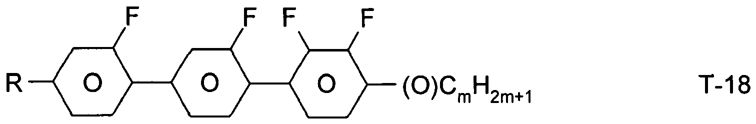 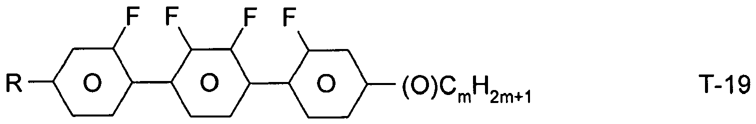 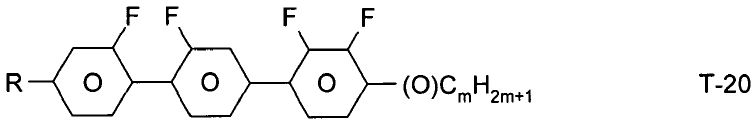 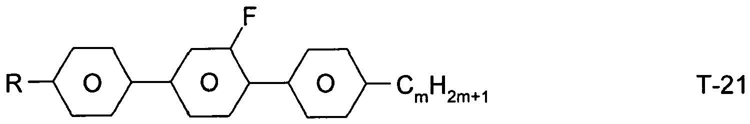 dans lesquelles
R représente un radical alkyle ou alcoxy en chaîne droite comportant de 1 à 7 atomes de C, et m représente 1 à 6.

7. Milieu cristallin liquide selon une ou plusieurs des revendications 1 à 6, **caractérisé en ce que** le milieu comprend additionnellement un ou plusieurs composés des formules O-1 à O-14 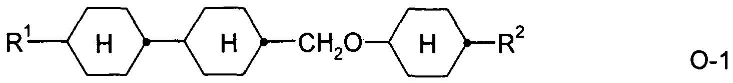 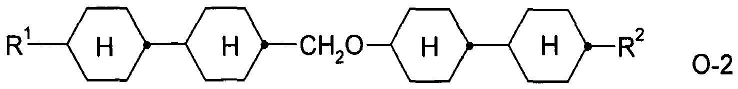 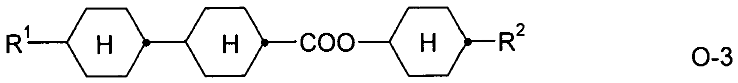 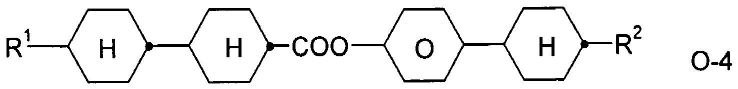 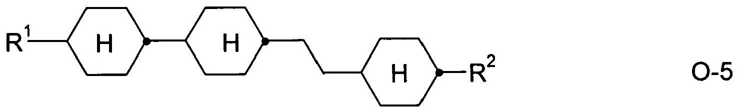 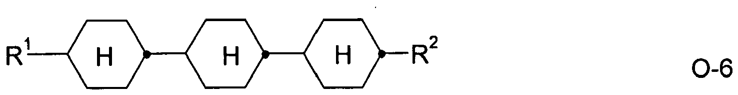 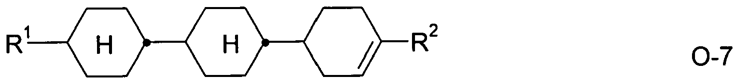 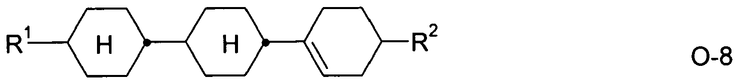 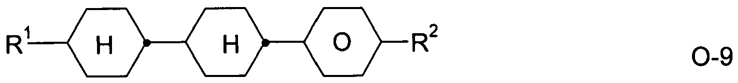 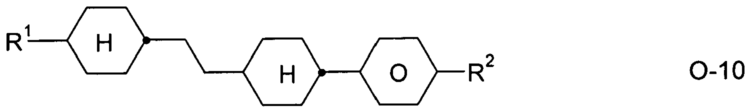 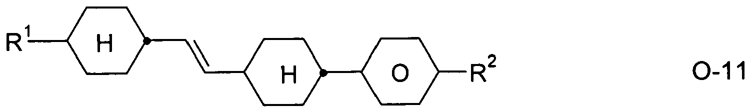 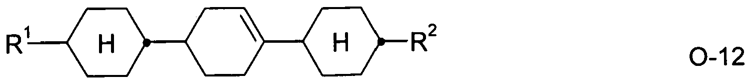 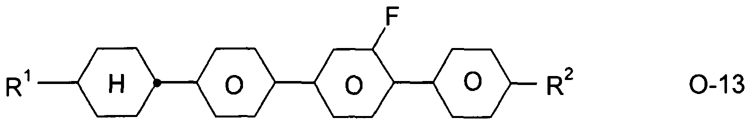 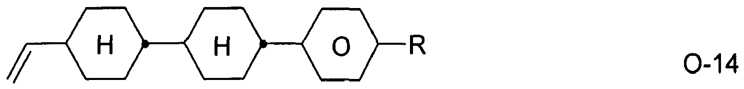 dans lesquelles
R¹ et R² présentent, chacun indépendamment l'un de l'autre, les significations indiquées pour R²⁴ selon la revendication 1.

8. Milieu cristallin liquide selon une ou plusieurs des revendications 1 à 7, **caractérisé en ce que** le milieu comprend additionnellement un ou plusieurs composés indane de la formule In 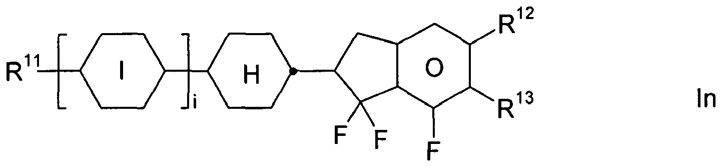 dans laquelle
R¹¹, R¹², R¹³ représentent un radical alkyle, alcoxy, alcoxyalkyle ou alkényle en chaîne droite comportant de 1 à 5 atomes de C,
R¹² et R¹³ représentent additionnellement un halogène, 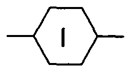 représente 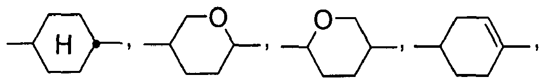 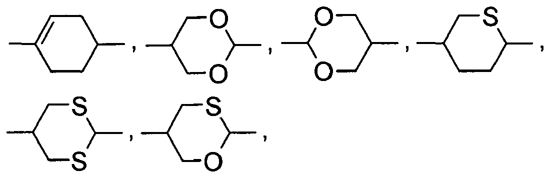
i représente 0, 1 ou 2.

9. Milieu cristallin liquide selon une ou plusieurs des revendications 1 à 8, **caractérisé en ce que** la proportion de composés des formules IA, IB et/ou IC dans le mélange pris dans sa globalité est ≥ 5% en poids.

10. Procédé pour la préparation d'un milieu cristallin liquide selon une ou plusieurs des revendications 1 à 9, **caractérisé en ce qu'**au moins un composé des formules IA, IB et IC est mélangé avec au moins un autre composé cristallin liquide, et des additifs sont en option ajoutés.

11. Utilisation du milieu cristallin liquide selon une ou plusieurs des revendications 1 à 9 dans des affichages électro-optiques.

12. Affichage électro-optique présentant un adressage par matrice active, **caractérisé en ce qu'**il contient, en tant que diélectrique, un milieu cristallin liquide selon une ou plusieurs des revendications 1 à 9.

13. Affichage électro-optique selon la revendication 12, **caractérisé en ce qu'**il s'agit d'un affichage ECB, PALC, FFS ou IPS.
